# EUROPEAN PATENT APPLICATION

(11) **EP 4 664 974 A1**
(43) Date of publication of application: **17.12.2025**
(21) Application number: 24769782.4
(22) Date of filing: 04.03.2024
(51) Int. Cl.: H04W 24/08, H04W 4/50

(54) **SENSING COMMUNICATION METHOD AND APPARATUS**

(30) Priority: 10.03.2023 CN 202310269697
(71) Applicant: Huawei Technologies Co., Ltd., Shenzhen, Guangdong 518129 (CN)
(72) Inventor: WANG, Jing, Chengdu, Sichuan 611756 (CN); FANG, Xuming, Chengdu, Sichuan 611756 (CN); HE, Rong, Chengdu, Sichuan 611756 (CN); DU, Rui, Shenzhen, Guangdong 518129 (CN); HAN, Xiao, Shenzhen, Guangdong 518129 (CN)
(74) Representative: MERH-IP Matias Erny Reichl Hoffmann Patentanwälte PartG mbB
(86) International application number: PCT/CN2024/079935
(87) International publication number: WO 2024/188088

(57) **Abstract**

A sensing communication method and apparatus may be applied to a sensing (sensing) system supporting the IEEE.802.11bf protocol; or applied to a wireless local area network system supporting 802.11 series protocols such as a next-generation Wi-Fi protocol of IEEE 802.11ax like 802.11be, Wi-Fi 7, or EHT, and a next generation of 802.11be like Wi-Fi 8, UHR, and Wi-Fi AI; or applied to a wireless personal area network system that is based on ultra-wideband UWB. The method includes: a first communication apparatus generates sensing suspend indication information and then sends the sensing suspend indication information; and correspondingly, a second communication apparatus receives the sensing suspend indication information and suspends execution of a sensing measurement instance based on the sensing suspend indication information. The method effectively improves accuracy of a sensing measurement result.

## Description

This application claims priority to Chinese Patent Application No. 202310269697.1, filed with the China National Intellectual Property Administration on March 10, 2023 and entitled "SENSING COMMUNICATION METHOD AND APPARATUS", which is incorporated herein by reference in its entirety.

### TECHNICAL FIELD

This application relates to the field of communication technologies, and in particular, to a sensing communication method and apparatus.

### BACKGROUND

In a sensing scenario, Wi-Fi devices may exchange sensing capabilities to perform a sensing measurement setup (sensing measurement setup). In the sensing measurement setup process, the Wi-Fi devices may negotiate parameters for a sensing measurement instance (sensing measurement instance) of a measurement setup identifier (measurement setup ID). Then an initiator initiates a sensing measurement instance process to perform a sensing measurement.

For example, after performing a sensing measurement setup, a Wi-Fi device may measure a specific number of sensing measurement instances within a sensing availability window (sensing availability window), and then obtain sensing measurement results.

However, when performing sensing, the Wi-Fi device may be affected by interference (for example, co-channel interference, adjacent-channel interference, or blocking interference) from another device in space, resulting in a relatively large error in a sensing measurement result.

### SUMMARY

This application provides a sensing communication method and apparatus, to avoid a relatively large error in a sensing measurement result.

According to a first aspect, an embodiment of this application provides a sensing communication method. The method includes the following steps:

A first communication apparatus generates sensing suspend indication information, where the sensing suspend indication information indicates a second communication apparatus to suspend execution of a sensing measurement instance between the first communication apparatus and the second communication apparatus; and the first communication apparatus sends the sensing suspend indication information.

In this embodiment of this application, if the first communication apparatus needs to suspend execution of the sensing measurement instance when interference exists, the first communication apparatus may indicate, by using the sensing suspend indication information, the second communication apparatus to suspend execution of the sensing measurement instance. Therefore, inaccuracy of a sensing measurement result caused by interference (such as co-channel interference, adjacent-channel interference, or blocking interference) is avoided, and a sensing measurement is performed when no interference exists or interference strength is less than a strength threshold, thereby improving accuracy of the sensing measurement result.

If the first communication apparatus sends a sensing measurement setup termination (sensing measurement setup termination) frame to terminate a sensing measurement setup when interference exists, sensing parameters reestablished after the interference ends may be the same as those before the interference, and consequently, waste of signaling overheads is caused. In other words, the sensing measurement setup termination frame causes the two communication parties to terminate the sensing measurement setup. Compared with the foregoing method for terminating the sensing measurement setup by using the sensing measurement setup termination frame, the method provided in this embodiment of this application not only retains sensing parameters that are set in a sensing measurement setup phase, and avoids waste of signaling overheads caused by performing the sensing measurement setup again, but also avoids impact of interference on the sensing measurement result by suspending execution of the sensing measurement instance, thereby improving accuracy of the sensing measurement result.

It may be understood that the foregoing description shows an example in which the first communication apparatus sends the sensing suspend indication information because the first communication apparatus detects interference. Alternatively, the first communication apparatus may send the sensing suspend indication information due to other reasons such as limited air interface resources. The reason for sending the sensing suspend indication information by the first communication apparatus is not limited in this embodiment of this application.

In a possible implementation, when at least one of the first communication apparatus and the second communication apparatus is a single-link device, the sensing suspend indication information may indicate the second communication apparatus to suspend execution of all sensing measurement instances on a link between the first communication apparatus and the second communication apparatus.

In this embodiment of this application, the sensing suspend indication information may occupy one bit, and when a value of the bit is a first value, the second communication apparatus may be indicated to suspend execution of all the sensing measurement instances. Therefore, the first communication apparatus may indicate, by using minimum signaling overheads, the second communication apparatus to suspend execution of the sensing measurement instance, to avoid inaccuracy of the sensing measurement result caused by interference or the like.

In a possible implementation, when the first communication apparatus and the second communication apparatus are multi-link devices, the sensing suspend indication information indicates the second communication apparatus to suspend execution of a sensing measurement instance on at least one link between the first communication apparatus and the second communication apparatus.

In this embodiment of this application, when the first communication apparatus and the second communication apparatus are multi-link devices, multiple links are established between the first communication apparatus and the second communication apparatus. Therefore, the first communication apparatus may indicate, by using the sensing suspend indication information, the second communication apparatus to suspend execution of sensing measurement instances on one or more links. Therefore, by using one piece of sensing suspend indication information, the first communication apparatus indicates to suspend execution of the sensing measurement instances on the one or more links. This not only improves efficiency of suspending execution of the sensing measurement instances, but also avoids inaccuracy of sensing measurement results on the one or more links due to interference or the like, thereby improving accuracy of the sensing measurement results.

It may be understood that when both the first communication apparatus and the second communication apparatus are multi-link devices, although multiple links are established between the two multi-link devices, there may be one or more links used for sensing (referred to as sensing links) among the multiple links. When there is one sensing link between the first communication apparatus and the second communication apparatus, the sensing suspend indication information may indicate the second communication apparatus to suspend execution of all sensing measurement instances on the sensing link. When there are multiple sensing links between the first communication apparatus and the second communication apparatus (for example, interference exists on all the multiple sensing links), the sensing suspend indication information may indicate the second communication apparatus to suspend execution of sensing measurement instances on the multiple sensing links.

In a possible implementation, the sensing suspend indication information includes a link identifier of each of the at least one link.

In this embodiment of this application, the sensing suspend indication information includes the link identifier of each link, so that the second communication apparatus can effectively identify links on which sensing measurement instances need to be suspended.

In a possible implementation, that the first communication apparatus sends the sensing suspend indication information includes: the first communication apparatus sends the sensing suspend indication information on one of the at least one link.

In this embodiment of this application, the first communication apparatus may send the sensing suspend indication information on one of the at least one link indicated by the sensing suspend indication information.

In a possible implementation, the method further includes: the first communication apparatus sends sensing resume indication information, where the sensing resume indication information indicates the second communication apparatus to resume execution of the sensing measurement instance between the first communication apparatus and the second communication apparatus.

In this embodiment of this application, after the interference ends (for example, after no interference exists or after the interference strength is less than the strength threshold), the first communication apparatus may indicate, by sending the sensing resume indication information, the second communication apparatus to resume execution of the sensing measurement instance. In this embodiment of this application, the second communication apparatus may continue to use the sensing parameters established in the sensing measurement setup phase before the interference. Compared with the method for terminating the sensing measurement instance by sending the sensing measurement setup termination frame, this effectively reduces signaling overheads. The first communication apparatus indicates, by using the sensing resume indication information, the second communication apparatus to resume execution of the sensing measurement instance, thereby improving flexibility of resuming execution of the sensing measurement instance.

In a possible implementation, when the first communication apparatus and the second communication apparatus are multi-link devices, the sensing resume indication information indicates the second communication apparatus to resume execution of the sensing measurement instance on the at least one link between the first communication apparatus and the second communication apparatus.

In this embodiment of this application, the at least one link indicated by the sensing resume indication information may be the same as the at least one link indicated by the sensing suspend indication information, or the at least one link indicated by the sensing resume indication information is a part of the at least one link indicated by the sensing suspend indication information.

In a possible implementation, the sensing resume indication information includes the link identifier of each of the at least one link.

In a possible implementation, the sensing resume indication information includes at least one piece of the following information: extension time information, where the extension time information indicates an extension time for the second communication apparatus to execute the sensing measurement instance; and report indication information, where the report indication information indicates whether to report sensing measurement results of X sensing measurement instances before the suspension, where X is a positive integer.

In this embodiment of this application, the sensing resume indication information includes the extension time information, so that the second communication apparatus can effectively learn the extension duration for the second communication apparatus to execute the sensing measurement instance, and that the second communication apparatus can compensate for the sensing measurement instance not executed due to the suspension, thereby improving integrity of the sensing measurement.

In this embodiment of this application, the sensing resume indication information includes the report indication information, so that when the second communication apparatus is a party that reports the sensing measurement result, the second communication apparatus may clearly learn whether the second communication apparatus reports the sensing measurement results of the X sensing measurement instances before the suspension. For example, the sensing resume indication information indicates that the second communication apparatus does not need to report the sensing measurement results of the X sensing measurement instances before the suspension, possibly because the sensing measurement results of the X instances before the suspension are inaccurate, and the second communication apparatus does not report the sensing measurement results of the X instances before the suspension to avoid signaling waste.

In a possible implementation, the sensing resume indication information further includes a value of X.

In this embodiment of this application, X = 1, X = 2, X = 3, or the like. Examples are not exhaustively listed.

In a possible implementation, when the first communication apparatus and the second communication apparatus are multi-link devices, the extension time information includes the link identifier of each of the at least one link and an extension time corresponding to each link, or the report indication information includes the link identifier of each of the at least one link and a value of X corresponding to each link.

In this embodiment of this application, the extension time corresponding to each link may be the same or different, and the value of X corresponding to each link may be the same or different.

In a possible implementation, the sensing suspend indication information includes at least one piece of the following information: suspension time information, where the suspension time information indicates a suspension time of the sensing measurement instance; report indication information, where the report indication information indicates whether to report sensing measurement results of Y sensing measurement instances before the suspension, where Y is a positive integer; and extension time information, where the extension time information indicates an extension time for the second communication apparatus to execute the sensing measurement instance.

In this embodiment of this application, the first communication apparatus indicates, by using the sensing suspend indication information, duration for which the second communication apparatus suspends execution of the sensing measurement instance. Therefore, after the specific duration, the second communication apparatus can automatically resume execution of the sensing measurement instance based on the sensing suspend indication information, thereby reducing a frame exchange procedure between the two communication parties.

In a possible implementation, the sensing suspend indication information further includes a value of Y.

In this embodiment of this application, Y = 1, Y = 2, Y = 3, or the like. Examples are not exhaustively listed.

In a possible implementation, when the first communication apparatus and the second communication apparatus are multi-link devices, the suspension time information includes the link identifier of each of the at least one link and a suspension time corresponding to each link, or the report indication information includes the link identifier of each of the at least one link and a value of Y corresponding to each link, or the extension time information includes the link identifier of each of the at least one link and an extension time corresponding to each link.

In this embodiment of this application, the suspension time corresponding to each link may be the same or different, the value of Y corresponding to each link may be the same or different; and the extension time corresponding to each link may be the same or different. For example, the extension time may be the same as the suspension time, or the extension time may be longer than the suspension time. A relationship between the extension time and the suspension time is not limited in this embodiment of this application.

In a possible implementation, before generating the sensing suspend indication information, the method further includes: the first communication apparatus negotiates parameters of the sensing measurement instance with the second communication apparatus, to complete the sensing measurement setup.

In a possible implementation, the sensing suspend indication information is carried in any one of the following: a sensing measurement setup request frame (sensing measurement setup request frame), a sensing poll trigger frame (sensing poll trigger frame), a sensing null data packet (null data packet, NDP) announcement frame (sensing NDP announcement frame), a sensing responder to sensing initiator (sensing responder to sensing initiator, SR2SI) sounding trigger frame (SR2SI sounding trigger frame), and a sensing report trigger frame (sensing report trigger frame).

In a possible implementation, the sensing resume indication information is carried in any one of the following: a sensing poll trigger frame, a sensing NDPA frame, and a sensing responder to sensing initiator sounding trigger frame.

According to a second aspect, an embodiment of this application provides a sensing communication method. The method includes the following steps:

A second communication apparatus receives sensing suspend indication information, where the sensing suspend indication information indicates the second communication apparatus to suspend execution of a sensing measurement instance between a first communication apparatus and the second communication apparatus; and the second communication apparatus suspends execution of the sensing measurement instance based on the sensing suspend indication information.

In this embodiment of this application, the second communication apparatus suspends execution of the sensing measurement instance based on the sensing suspend indication information, thereby effectively avoiding inaccuracy of a sensing measurement result and signaling waste caused by interference, and improving accuracy of the sensing measurement result.

In a possible implementation, when at least one of the first communication apparatus and the second communication apparatus is a single-link device, the sensing suspend indication information may indicate the second communication apparatus to suspend execution of all sensing measurement instances on a link between the first communication apparatus and the second communication apparatus.

In a possible implementation, when the first communication apparatus and the second communication apparatus are multi-link devices, the sensing suspend indication information indicates the second communication apparatus to suspend execution of a sensing measurement instance on at least one link between the first communication apparatus and the second communication apparatus.

In a possible implementation, the sensing suspend indication information includes a link identifier of each of the at least one link.

In a possible implementation, the method further includes: the second communication apparatus receives sensing resume indication information, where the sensing resume indication information indicates the second communication apparatus to resume execution of the sensing measurement instance between the first communication apparatus and the second communication apparatus; and the second communication apparatus resumes execution of the sensing measurement instance based on the sensing resume indication information.

In a possible implementation, when the first communication apparatus and the second communication apparatus are multi-link devices, the sensing resume indication information indicates the second communication apparatus to resume execution of the sensing measurement instance on the at least one link between the first communication apparatus and the second communication apparatus.

In a possible implementation, the sensing resume indication information includes the link identifier of each of the at least one link.

In a possible implementation, the sensing resume indication information includes at least one piece of the following information: extension time information, where the extension time information indicates an extension time for the second communication apparatus to execute the sensing measurement instance; and report indication information, where the report indication information indicates whether to report sensing measurement results of X sensing measurement instances before the suspension, where X is a positive integer.

In a possible implementation, the sensing resume indication information further includes a value of X.

In a possible implementation, when the first communication apparatus and the second communication apparatus are multi-link devices, the extension time information includes the link identifier of each of the at least one link and an extension time corresponding to each link, or the report indication information includes the link identifier of each of the at least one link and a value of X corresponding to each link.

In a possible implementation, the sensing suspend indication information includes at least one piece of the following information: suspension time information, where the suspension time information indicates a suspension time of the sensing measurement instance; report indication information, where the report indication information indicates whether to report sensing measurement results of Y sensing measurement instances before the suspension, where Y is a positive integer; and extension time information, where the extension time information indicates an extension time for the second communication apparatus to execute the sensing measurement instance.

In a possible implementation, the sensing suspend indication information further includes a value of Y.

In a possible implementation, when the first communication apparatus and the second communication apparatus are multi-link devices, the suspension time information includes the link identifier of each of the at least one link and a suspension time corresponding to each link, or the report indication information includes the link identifier of each of the at least one link and a value of Y corresponding to each link, or the extension time information includes the link identifier of each of the at least one link and an extension time corresponding to each link.

In a possible implementation, the sensing suspend indication information is carried in any one of the following: a sensing measurement setup request frame, a sensing poll trigger frame, a sensing null data packet announcement frame, a sensing responder to sensing initiator sounding trigger frame, and a sensing report trigger frame.

In a possible implementation, the sensing resume indication information is carried in any one of the following: a sensing poll trigger frame, a sensing NDPA frame, and a sensing responder to sensing initiator sounding trigger frame.

In a possible implementation, the method further includes: the first communication apparatus negotiates parameters of the sensing measurement instance with the second communication apparatus, to complete the sensing measurement setup.

For related descriptions of the second aspect, refer to the first aspect.

According to a third aspect, an embodiment of this application provides a sensing communication method. The method includes the following steps:
A first communication apparatus sends sensing supplement indication information, where the sensing supplement indication information includes M1 measurement setup identifiers IDs between the first communication apparatus and a second communication apparatus, and the sensing supplement indication information indicates the second communication apparatus to supplement measurement of a sensing measurement instance corresponding to each of the M1 measurement setup IDs, where M1 is a positive integer; and the first communication apparatus receives response information for the sensing supplement indication information.

In this embodiment of this application, if the first communication apparatus finds that measurement results of some sensing measurement instances are affected by interference in a sensing measurement process, the first communication apparatus may send the sensing supplement indication information for performing a supplementary sensing measurement, to compensate for a loss of the sensing measurement result caused by the interference with the sensing measurement instance, thereby effectively improving accuracy of the sensing measurement result and improving integrity of the sensing measurement result.

According to a fourth aspect, an embodiment of this application provides a sensing communication method. The method includes the following steps:
A second communication apparatus receives sensing supplement indication information, where the sensing supplement indication information includes M1 measurement setup identifiers IDs between a first communication apparatus and the second communication apparatus, and the sensing supplement indication information indicates the second communication apparatus to supplement measurement of a sensing measurement instance corresponding to each of the M1 measurement setup IDs, where M1 is a positive integer; and
the second communication apparatus sends response information for the sensing supplement indication information.

With reference to the third aspect or the fourth aspect, in a possible implementation, the sensing supplement indication information further includes the number M2 of sensing measurement instances corresponding to each of the M1 measurement setup IDs, where M2 is a positive integer.

With reference to the third aspect or the fourth aspect, in a possible implementation, the response information includes N1 measurement setup IDs of the M1 measurement setup IDs, where N1 is a positive integer less than or equal to M1.

With reference to the third aspect or the fourth aspect, in a possible implementation, the response information further includes the number N2 of sensing measurement instances corresponding to each of the N1 measurement setup IDs, where N2 is a positive integer less than or equal to N1.

With reference to the third aspect or the fourth aspect, in a possible implementation, the response information includes any one of the following: confirmation information, where the confirmation information is used to confirm the sensing supplement indication information; rejection information, where the rejection information is used to reject the sensing supplement indication information; and modification indication information, where the modification indication information indicates that at least one of the number of measurement setup IDs or the number of sensing measurement instances corresponding to a measurement setup ID in the sensing supplement indication information is to be modified.

With reference to the third aspect or the fourth aspect, in a possible implementation, the sensing supplement indication information is carried in any one of the following: a sensing measurement setup request frame, a sensing poll trigger frame, a sensing null data packet announcement frame, a sensing responder to sensing initiator sounding trigger frame, and a sensing report trigger frame.

According to a fifth aspect, an embodiment of this application provides a sensing communication method. The method includes the following steps:
A first multi-link device sends sensing switch indication information, where the sensing switch indication information indicates to switch a sensing measurement instance on a first link between the first multi-link device and a second multi-link device to a link in a link set, and the link set is a set of links between the first multi-link device and the second multi-link device; and the first multi-link device receives response information for the sensing switch indication information.

In this embodiment of this application, the first multi-link device sends the sensing switch indication information, so that the second multi-link device can switch, based on the sensing switch indication information, the sensing measurement instance to a link without interference or to a link with interference strength less than a strength threshold. In this way, not only link resources between the multi-link devices are properly used, but also accuracy of a sensing measurement result is improved by switching the sensing measurement instance to the link without interference or to the link with the interference strength less than the strength threshold.

According to a sixth aspect, an embodiment of this application provides a sensing communication method. The method includes the following steps:
A second multi-link device receives sensing switch indication information, where the sensing switch indication information indicates to switch a sensing measurement instance on a first link between a first multi-link device and the second multi-link device to a link in a link set, and the link set is a set of links between the first multi-link device and the second multi-link device; and the second multi-link device sends response information for the sensing switch indication information.

With reference to the fifth aspect or the sixth aspect, in a possible implementation, the link set includes a second link, the sensing switch indication information includes a link identifier of the second link, and the switch indication information indicates to switch the sensing measurement instance on the first link to the second link.

With reference to the fifth aspect or the sixth aspect, in a possible implementation, the response information includes report indication information, and the report indication information indicates whether to report a sensing measurement result of the sensing measurement instance on the first link.

With reference to the fifth aspect or the sixth aspect, in a possible implementation, the response information includes any one of the following: confirmation information, where the confirmation information is used to confirm the sensing switch indication information; rejection information, where the rejection information is used to reject the sensing switch indication information; and link indication information, where the link indication information indicates that the sensing measurement instance is to be switched to a third link, and the third link is a link in the link set.

With reference to the fifth aspect or the sixth aspect, in a possible implementation, the response information includes a link identifier of the third link.

With reference to the fifth aspect or the sixth aspect, in a possible implementation, the sensing switch indication information is carried in any one of the following: a sensing measurement setup request frame, a sensing poll trigger frame, a sensing null data packet announcement frame, a sensing responder to sensing initiator sounding trigger frame, and a sensing report trigger frame.

According to a seventh aspect, an embodiment of this application provides a communication apparatus, configured to perform the method in any one of the first aspect or the possible implementations of the first aspect. The communication apparatus includes a unit for performing the method in any one of the first aspect or the possible implementations of the first aspect.

According to an eighth aspect, an embodiment of this application provides a communication apparatus, configured to perform the method in any one of the second aspect or the possible implementations of the second aspect. The communication apparatus includes a unit for performing the method in any one of the second aspect or the possible implementations of the second aspect.

According to a ninth aspect, an embodiment of this application provides a communication apparatus, configured to perform the method in any one of the third aspect or the possible implementations of the third aspect. The communication apparatus includes a unit for performing the method in any one of the third aspect or the possible implementations of the third aspect.

According to a tenth aspect, an embodiment of this application provides a communication apparatus, configured to perform the method in any one of the fourth aspect or the possible implementations of the fourth aspect. The communication apparatus includes a unit for performing the method in any one of the fourth aspect or the possible implementations of the fourth aspect.

According to an eleventh aspect, an embodiment of this application provides a communication apparatus, configured to perform the method in any one of the fifth aspect or the possible implementations of the fifth aspect. The communication apparatus includes a unit for performing the method in any one of the fifth aspect or the possible implementations of the fifth aspect.

According to a twelfth aspect, an embodiment of this application provides a communication apparatus, configured to perform the method in any one of the sixth aspect or the possible implementations of the sixth aspect. The communication apparatus includes a unit for performing the method in any one of the sixth aspect or the possible implementations of the sixth aspect.

In the seventh aspect to the twelfth aspect, the communication apparatus may include a transceiver unit and a processing unit. For detailed descriptions of the transceiver unit and the processing unit, refer to apparatus embodiments provided below.

According to a thirteenth aspect, an embodiment of this application provides a communication apparatus. The communication apparatus includes a processor, configured to perform the method shown in any one of the first aspect to the sixth aspect or the possible implementations of the first aspect to the sixth aspect. Alternatively, the processor is configured to execute a program stored in a memory, and when the program is executed, the method shown in any one of the first aspect to the sixth aspect or the possible implementations of the first aspect to the sixth aspect is performed.

In a possible implementation, the memory is located outside the communication apparatus.

In a possible implementation, the memory is located in the communication apparatus.

In this embodiment of this application, the processor and the memory may alternatively be integrated into one device. In other words, the processor and the memory may alternatively be integrated together. For example, the communication apparatus may be a Wi-Fi chip.

In a possible implementation, the communication apparatus further includes a transceiver. The transceiver is configured to receive a signal or send a signal. For example, the communication apparatus may be an AP, a STA, or a multi-link device.

According to a fourteenth aspect, an embodiment of this application provides a communication apparatus. The communication apparatus includes a logic circuit and an interface. The logic circuit is coupled to the interface. The logic circuit is configured to generate sensing suspend indication information. The interface is configured to output the sensing suspend indication information.

In a possible implementation, the interface is further configured to output sensing resume indication information.

In a possible implementation, the logic circuit is further configured to negotiate parameters of a sensing measurement instance with a second communication apparatus by using the interface, to complete a sensing measurement setup.

It may be understood that for related descriptions of the communication apparatus shown in the fourteenth aspect, refer to the first aspect.

According to a fifteenth aspect, an embodiment of this application provides a communication apparatus. The communication apparatus includes a logic circuit and an interface. The logic circuit is coupled to the interface. The interface is configured to input sensing suspend indication information. The logic circuit is configured to suspend execution of a sensing measurement instance based on the sensing suspend indication information.

In a possible implementation, the interface is further configured to input sensing resume indication information; and the logic circuit is further configured to resume execution of the sensing measurement instance based on the sensing resume indication information.

In a possible implementation, the logic circuit is further configured to negotiate, by using the interface, parameters of the sensing measurement instance with a first communication apparatus, to complete a sensing measurement setup.

It may be understood that for the communication apparatus shown in the fifteenth aspect, refer to the second aspect.

According to a sixteenth aspect, an embodiment of this application provides a communication apparatus. The communication apparatus includes a logic circuit and an interface. The logic circuit is coupled to the interface. The interface is configured to output sensing supplement indication information and input response information for the sensing supplement indication information.

In a possible implementation, the logic circuit is configured to generate the sensing supplement indication information.

In a possible implementation, the logic circuit is further configured to parse the response information for the sensing supplement indication information.

According to a seventeenth aspect, an embodiment of this application provides a communication apparatus. The communication apparatus includes a logic circuit and an interface. The logic circuit is coupled to the interface. The interface is configured to input sensing supplement indication information and output response information for the sensing supplement indication information.

In a possible implementation, the logic circuit is configured to parse the sensing supplement indication information.

In a possible implementation, the logic circuit is further configured to generate the response information for the sensing supplement indication information.

It may be understood that for the communication apparatuses shown in the sixteenth aspect and the seventeenth aspect, refer to the third aspect and the fourth aspect.

According to an eighteenth aspect, an embodiment of this application provides a communication apparatus. The communication apparatus includes a logic circuit and an interface. The logic circuit is coupled to the interface. The interface is configured to output sensing switch indication information and input response information for the sensing switch indication information.

In a possible implementation, the logic circuit is configured to generate the sensing switch indication information.

In a possible implementation, the logic circuit is further configured to parse the response information for the sensing switch indication information.

According to a nineteenth aspect, an embodiment of this application provides a communication apparatus. The communication apparatus includes a logic circuit and an interface. The logic circuit is coupled to the interface. The interface is configured to input sensing switch indication information and output response information for the sensing switch indication information.

In a possible implementation, the logic circuit is configured to parse the sensing switch indication information.

In a possible implementation, the logic circuit is further configured to generate the response information for the sensing switch indication information.

It may be understood that for the communication apparatuses shown in the eighteenth aspect and the nineteenth aspect, refer to the fifth aspect and the sixth aspect.

According to a twentieth aspect, an embodiment of this application provides a computer-readable storage medium. The computer-readable storage medium is configured to store a computer program. When the computer program is run on a computer, the method shown in any one of the first aspect to the sixth aspect or the possible implementations of the first aspect to the sixth aspect is performed.

According to a twenty-first aspect, an embodiment of this application provides a computer program product. The computer program product includes a computer program. When the computer program is run on a computer, the method shown in any one of the first aspect to the sixth aspect or the possible implementations of the first aspect to the sixth aspect is performed.

According to a twenty-second aspect, an embodiment of this application provides a computer program. When the computer program is run on a computer, the method shown in any one of the first aspect to the sixth aspect or the possible implementations of the first aspect to the sixth aspect is performed.

According to a twenty-third aspect, an embodiment of this application provides a communication system. The communication system includes a first communication apparatus and a second communication apparatus. The first communication apparatus is configured to perform the method shown in any one of the first aspect or the possible implementations of the first aspect, and the second communication apparatus is configured to perform the method shown in any one of the second aspect or the possible implementations of the second aspect; or the first communication apparatus is configured to perform the method shown in any one of the third aspect or the possible implementations of the third aspect, and the second communication apparatus is configured to perform the method shown in any one of the fourth aspect or the possible implementations of the fourth aspect; or the first communication apparatus is configured to perform the method shown in any one of the fifth aspect or the possible implementations of the fifth aspect, and the second communication apparatus is configured to perform the method shown in any one of the sixth aspect or the possible implementations of the sixth aspect.

### BRIEF DESCRIPTION OF DRAWINGS

FIG. 1a is a diagram of an architecture of a communication system according to an embodiment of this application;
FIG. 1b is a diagram of an architecture of a communication system according to an embodiment of this application;
FIG. 2 is a diagram of a connection manner between a multi-link AP and a multi-link STA according to an embodiment of this application;
FIG. 3a is a scenario of communication between an AP MLD and a non-AP MLD according to an embodiment of this application;
FIG. 3b is a scenario of communication between an AP MLD and a non-AP MLD according to an embodiment of this application;
FIG. 4a is a schematic flowchart of sensing according to an embodiment of this application;
FIG. 4b is a schematic flowchart of a trigger-based sensing measurement instance according to an embodiment of this application;
FIG. 4c is a diagram of a sensing availability window according to an embodiment of this application;
FIG. 4d is a schematic flowchart of a non-trigger-based sensing measurement instance according to an embodiment of this application;
FIG. 5 is an example diagram of a scenario of a sensing communication method according to an embodiment of this application;
FIG. 6 is a schematic flowchart of a sensing communication method according to an embodiment of this application;
FIG. 7a is a diagram of a structure of a sensing measurement setup suspend frame according to an embodiment of this application;
FIG. 7b is a diagram of a structure of a sensing measurement setup request frame according to an embodiment of this application;
FIG. 7c is a diagram of a structure of a sensing poll trigger frame according to an embodiment of this application;
FIG. 7d is a diagram of a structure of a sensing NDPA frame according to an embodiment of this application;
FIG. 7e is a diagram of a structure of a sensing responder to sensing initiator sounding trigger frame according to an embodiment of this application;
FIG. 7f is a diagram of a structure of a sensing report trigger frame according to an embodiment of this application;
FIG. 7g is a diagram of a structure of a sensing NDPA frame according to an embodiment of this application;
FIG. 8a is a diagram of a structure of a frame used to carry sensing suspend indication information according to an embodiment of this application;
FIG. 8b is a diagram of a structure of a sensing measurement setup suspend frame according to an embodiment of this application;
FIG. 8c is a diagram of a structure of a sensing measurement setup request frame according to an embodiment of this application;
FIG. 8d is a diagram of a structure of a sensing poll trigger frame according to an embodiment of this application;
FIG. 9a is a diagram of a structure of a frame used to carry sensing resume indication information according to an embodiment of this application;
FIG. 9b is a diagram of a structure of a sensing measurement setup resume frame according to an embodiment of this application;
FIG. 9c is a diagram of a structure of a sensing poll trigger frame according to an embodiment of this application;
FIG. 9d is a diagram of a structure of a trigger dependent common information field according to an embodiment of this application;
FIG. 9e is a diagram of a structure of an SR2SI sounding trigger frame according to an embodiment of this application;
FIG. 9f is a diagram of a structure of a sensing NDPA frame according to an embodiment of this application;
FIG. 10a is a diagram of a structure of a frame used to carry sensing resume indication information according to an embodiment of this application;
FIG. 10b is a diagram of a structure of a sensing measurement setup resume frame according to an embodiment of this application;
FIG. 11a is a diagram of a structure of a frame used to carry sensing suspend indication information according to an embodiment of this application;
FIG. 11b is a diagram of a structure of a sensing measurement setup suspend frame according to an embodiment of this application;
FIG. 11c is a diagram of a structure of a frame used to carry sensing suspend indication information according to an embodiment of this application;
FIG. 12 is a diagram of a scenario for terminating a sensing measurement instance according to an embodiment of this application;
FIG. 13a is a diagram of a scenario of a sensing communication method according to an embodiment of this application;
FIG. 13b is a diagram of a scenario of a sensing communication method according to an embodiment of this application;
FIG. 13c is a diagram of a scenario of a sensing communication method according to an embodiment of this application;
FIG. 13d is a diagram of a scenario of a sensing communication method according to an embodiment of this application;
FIG. 14 is a schematic flowchart of another sensing communication method according to an embodiment of this application;
FIG. 15a is a diagram of a structure of a frame used to carry sensing supplement indication information according to an embodiment of this application;
FIG. 15b is a diagram of a structure of a sensing measurement setup supplement frame according to an embodiment of this application;
FIG. 15c is a diagram of a structure of a frame used to carry sensing supplement indication information according to an embodiment of this application;
FIG. 16a is a diagram of a structure of a frame used to carry response information according to an embodiment of this application;
FIG. 16b is a diagram of a structure of a sensing measurement setup supplement response frame according to an embodiment of this application;
FIG. 17 is a diagram of a scenario of a sensing communication method according to an embodiment of this application;
FIG. 18 is a schematic flowchart of still another sensing communication method according to an embodiment of this application;
FIG. 19a is a diagram of a structure of a frame used to carry sensing switch indication information according to an embodiment of this application;
FIG. 19b is a diagram of a structure of a sensing measurement switch request frame according to an embodiment of this application;
FIG. 19c is a diagram of a structure of a sensing measurement setup switch response frame according to an embodiment of this application;
FIG. 20 is a diagram of a scenario of a sensing communication method according to an embodiment of this application;
FIG. 21 is a diagram of a structure of a communication apparatus according to an embodiment of this application;
FIG. 22 is a diagram of a structure of a communication apparatus according to an embodiment of this application; and
FIG. 23 is a diagram of a structure of a communication apparatus according to an embodiment of this application.

### DESCRIPTION OF EMBODIMENTS

For ease of understanding technical solutions in this application, the following further describes this application with reference to accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but optionally further include steps or units that are not listed, or optionally further include other steps or units inherent to these processes, methods, products, or devices.

The term "embodiment" mentioned in this specification means that a specific feature, structure, or characteristic described with reference to the embodiment may be included in at least one embodiment of this application. The phrase shown in various locations in the specification neither necessarily refers to a same embodiment, nor represents a separate embodiment or an alternative embodiment exclusive from another embodiment. A person skilled in the art may understand that the embodiments described in this specification may be combined with other embodiments.

In this application, "at least one (item)" means one or more; "a plurality of" means two or more; "at least two (items)" means two, three, or more; and "and/or" is used to describe an association relationship between associated objects, and indicates that three relationships may exist. For example, "A and/or B" may indicate the following three cases: Only A exists, only B exists, and both A and B exist, where A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between associated objects. "At least one of the following items (pieces)" or a similar expression thereof means any combination of these items. For example, at least one of a, b, or c may represent: a, b, c, "a and b", "a and c", "b and c", or "a and b and c".

The following describes a communication system in embodiments of this application.

The technical solutions provided in embodiments of this application may be applied to a WLAN system, for example, Wi-Fi. For example, the methods provided in embodiments of this application may be applied to IEEE 802.11 series protocols such as the 802.11a/b/g protocol (for example, the 802.11bf protocol), the 802.11n protocol, the 802.11ac protocol, the 802.11ax protocol, the 802.11be protocol, or a next-generation protocol. Examples are not exhaustively listed. The technical solutions provided in embodiments of this application may be further applied to a wireless personal area network (wireless personal area network, WPAN) based on an ultra wideband (ultra wideband, UWB) technology. For example, the methods provided in embodiments of this application may be applied to IEEE 802.15 series protocols, for example, the 802.15.4a protocol, the 802.15.4z protocol, the 802.15.4ab protocol, or a future generation UWB WPAN protocol. Examples are not exhaustively listed. The technical solutions provided in embodiments of this application may be further applied to the following communication systems, for example, an Internet of Things (Internet of Things, IoT) system, a vehicle to everything (vehicle to X, V2X) system, and a Narrowband Internet of Things (Narrowband Internet of Things, NB-IoT) system, may be applied to a device in the Internet of Vehicles, an Internet of Things node, a sensor, and the like in the Internet of Things (Internet of Things, IoT), a smart camera, a smart remote control, and a smart water/electricity meter in a smart home, a sensor in a smart city, and the like, or may be further applied to a long term evolution (long term evolution, LTE) system, a 5th generation (5th generation, 5G) communication system, a new communication system emerging in future communication development, and the like.

The WLAN system can provide high-rate and low-latency transmission. With continuous evolution of WLAN application scenarios, the WLAN system is to be applied to more scenarios or industries, for example, the Internet of Things industry, the Internet of Vehicles industry, the banking industry, enterprise offices, stadiums and exhibition halls, concert halls, hotel rooms, dormitories, hospital wards, classrooms, shopping malls and supermarkets, squares, streets, production workshops, and warehouses. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a speaker, a refrigerator, or a washing machine) in a smart home, a node in the Internet of Things, an entertainment terminal (for example, a wearable device such as augmented reality (augmented reality, AR) or virtual reality (virtual reality, VR)), a smart device (for example, a printer, a projector, a loudspeaker, or a speaker) in a smart office, an Internet of Vehicles device in the Internet of Vehicles, an infrastructure (for example, a vending machine, a self-service navigation console in a shopping mall or supermarket, a self-service cashier, or a self-service ordering machine) in a daily life scenario, a device in a large sports and music venue, or the like. For example, the access point and the station each may be a device used in the Internet of Vehicles, an Internet of Things node, a sensor, or the like in the Internet of Things, a smart camera, a smart remote control, and a smart water/electricity meter in a smart home, or a sensor in a smart city.

Although embodiments of this application mainly use a WLAN as an example, and particularly, a network using IEEE 802.11 series standards, for example, a system supporting sensing (sensing) or 802.11bf, a person skilled in the art easily understands that aspects in embodiments of this application may be extended to other networks using various standards or protocols, for example, Bluetooth (Bluetooth), a high performance radio LAN (high performance radio LAN, HIPERLAN) (a wireless standard similar to the IEEE 802.11 standard, and mainly used in Europe), a wide area network (WAN), or other networks known or developed in the future.

The methods provided in embodiments of this application may be implemented by a communication apparatus in a wireless communication system. For example, the communication apparatus may be an access point (access point, AP) or a station (station, STA).

The access point is an apparatus with a wireless communication function, supports communication or sensing by using a WLAN protocol, has a function of communicating with or sensing another device (for example, a station or another access point) in the WLAN network, and certainly may also have a function of communicating with or sensing another device. Alternatively, the access point is equivalent to a bridge that connects a wired network and a wireless network. A main function of the access point is to connect various wireless network clients together and then connect the wireless network to an Ethernet. In the WLAN system, the access point may be referred to as an access point station (AP STA). The apparatus with the wireless communication function may be an entire device, or may be a chip, a processing system, or the like installed in an entire device. The device in which the chip or the processing system is installed may implement the methods and functions in embodiments of this application under control of the chip or the processing system. The AP in embodiments of this application is an apparatus that provides a service for the STA, and may support the 802.11 series protocols or subsequent protocols, or the like. For example, the access point may be an access point for a terminal (for example, a mobile phone) to access a wired (or wireless) network, and is mainly deployed at home, inside a building, and inside a campus. A typical coverage radius is tens of meters to over one hundred meters. Certainly, the access point may alternatively be deployed outdoors. For another example, the AP may be a communication entity such as a communication server, a router, a switch, or a network bridge. The AP may include various forms of macro base stations, micro base stations, relay stations, and the like. Certainly, the AP may alternatively be a chip and a processing system in these various forms of devices, to implement the methods and the functions in embodiments of this application.

The station is an apparatus with a wireless communication function, supports communication or sensing by using the WLAN protocol, and has a capability of communicating with or sensing another station or access point in the WLAN network. In the WLAN system, the station may be referred to as a non-access point station (non-access point station, non-AP STA). For example, the STA is any user communication device that allows a user to communicate with or sense the AP and then communicate with the WLAN. The apparatus with the wireless communication function may be an entire device, or may be a chip, a processing system, or the like installed in an entire device. The device in which the chip or the processing system is installed may implement the methods and functions in embodiments of this application under control of the chip or the processing system. For example, the station may be a wireless communication chip, a wireless sensor, or a wireless communication terminal; and may also be referred to as a user. For another example, the station may be a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, or a computer supporting a Wi-Fi communication function.

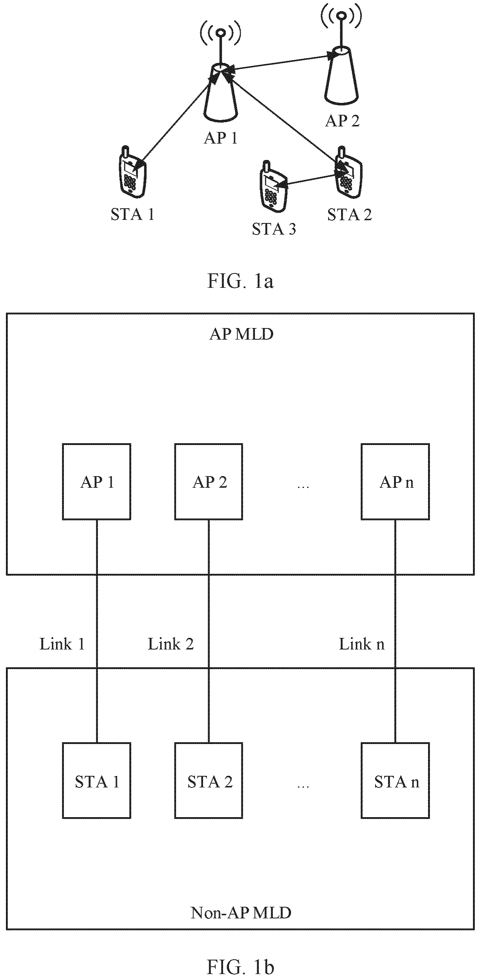

FIG. 1a is a diagram of an architecture of a communication system according to an embodiment of this application. The communication system may include one or more APs and one or more STAs. FIG. 1a shows two access points such as an AP 1 and an AP 2, and three stations such as a STA 1, a STA 2, and a STA 3. It may be understood that the one or more APs may communicate with the one or more STAs. Certainly, the APs may communicate with each other, and the STAs may communicate with each other. The methods provided in embodiments of this application are applicable to but are not limited to single-user uplink/downlink transmission, multi-user uplink/downlink transmission, vehicle-to-everything (vehicle-to-everything, V2X, where X may represent everything), and device-to-device (device-to-device, D2D). For example, the V2X may include vehicle to vehicle (vehicle to vehicle, V2V), vehicle to infrastructure (vehicle to infrastructure, V2I), vehicle to pedestrian (vehicle to pedestrian, V2P) communication, or vehicle to network (vehicle to network, V2N) communication.

It may be understood that, in FIG. 1a, an example in which a STA is a mobile phone and an AP is a router is used. This does not mean that types of the AP and the STA in embodiments of this application are limited. In addition, FIG. 1a shows only two APs and three STAs as an example. There may be more or fewer APs or STAs. This is not limited in embodiments of this application. It may be understood that although the AP and the STA are shown in this embodiment of this application, the AP may also be referred to as a STA in actual application. A STA information field in a frame structure shown below may carry information about the STA, or may carry information about the AP.

A multi-link device (multi-link device, MLD) is a device that simultaneously includes multiple stations (such as APs or non-AP STAs) respectively operating on different frequency bands or channels. When a channel spacing between two stations in a multi-link device is sufficiently large, the two stations can run independently without interfering with each other. If between any two stations, one station can transmit while the other station is receiving, the two stations may be considered to support a simultaneous transmitting and receiving (simultaneous transmitting and receiving, STR) capability; otherwise, the two stations are considered to have a non-simultaneous transmitting and receiving (non-simultaneous transmitting and receiving, NSTR) capability. The multi-link device includes a plurality of affiliated stations. The affiliated stations may be physical stations, or may be logical stations. Each station may operate on one link, one frequency band, one channel, or the like. The affiliated station may be an AP or a non-AP STA. For ease of description, in embodiments of this application, a multi-link device whose affiliated station is an AP may be referred to as a multi-link AP, a multi-link AP device, or an AP multi-link device (AP multi-link device, AP MLD). A multi-link device whose affiliated station is a non-AP STA is referred to as a multi-link STA, a multi-link STA device, or a STA multi-link device (STA multi-link device). Alternatively, a multi-link device whose affiliated station is a non-AP STA is referred to as a multi-link non-AP, a multi-link non-AP device, or a non-AP multi-link device (non-AP multi-link device, non-AP MLD). The multi-link device (which may be a non-AP MLD or an AP MLD herein) is a communication apparatus having a wireless communication function. The communication apparatus may be an entire device, or may be a chip, a processing system, or the like installed in an entire device. The device in which the chip or the processing system is installed may implement the methods and functions in embodiments of this application under control of the chip or the processing system.

The multi-link device MLD may implement wireless communication according to the 802.11 series protocols, for example, comply with extremely high throughput (Extremely High Throughput, EHT), or comply with and be based on 802.11be, or be compatible with and support 802.11be, to implement communication with another device. Certainly, the another device may be a multi-link device, or may not be a multi-link device.

FIG. 1b is a diagram of an architecture of a communication system according to an embodiment of this application. As shown in FIG. 1b, an AP MLD includes an AP 1, an AP 2, ..., an AP n, and a non-AP MLD includes a STA 1, a STA 2, ..., a STA n, where n is a positive integer. The AP MLD and the non-AP MLD may perform parallel communication on a link 1, a link 2, ..., a link n. The STA 1 in the non-AP MLD establishes an association relationship with the AP 1 in the AP MLD. The STA 2 in the non-AP MLD establishes an association relationship with the AP 2 in the AP MLD. The STA n in the non-AP MLD establishes an association relationship with the AP n in the AP MLD. Therefore, one or more STAs in the non-AP MLD and one or more APs in the AP MLD may communicate after establishing an association relationship. Frequency bands in which multi-link devices (including the AP MLD and the non-AP MLD) operate may include but are not limited to sub-1 GHz, 2.4 GHz, 5 GHz, 6 GHz, and high-frequency 60 GHz. For example, the methods provided in embodiments of this application are applicable to but are not limited to single-user uplink/downlink transmission, multi-user uplink/downlink transmission, vehicle-to-everything (vehicle-to-everything, V2X, where X may represent everything), and device-to-device (device-to-device, D2D). For example, the V2X may include vehicle to vehicle (vehicle to vehicle, V2V), vehicle to infrastructure (vehicle to infrastructure, V2I), vehicle to pedestrian (vehicle to pedestrian, V2P) communication, or vehicle to network (vehicle to network, V2N) communication.

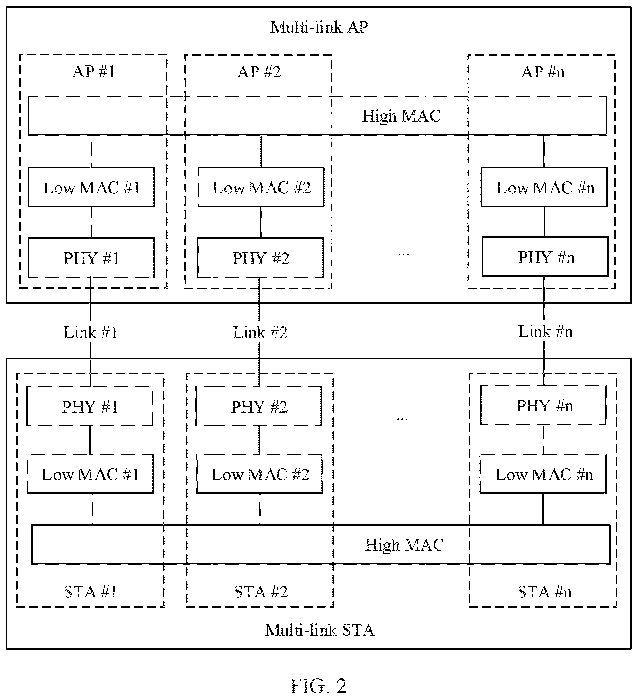

FIG. 2 is a diagram of a connection manner between a multi-link AP and a multi-link STA according to an embodiment of this application. The 802.11 standard focuses on 802.11 physical layer (physical layer, PHY) and medium access control (medium access control, MAC) layer parts in a multi-link device. Therefore, FIG. 2 shows only an example of PHY and MAC layers.

As shown in FIG. 2, a multi-link device (for example, a multi-link AP and a multi-link STA) may include a physical layer (physical layer, PHY) (PHY #1, PHY #2, and PHY #n shown in FIG. 2) and a medium access control (medium access control, MAC) layer. The physical layer may be configured to process a physical layer signal, and the MAC layer may be configured to process a MAC layer signal. Further, the MAC layer may be further divided into a high-MAC (high-MAC) layer (high-MAC shown in FIG. 2) and a plurality of low-MAC (low-MAC) layers (low-MAC #1, and low-MAC #2 to low-MAC #n shown in FIG. 2). As shown in FIG. 2, a plurality of APs included in a multi-link AP are independent of each other at a low-MAC layer and a PHY, and share a high-MAC layer. A plurality of STAs included in a multi-link STA are independent of each other at a low-MAC layer and a PHY, and share a high-MAC layer. The high-MAC layer is separately connected to the plurality of low-MAC layers, that is, the high-MAC layer is shared by multiple links. For example, the high-MAC layer mainly completes operations such as allocation, encryption, and decryption of a sequence number (sequence number, SN) and a packet number (packet number, PN) of a MAC service data unit (MAC service data unit, MSDU). For example, the low-MAC layer mainly completes operations such as assembly, channel access, packet sending, and reception acknowledgment of a MAC protocol data unit (MAC protocol data unit, MPDU) of a respective link.

In FIG. 2, a PHY #1 layer, a low-MAC #1 layer, and the high-MAC layer in the multi-link AP may be considered as AP #1, a PHY #2 layer, a low-MAC #2 layer, and the high-MAC layer may be considered as AP #2, ..., a PHY #n layer, a low-MAC #n layer, and the high-MAC layer may be considered as AP #n. In other words, it may be understood that the multi-link AP includes n AP entities. A similar situation exists in the multi-link STA. To be specific, the high-MAC layer in the multi-link STA is also shared by multiple links. A PHY #1 layer, a low-MAC #1 layer, and the high-MAC layer are considered as STA #1, a PHY #2 layer, a low-MAC #2 layer, and the high-MAC layer are considered as STA #2, ..., a PHY #n layer, a low-MAC #n layer, and the high-MAC layer are considered as STA #n. In other words, it may be understood that the multi-link STA includes n STA entities. As shown in FIG. 2, PHY #1 of AP #1 in the multi-link AP and PHY #1 of STA #1 in the multi-link STA operate on a same channel, and AP #1 in the multi-link AP implements communication with STA #1 in the multi-link STA by using a link (link #1 shown in FIG. 2); PHY #2 of AP #2 in the multi-link AP and PHY #2 of STA #2 in the multi-link STA operate on another same channel, and AP #2 in the multi-link AP implements communication with STA #2 in the multi-link STA by using a link (link #2 shown in FIG. 2); and PHY #n of AP #n in the multi-link AP and PHY #n of STA #n in the multi-link STA operate on another same channel, and AP #n in the multi-link AP implements communication with STA #n in the multi-link STA by using a link (link #n shown in FIG. 2).

For example, the high-MAC layer or the low-MAC layer may be implemented by a processor in a chip system of the multi-link device, or may be implemented by a different software processing module in a chip system. Examples are not listed in embodiments of this application. It may be understood that FIG. 2 may be understood as division of the multi-link device into functional modules. The modules shown in FIG. 2 may be implemented in a form of hardware, or may be implemented in a form of software functional modules, or the like. The PHY and MAC layers shown in FIG. 2 may be understood as logical function division, and there may be another division manner during actual implementation. n shown in FIG. 2 may be equal to 1, or n is an integer greater than 1, or the like.

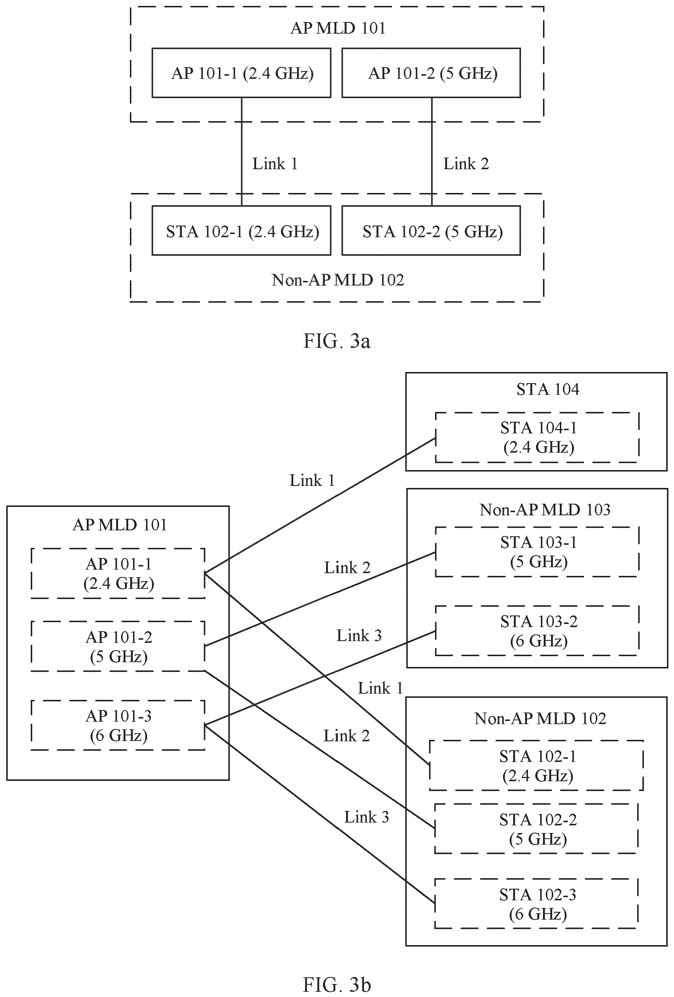

Frequency bands in which the multi-link device operates may include but are not limited to sub-1 GHz, 2.4 GHz, 5 GHz, 6 GHz, and high-frequency 60 GHz. FIG. 3a and FIG. 3b are two diagrams of communication between a multi-link device and another device in a wireless local area network through multiple links.

FIG. 3a shows a scenario in which an AP MLD 101 communicates with a non-AP MLD 102. The AP MLD 101 includes an affiliated AP 101-1 and an affiliated AP 101-2. The non-AP MLD 102 includes an affiliated STA 102-1 and an affiliated STA 102-2. The AP MLD 101 and the non-AP MLD 102 perform parallel communication on a link 1 and a link 2.

For example, FIG. 3b shows a scenario in which an AP MLD 101 communicates with a non-AP MLD 102, a non-AP MLD 103, and a STA 104. The AP MLD 101 includes an affiliated AP 101-1 to an affiliated AP 101-3. The non-AP MLD 102 includes three affiliated STAs: a STA 102-1, a STA 102-2, and a STA 102-3. The non-AP MLD 103 includes two affiliated STAs: a STA 103-1 and a STA 103-2. The STA 104 is a single-link device and includes a STA 104-1. The AP MLD 101 may separately communicate with the non-AP MLD 102 on a link 1, a link 2, and a link 3, communicate with the non-AP MLD 103 on a link 2 and a link 3, and communicate with the STA 104 on a link 1. In an example, the STA 104 operates in the 2.4 GHz frequency band; in the non-AP MLD 103, the STA 103-1 operates in the 5 GHz frequency band, and the STA 103-2 operates in the 6 GHz frequency band; and in the non-AP MLD 102, the STA 102-1 operates in the 2.4 GHz frequency band, the STA 102-2 operates in the 5 GHz frequency band, and the STA 102-3 operates in the 6 GHz frequency band. The AP 101-1 operating in the 2.4 GHz frequency band in the AP MLD 101 may communicate, on the link 1, uplink or downlink data with the STA 104 and the STA 102-1 in the non-AP MLD 102. The AP 101-2 operating in the 5 GHz frequency band in the AP MLD 101 may communicate, on the link 2, uplink or downlink data with the STA 103-1 operating in the 5 GHz frequency band in the non-AP MLD 103, and also communicate, on the link 2, uplink or downlink data with the STA 102-2 operating in the 5 GHz frequency band in the non-AP MLD 102. The AP 101-3 operating in the 6 GHz frequency band in the AP MLD 101 may communicate, on the link 3, uplink or downlink data with the STA 102-3 operating in the 6 GHz frequency band in the non-AP MLD 102, and also communicate, on the link 3, uplink or downlink data with the STA 103-2 in the non-AP MLD.

FIG. 3a shows that the AP MLD supports only two frequency bands. FIG. 3b shows an example in which the AP MLD 101 supports only three frequency bands (2.4 GHz, 5 GHz, and 6 GHz), each frequency band corresponds to one link, and the AP MLD 101 may operate on one or more links of the link 1, the link 2, or the link 3. On an AP side or a STA side, a link may also be understood as a station operating on the link. In actual application, the AP MLD and the non-AP MLD may further support more or fewer frequency bands, that is, the AP MLD and the non-AP MLD may operate on more links or fewer links. This is not limited in embodiments of this application. FIG. 3a and FIG. 3b are merely simple diagrams, and do not constitute any limitation on the protection scope of embodiments of this application.

A first communication apparatus and a second communication apparatus shown in embodiments of this application may be implemented in the following manners:

In an example, the first communication apparatus and the second communication apparatus may be Wi-Fi chips disposed in different Wi-Fi devices. In another example, the first communication apparatus may be an AP, and the second communication apparatus may be a STA. In still another example, both the first communication apparatus and the second communication apparatus may be STAs (or APs). In still another example, the first communication apparatus may be a STA, and the second communication apparatus may be an AP. In still another example, one of the first communication apparatus and the second communication apparatus may be a multi-link device, and the other communication apparatus is an AP or a STA.

When both the first communication apparatus and the second communication apparatus are multi-link devices, the first communication apparatus may be an AP MLD, and the second communication apparatus may be a non-AP MLD. In still another example, both the first communication apparatus and the second communication apparatus may be non-AP MLDs (or AP MLDs). In still another example, the first communication apparatus may be a non-AP MLD, and the second communication apparatus may be an AP MLD.

When the first communication apparatus and the second communication apparatus are distinguished based on a sensing initiator and a sensing responder, the first communication apparatus may be the sensing initiator (sensing initiator), and the second communication apparatus may be the sensing responder (sensing responder); or the first communication apparatus may be the sensing responder, and the second communication apparatus is the sensing initiator. The following scenarios are shown by using an example in which the first communication apparatus is the sensing initiator and the second communication apparatus is the sensing responder, but should not be construed as a limitation on embodiments of this application.

It may be understood that in embodiments of this application, the methods provided in embodiments of this application are described from perspectives of the first communication apparatus and the second communication apparatus. However, in an information transmission process between the first communication apparatus and the second communication apparatus, there may be another apparatus, for example, a forwarding apparatus used to forward information between the first communication apparatus and the second communication apparatus. An apparatus other than the first communication apparatus and the second communication apparatus is not limited in embodiments of this application.

The following describes a sensing communication method in embodiments of this application.

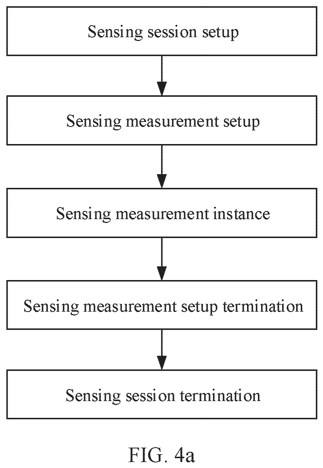

FIG. 4a is a schematic flowchart of sensing according to an embodiment of this application. For example, as shown in FIG. 4a, when an AP serving as a sensing initiator performs sensing with a STA serving as a sensing responder, a sensing session setup (sensing session setup) process is first performed to exchange sensing capabilities of the AP and the STA. Then a sensing measurement setup (sensing measurement setup) process is performed, and parameters (which may also be referred to as sensing parameters) of a sensing measurement instance (sensing measurement instance) of a specific measurement setup ID (measurement setup ID), for example, a bandwidth, roles (transmitter/receiver) of the AP and the STA (for example, negotiating an NDP used for a measurement), a sensing passive end time (for example, a time for terminating a sensing measurement setup), and a size of a sensing availability window, are negotiated. Then the sensing initiator (such as the AP) initiates a sensing measurement instance process to perform a sensing measurement. Sensing measurement instances may include a trigger-based (trigger-based, TB) sensing measurement instance (TB sensing measurement instance) and a non-trigger-based sensing measurement instance (non-TB sensing measurement instance). The sensing initiator and the sensing responder shown in FIG. 4a are examples. In specific implementation, the sensing initiator and the sensing responder may alternatively be other Wi-Fi devices (for example, both the sensing initiator and the sensing responder are STAs).

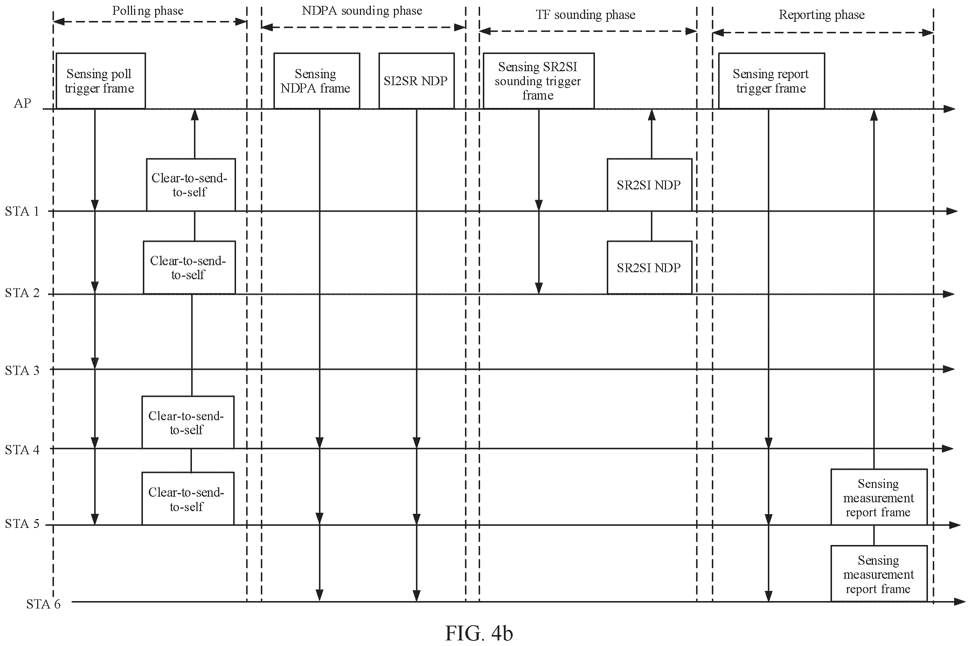

FIG. 4b is a schematic flowchart of a trigger-based sensing measurement instance according to an embodiment of this application. As shown in FIG. 4b, the trigger-based sensing measurement instance may include a polling (polling) phase, an NDPA sounding (sounding) phase, a trigger frame (trigger frame, TF) sounding (TF sounding) phase, and a reporting (reporting) phase. Some of the phases may be omitted in one sensing measurement instance. In FIG. 4b, roles of a STA 1 to a STA 3 are sensing transmitters (sensing transmitter), and roles of a STA 4 to a STA 6 are sensing receivers (sensing receiver). It can be learned from FIG. 4b that when an AP sends a sensing poll trigger frame to the STA 1 to the STA 5, the STA 3 does not reply with a clear-to-send-to-self (CTS-to-self). Therefore, the STA 3 does not participate in a sensing procedure. For a detailed description of FIG. 4b, refer to a related standard or protocol. Details are not described in this embodiment of this application.

Table 1 shows a combination of phases that are present in a trigger-based sensing measurement instance.

**Table 1**

| Polling phase | NDPA sounding phase | TF sounding phase | Reporting phase |
|---|---|---|---|
| May be absent | May be absent | Present | May be absent |
| Present | Present | May be absent | May be absent |
| Present | May be absent | Present | May be absent |
| Present | Present | Present | May be absent |
| May be absent | Present | May be absent | Present |
| May be absent | Present | Present | Present |
| Present | Present | Present | Present |

As shown in Table 1, a sensing measurement instance may include a TF sounding phase (without a polling phase, an NDPA sounding phase, and a reporting phase); or include a polling phase and an NDPA sounding phase (without a TF sounding phase and a reporting phase); or include a polling phase and a TF sounding phase (without an NDPA sounding phase and a reporting phase), or the like. Examples are not exhaustively listed.

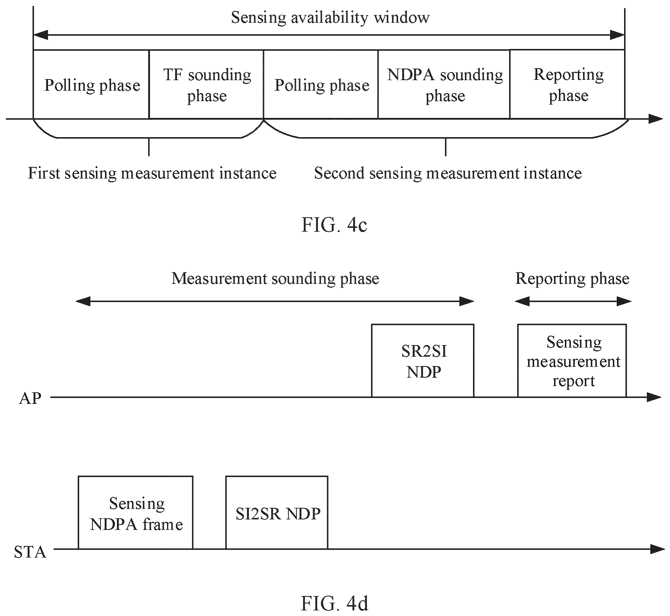

FIG. 4c is a diagram of a sensing availability window according to an embodiment of this application. As shown in FIG. 4c, the sensing availability window (sensing availability window) may include one transmission opportunity (transmission opportunity, TXOP). For example, the TXOP may include two trigger-based sensing measurement instances. Each sensing measurement instance needs to be executed within a time range of one sensing availability window. One sensing availability window may include a plurality of TXOPs, and one TOXP may also include a plurality of sensing measurement instances. For example, the number of TXOPs included in one sensing availability window may be determined by a sensing initiator. In this embodiment of this application, the number of TXOPs included in one sensing availability window and the number of sensing measurement instances included in one TXOP are not limited.

FIG. 4d is a schematic flowchart of a non-trigger-based sensing measurement instance according to an embodiment of this application. As shown in FIG. 4d, a STA, as a sensing initiator, sends a sensing NDPA frame in a measurement sounding phase, and sends an SI2SR NDP after an SIFS; and an AP, as a sensing responder, replies with an SR2SI NDP frame after an SIFS. A reporting phase occurs after an SIFS, and the AP includes a measurement result into a sensing measurement report frame and feeds back the sensing measurement report frame to the sensing initiator. A sensing measurement instance shown below in embodiments of this application may include a trigger-based sensing measurement instance, or may include a non-trigger-based sensing measurement instance.

The descriptions of the sensing procedure, sensing measurement instance, and sensing availability window shown above are applicable to each sensing communication method shown below.

According to a sensing communication method provided in embodiments of this application, when interference exists, impact of the interference on a sensing measurement result can be effectively reduced. For example, for embodiments related to sensing suspend indication information shown below, inaccuracy of a sensing measurement result caused by interference can be effectively avoided, and a sensing measurement is performed when no interference exists or interference strength is less than a strength threshold, thereby improving accuracy of the sensing measurement result. For example, for embodiments related to sensing supplement indication information shown below, when detecting that a sensing measurement result is affected by interference, the first communication apparatus performs a supplementary measurement on a sensing measurement instance affected by the interference, thereby effectively compensating for inaccuracy of the sensing measurement result (a loss of the sensing measurement result) caused by the interference to the sensing measurement instance, so that the sensing measurement result is more complete, and that accuracy of the sensing measurement result is improved. For example, for embodiments related to sensing switch indication information shown below, when detecting that interference exists on a first link, the first communication apparatus switches to a link other than the first link, between the first communication apparatus and the second communication apparatus, so that link resources between multi-link devices can be properly used, and that accuracy of a sensing measurement result is improved. For example, a manner in which the first communication apparatus detects interference may include: if information in a sensing measurement result received by the first communication apparatus differs greatly, it may be determined that the sensing measurement result is affected; or the first communication apparatus determines, in a channel monitoring manner, that the sensing measurement result is affected. The manner in which the first communication apparatus detects interference is not limited in embodiments of this application. Similarly, the first communication apparatus may determine, in the channel monitoring manner, that no interference exists or that interference strength is less than a strength threshold (which may also be referred to as "end of interference"). A manner in which the first communication apparatus detects the end of interference is not limited in embodiments of this application.

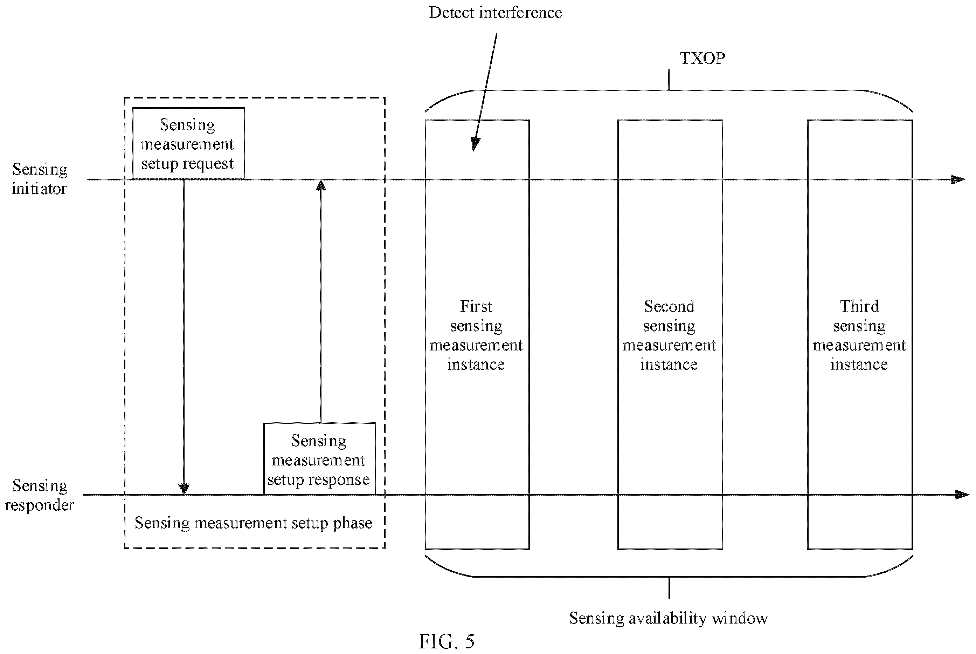

FIG. 5 is an example diagram of a scenario of a sensing communication method according to an embodiment of this application. As shown in FIG. 5, the sensing communication method shown in this embodiment of this application may be performed after a sensing measurement setup phase is completed, that is, a sensing initiator and a sensing responder have negotiated parameters of a sensing measurement instance and completed a sensing measurement setup. FIG. 5 does not show a sensing session setup procedure performed by the sensing initiator and the sensing responder. For the description of the sensing procedure, refer to FIG. 4a.

After the sensing initiator and the sensing responder complete the sensing measurement setup phase, a first communication apparatus (which may be the sensing initiator shown in FIG. 5) may detect interference before the sensing measurement instance is executed, or detect interference in a sensing measurement process of a first sensing measurement instance (as shown in FIG. 5), or detect interference after a sensing measurement of a first sensing measurement instance is completed, or detect interference in a sensing measurement execution process of a second sensing measurement instance, or the like. An occasion at which the first communication apparatus detects interference is not limited in this embodiment of this application. After detecting the interference, the first communication apparatus may perform the sensing communication method shown in this embodiment of this application. According to the sensing communication method shown in this embodiment of this application, integrity and accuracy of a sensing measurement result can be effectively improved.

Certainly, the scenario shown in FIG. 5 is merely an example. Specific reasons why the first communication apparatus sends sensing suspend indication information (or sensing resume indication information), sensing supplement indication information, and sensing switch indication information are not uniquely limited in this embodiment of this application.

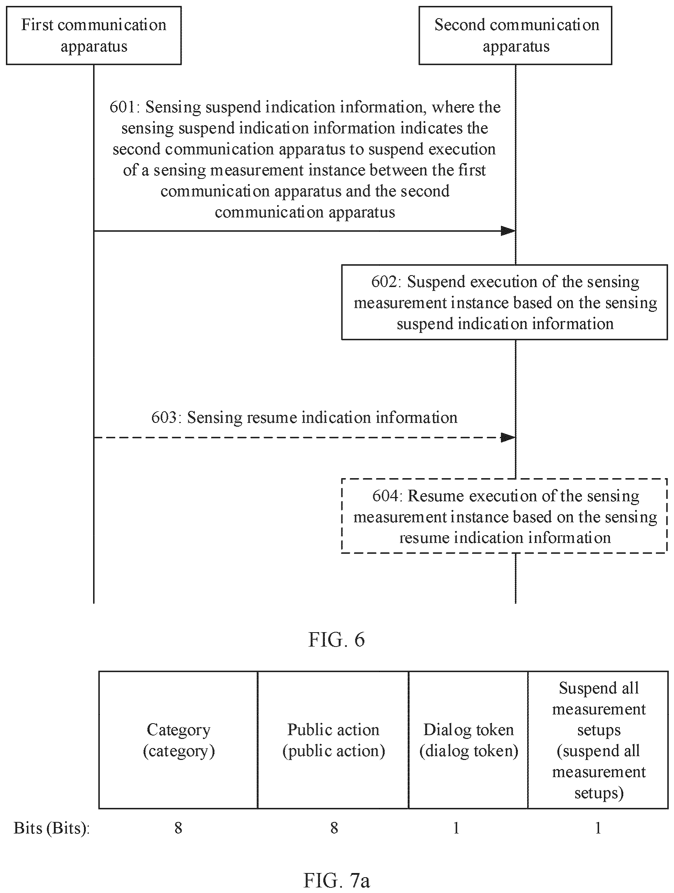

FIG. 6 is a schematic flowchart of a sensing communication method according to an embodiment of this application. For descriptions of a first communication apparatus and a second communication apparatus in the method, refer to the foregoing descriptions. As shown in FIG. 6, the sensing communication method includes the following steps.

601: The first communication apparatus sends sensing suspend indication information, and correspondingly, the second communication apparatus receives the sensing suspend indication information, where the sensing suspend indication information indicates the second communication apparatus to suspend execution of a sensing measurement instance between the first communication apparatus and the second communication apparatus.

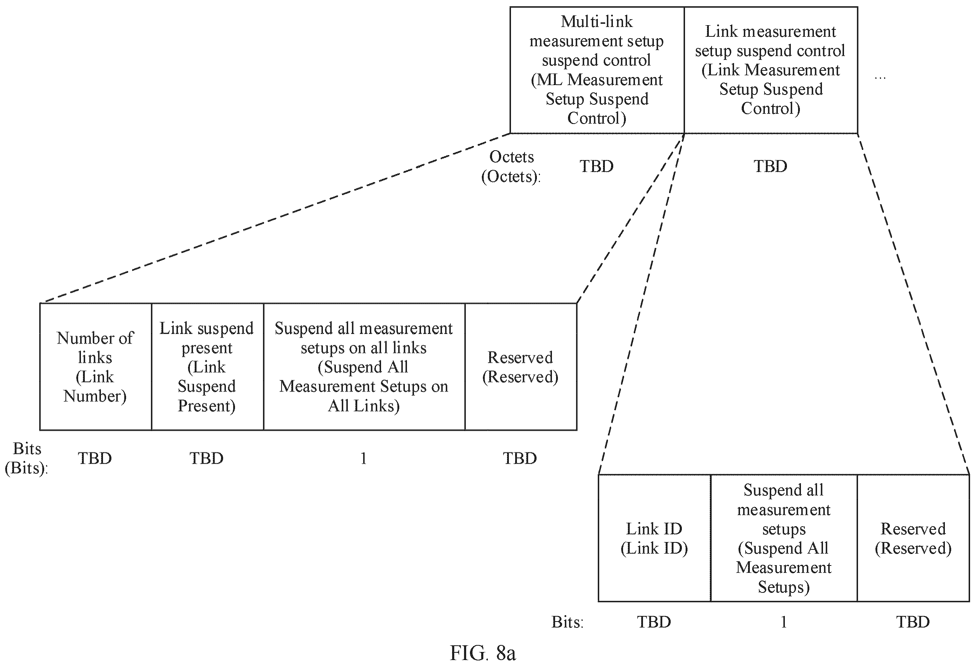

For example, before the first communication apparatus sends the sensing suspend indication information, the first communication apparatus may generate the sensing suspend indication information (or a frame used to carry the sensing suspend indication information). In an example, the sensing suspend indication information may be carried in a new action frame, and the new action frame may be referred to as a sensing measurement setup suspend frame (sensing measurement setup suspend frame). In another example, the sensing suspend indication information may be carried in a related frame in a sensing measurement setup phase shown in FIG. 4a, or in a related frame in a sensing measurement instance phase shown in FIG. 4a. For example, the sensing suspend indication information may be carried in any one of the following frames: a sensing measurement setup request frame, a sensing poll trigger frame, a sensing null data packet announcement frame, a sensing responder to sensing initiator sounding trigger frame, and a sensing report trigger frame. For detailed descriptions of the sensing suspend indication information, refer to the following related descriptions of FIG. 7a to FIG. 7g, FIG. 8a to FIG. 8d, and the like.

When at least one of the first communication apparatus and the second communication apparatus is not a multi-link device (or referred to as at least one of the first communication apparatus and the second communication apparatus being a single-link device), the sensing suspend indication information may be described as follows:
When at least one of the first communication apparatus and the second communication apparatus is not a multi-link device, that is, when there is only one link established between the first communication apparatus and the second communication apparatus, the sensing suspend indication information may indicate the second communication apparatus to suspend execution of all sensing measurement instances on the link between the first communication apparatus and the second communication apparatus. For example, the sensing suspend indication information may occupy one bit, and when a value of the bit is a first value (such as 1), the second communication apparatus may be indicated to suspend execution of all the sensing measurement instances. Therefore, the second communication apparatus may be indicated, by using minimum signaling overheads, to suspend execution of the sensing measurement instance, to avoid inaccuracy of a sensing measurement result caused by interference or the like. When at least one of the first communication apparatus and the second communication apparatus is not a multi-link device, a reason why the first communication apparatus sends the sensing suspend indication information may include: interference exists on one link between the first communication apparatus and the second communication apparatus, or interference strength is greater than or equal to a strength threshold. That the first communication apparatus sends the sensing suspend indication information may include: the first communication apparatus sends the sensing suspend indication information on one link established between the first communication apparatus and the second communication apparatus. This embodiment of this application (as shown in FIG. 7a to FIG. 7f below) is also applicable to a case in which there is only one sensing link between the first communication apparatus and the second communication apparatus. For example, both the first communication apparatus and the second communication apparatus are multi-link devices, but there is only one link used for sensing between the two multi-link devices.

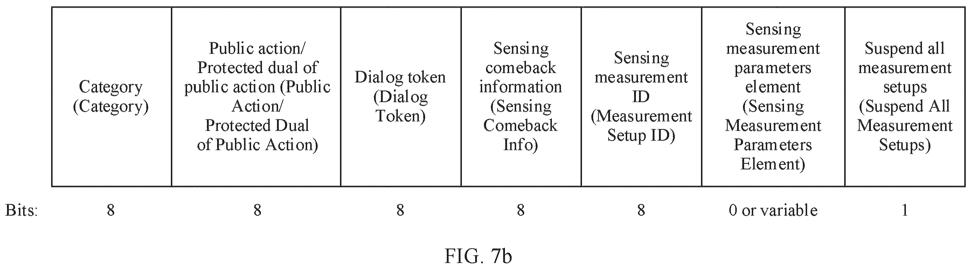

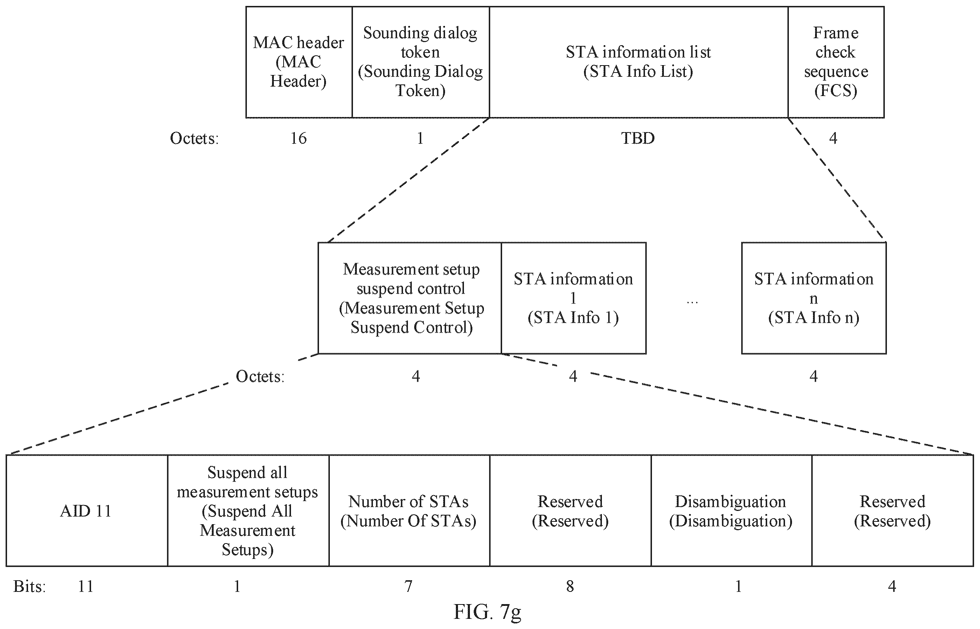

FIG. 7a is a diagram of a structure of a sensing measurement setup suspend frame according to an embodiment of this application. As shown in FIG. 7a, the sensing measurement setup suspend frame may include at least one of the following fields: category (category), public action (public action) (which may also be referred to as public action), dialog token (dialog token), and suspend all measurement setups (suspend all measurement setups). The suspend all measurement setups field carries sensing suspend indication information. For example, when a value of the field is 1, it indicates that all sensing measurement instances of the second communication apparatus are to be suspended; or when a value of the field is 0, it may indicate "reserved". The suspend all measurement setups field may also be referred to as a measurement setup suspend control field or the like. A name of a field that carries the sensing suspend indication information is not limited in this embodiment of this application. The description of the suspend all measurement setups field is also applied to the following descriptions in FIG. 7b to FIG. 7g. FIG. 7a to FIG. 7f are diagrams of frames that are used to carry sensing suspend indication information and are sent by the first communication apparatus to a specific second communication apparatus. For example, an AP sends, to a specific STA, a frame used to carry sensing suspend indication information. FIG. 7g is a diagram of a frame that is used to carry sensing suspend indication information and sent by the first communication apparatus to a plurality of second communication apparatuses. For example, an AP sends, to a plurality of STAs by broadcast, a frame used to carry sensing suspend indication information.

FIG. 7b is a diagram of a structure of a sensing measurement setup request frame according to an embodiment of this application. Sensing suspend indication information may be carried in a sensing measurement setup request frame in a sensing measurement setup phase, and the second communication apparatus and the first communication apparatus perform a suspend operation when establishing sensing operation parameters. As shown in FIG. 7b, the sensing measurement setup request frame may include at least one of the following: category, public action/protected dual of public action (public action/protected dual of public action) (which may also be referred to as protected dual of public action), dialog token (dialog token), sensing comeback information (sensing comeback info), sensing measurement ID, sensing measurement parameters element (sensing measurement parameters element), and suspend all measurement setups.

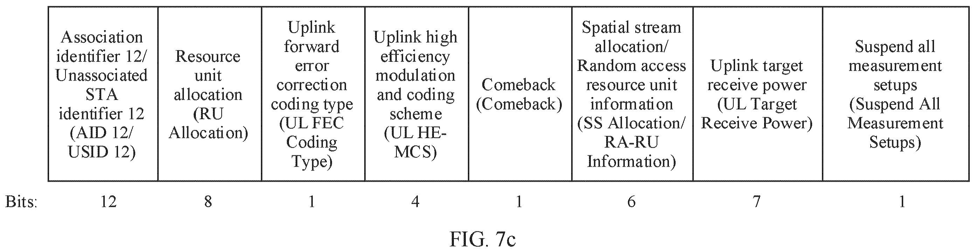

In an example, sensing suspend indication information may be carried in a user information (user info) field in a sensing poll trigger frame in a polling phase of a sensing measurement instance. When polling each second communication apparatus, the first communication apparatus indicates the second communication apparatus to suspend execution of the sensing measurement instance. FIG. 7c is a diagram of a structure of a sensing poll trigger frame according to an embodiment of this application. As shown in FIG. 7c, the user information field in the sensing poll trigger frame may include at least one of the following: association identifier (association identifier, AID)/unassociated STA identifier (unassociated STA identifier, USID), suspend all measurement setups, resource unit allocation (resource unit allocation), uplink forward error correction coding type (uplink forward error correction coding type, UL FEC coding type), uplink high efficiency modulation and coding scheme (uplink high efficiency modulation and coding scheme, UL HE-MCS), comeback (comeback), spatial stream allocation/random access resource unit information (spatial stream allocation/random access resource unit information, SS allocation/RA-RU information), and uplink target receive power (UL target receive power). FIG. 7c shows an example of AID 12 whose length is 12 bits and USID 12 whose length is 12 bits, but this should not be construed as a limitation on embodiments of this application. For example, a length of an AID carried in an AID field may be 11 bits, 12 bits, or even more or fewer bits. Examples are not exhaustively listed. For another example, a length of a USID carried in a USID field may be 11 bits, 12 bits, or even more or fewer bits. Examples are not exhaustively listed. For ease of description, the following uses AID 11 or AID 12 as an example to describe a frame used to carry sensing suspend indication information (or a frame used to carry sensing resume indication information, or a frame used to carry sensing supplement indication information), but this should not be construed as a limitation on embodiments of this application. For example, the first communication apparatus may indicate, by using AID 12/USID 12 (or AID 11), a second communication apparatus to suspend execution of a sensing measurement instance. For example, a value of AID 12/USID 12 (or AID 11) may range from 1 to 2007. It may be understood that the foregoing enumerated values of AID 12/USID 12 (or AID 11) are merely examples. With progress of a standard, AID 12/USID 12 (or AID 11) may also have other values. Examples are not exhaustively listed in this embodiment of this application. In another example, when the first communication apparatus needs to indicate a plurality of second communication apparatuses to suspend execution of sensing measurement instances, sensing suspend indication information may be carried in a common information field in a sensing poll trigger frame. For example, the sensing poll trigger frame may include an HE trigger frame and an EHT trigger frame. For example, the sensing suspend indication information may be carried in a common information field in the HE trigger frame. For another example, the sensing suspend indication information may be carried in a common information field in the EHT trigger frame. Certainly, the sensing suspend indication information may also be carried in a common information field in a UHR trigger frame. Frame structures of the HE trigger frame, the EHT trigger frame, and the UHR trigger frame are not limited in embodiments of this application. When the sensing suspend indication information is carried in the common information field in the sensing poll trigger frame, the second communication apparatuses that receive the sensing poll trigger frame may suspend execution of the sensing measurement instances based on the sensing suspend indication information.

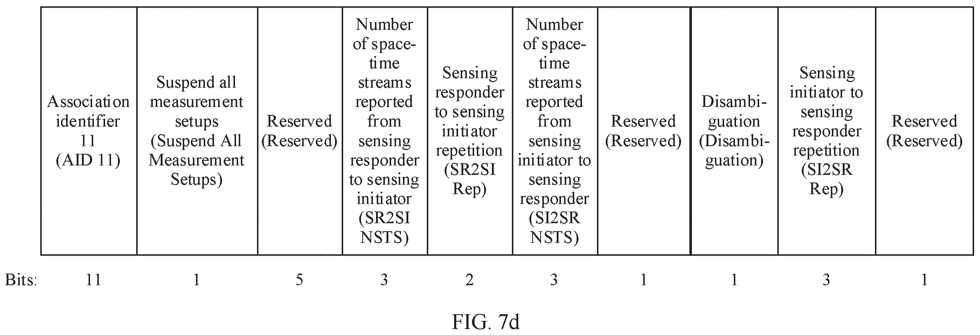

In an example, the sensing suspend indication information may be carried in a STA information (STA info) field in a sensing NDPA frame in an NDPA sounding phase of a sensing measurement instance. For example, a value of an AID 11 field in the STA information field may range from 1 to 2007 (that is, less than 2008). When sending the sensing NDPA frame, the first communication apparatus indicates the second communication apparatus to suspend execution the sensing measurement instance. FIG. 7d is a diagram of a structure of a sensing NDPA frame according to an embodiment of this application. As shown in FIG. 7d, a STA information field in the NDPA frame may include at least one of the following: AID 11, suspend all measurement setups, number of space-time streams reported (number of space-time streams reported, NSTS) from sensing responder to sensing initiator (sensing responder to sensing initiator, SR2SI) (SR2SI NSTS), sensing responder to sensing initiator repetition (SR2SI rep), number of space-time streams reported from sensing initiator to sensing responder (sensing initiator to sensing responder, SI2SR) (SI2SR NSTS), disambiguation (disambiguation), and sensing initiator to sensing responder repetition (SI2SR rep). In another example, when the first communication apparatus needs to indicate a plurality of second communication apparatuses to suspend execution of sensing measurement instances, as shown in FIG. 7g, sensing suspend indication information may be carried in a sensing NDPA frame in which a value of an AID 11 field is a specific value. For example, when the value of the AID 11 field is 2037 (which is merely an example, and may alternatively be 2038 or the like), a sensing setup suspend control field may indicate one or more second communication apparatuses to suspend execution of sensing measurement instances, and a number indicated by a number of STAs field is less than or equal to the number of STA information fields. For example, the number of STAs field may indicate that subsequent m STAs (for example, STAs indicated by m STA information fields immediately after the measurement setup suspend control field) need to suspend execution of sensing measurement instances, and a value of the number of STAs field is m. Because the measurement setup suspend control field already carries the suspend all measurement setups field and the number of STAs field, STA information 1 to STA information m may not carry the suspend all measurement setups field. m is an integer less than or equal to n.

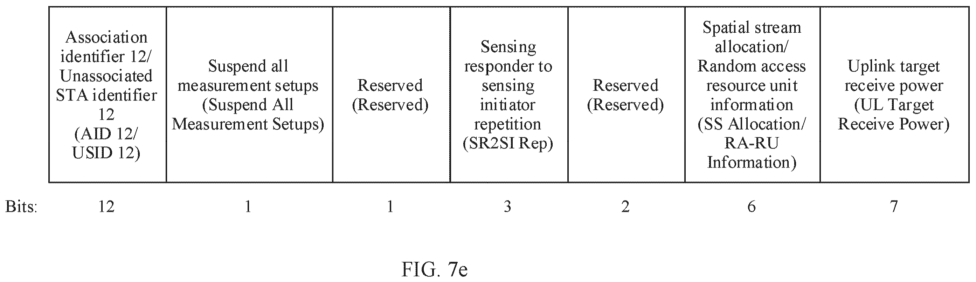

In an example, sensing suspend indication information may be carried in a user information field in a sensing responder to sensing initiator sounding trigger frame in a TF sounding phase of a sensing measurement instance. For example, a value of AID 12/USID 12 in the user information field may be less than 2008. When performing a sensing responder to sensing initiator sounding trigger on the second communication apparatus, the first communication apparatus indicates the second communication apparatus to suspend execution of the sensing measurement instance. FIG. 7e is a diagram of a structure of a sensing responder to sensing initiator sounding trigger frame according to an embodiment of this application. As shown in FIG. 7e, a user information field in the sensing responder to sensing initiator sounding trigger frame may include at least one of the following: AID 12/USID 12, suspend all measurement setups, sensing responder to sensing initiator repetition, spatial stream allocation/random access resource unit information, and uplink target receive power. In another example, when the first communication apparatus needs to indicate a plurality of second communication apparatuses to suspend execution of sensing measurement instances, sensing suspend indication information may be carried in a common information field in the SR2SI sounding trigger frame (that is, the sensing suspend indication information or the suspend all measurement setups field may be added to the common information field). When the sensing suspend indication information is carried in the common information field in the SR2SI sounding trigger frame, the second communication apparatuses that receive the SR2SI sounding trigger frame may suspend execution of the sensing measurement instances based on the sensing suspend indication information.

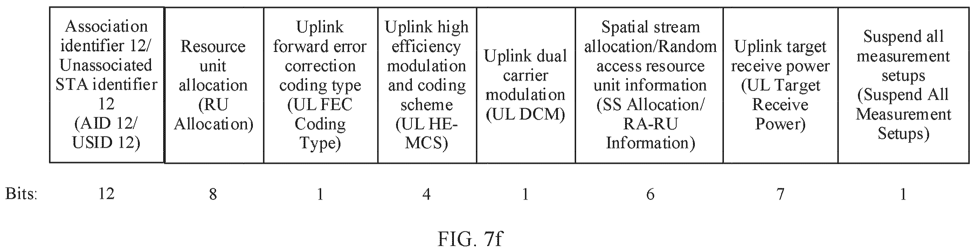

In an example, sensing suspend indication information may be carried in a user information field in a sensing report trigger frame in a reporting phase of a sensing measurement instance. The first communication apparatus indicates, in the sensing report trigger frame sent to the second communication apparatus, the second communication apparatus to suspend execution of the sensing measurement instance. FIG. 7f is a diagram of a structure of a sensing report trigger frame according to an embodiment of this application. As shown in FIG. 7f, a user information field in the sensing report trigger frame may include at least one of the following: AID 12/USID 12, suspend all measurement setups, resource unit allocation, uplink forward error correction coding type, uplink high efficiency modulation and coding scheme, uplink dual carrier modulation (uplink dual carrier modulation, UL DCM), spatial stream allocation/random access resource unit information, and uplink target receive power. In another example, when the first communication apparatus needs to indicate a plurality of second communication apparatuses to suspend execution of sensing measurement instances, sensing suspend indication information may be carried in a common information field in the sensing report trigger frame. When the sensing suspend indication information is carried in the common information field in the sensing poll trigger frame, the second communication apparatuses that receive the sensing report trigger frame may suspend execution of the sensing measurement instances based on the sensing suspend indication information.

When both the first communication apparatus and the second communication apparatus are multi-link devices, the sensing suspend indication information may be described as follows:
When both the first communication apparatus and the second communication apparatus are multi-link devices, the sensing suspend indication information may indicate the second communication apparatus to suspend execution of a sensing measurement instance on at least one link between the first communication apparatus and the second communication apparatus. If L1 links are established between the first communication apparatus and the second communication apparatus, the sensing suspend indication information may indicate the second communication apparatus to suspend execution of sensing measurement instances on L2 links of the L1 links, where L2 is less than or equal to L1, and both L1 and L2 are positive integers. L2 is less than or equal to the number of links used for sensing among the L1 links. For example, if L4 links of the L1 links are sensing links, L2 is less than or equal to L4, and L4 is less than or equal to L1. L1, L2, and L4 are all positive integers. For example, the sensing suspend indication information may include a link identifier of each of the L2 links, and the link identifier may be used to effectively indicate the second communication apparatus to suspend a sensing measurement instance on a specific link. When the first communication apparatus and the second communication apparatus are multi-link devices, the first communication apparatus may send the sensing suspend indication information on one of the L1 links, for example, send the sensing suspend indication information on one of the L2 (or L4) links, or send the sensing suspend indication information on a link that is not used for sensing among the L1 links. A reason why the first communication apparatus sends the sensing suspend indication information may include: interference exists on each of the L2 links between the first communication apparatus and the second communication apparatus, or interference strength is greater than or equal to the strength threshold; or interference exists on at least one of the L2 links between the first communication apparatus and the second communication apparatus (or interference strength is greater than the strength threshold), and interference existing on the at least one link affects another link among the L2 links. That the first communication apparatus sends the sensing suspend indication information may include: the first communication apparatus sends the sensing suspend indication information on any one of the L2 links; or the first communication apparatus sends the sensing suspend indication information on a link other than the L2 links among the L1 links..

FIG. 8a is a diagram of a structure of a frame used to carry sensing suspend indication information according to an embodiment of this application. As shown in FIG. 8a, the frame may include at least one of the following fields: number of links (link number), link suspend present (link suspend present), suspend all measurement setups on all links (suspend all measurement setups on all links), link ID, and suspend all measurement setups. In an example, when the first communication apparatus needs to suspend sensing measurement instances on all links between the first communication apparatus and the second communication apparatus, a multi-link measurement setup suspend control field may be used for implementation. For example, the number of links (link number) field may be equal to the total number of sensing links established between the first communication apparatus and the second communication apparatus. For another example, the number of links may be set to "reserved". The link suspend present (link suspend present) field may indicate whether a link measurement setup suspend control field is present after the multi-link measurement setup suspend control field. If a value of the link suspend present field is 1 (or 0), it may indicate that the link measurement setup suspend control field is absent subsequently. If the value of the link suspend present field is 0 (or 1), it may indicate that the link measurement setup suspend control field is present subsequently. When the number of links that is indicated by the link number field is equal to the total number of sensing links established by the two communication parties, when the value of the link suspend present field is 1 (or 0), it may indicate that the link measurement setup suspend control field is absent in the sensing measurement setup suspend frame; and when a value of the suspend all measurement setups on all links field is a first value, it may indicate to suspend execution of sensing measurement instances on all the sensing links established by the two communication parties.

In another example, when the first communication apparatus needs to suspend sensing measurement instances on some links between the first communication apparatus and the second communication apparatus, the link number field in the multi-link measurement setup suspend control field may indicate the number of links to be suspended, and the link ID field in the link measurement setup suspend field may identify a link that needs to be suspended. As shown in FIG. 8a, when the value of the link suspend present field is 0 (or 1), it may indicate presence of the link measurement setup suspend control field in the sensing measurement setup suspend frame, the link ID field in the link measurement setup suspend control field may indicate an identifier of a link on which a sensing measurement instance needs to be suspended, and the suspend all measurement setups field may indicate that all sensing measurement instances on the link corresponding to the link ID need to be suspended.

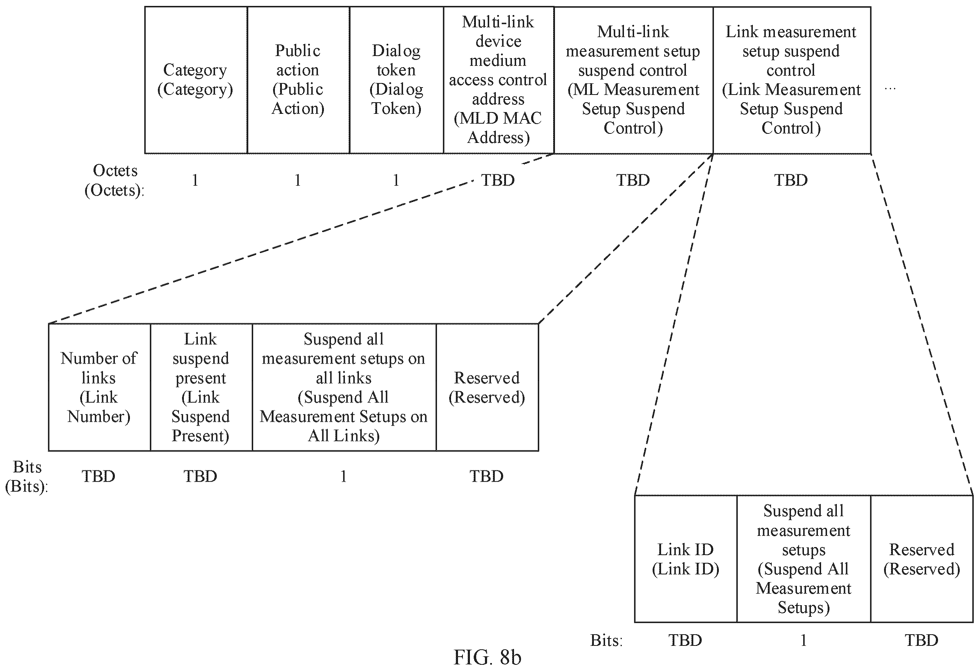

Based on FIG. 8a, the following uses an example to describe a frame used to carry sensing suspend indication information. For descriptions of the multi-link measurement setup suspend control field and the link measurement setup suspend control field shown in FIG. 8b to FIG. 8d, refer to FIG. 8a.

FIG. 8b is a diagram of a structure of a sensing measurement setup suspend frame according to an embodiment of this application. As shown in FIG. 8b, the sensing measurement setup suspend frame includes at least one of the following: category, public action, dialog token, multi-link measurement setup suspend control (multi-link measurement setup suspend control), and one or more link measurement setup suspend control (link measurement setup suspend control). In FIG. 8b, an ellipsis indicates that a link measurement setup suspend control field is omitted.

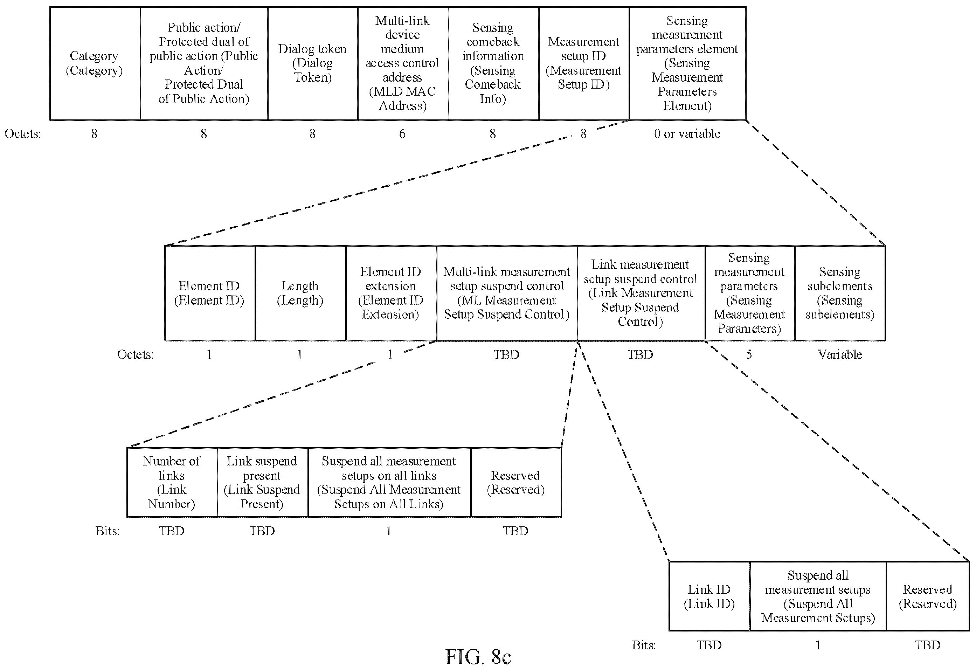

FIG. 8c is a diagram of a structure of a sensing measurement setup request frame according to an embodiment of this application. As shown in FIG. 8c, a sensing measurement parameters element may include at least one of the following: element ID (element ID), length (length), element ID extension (element ID extension), multi-link measurement setup suspend control, link measurement setup suspend control, sensing measurement parameters (sensing measurement parameters), and sensing subelements (sensing subelements). For detailed descriptions of the multi-link measurement setup suspend control field and the link measurement setup suspend control field, refer to FIG. 8a. Details are not exhaustively described again.

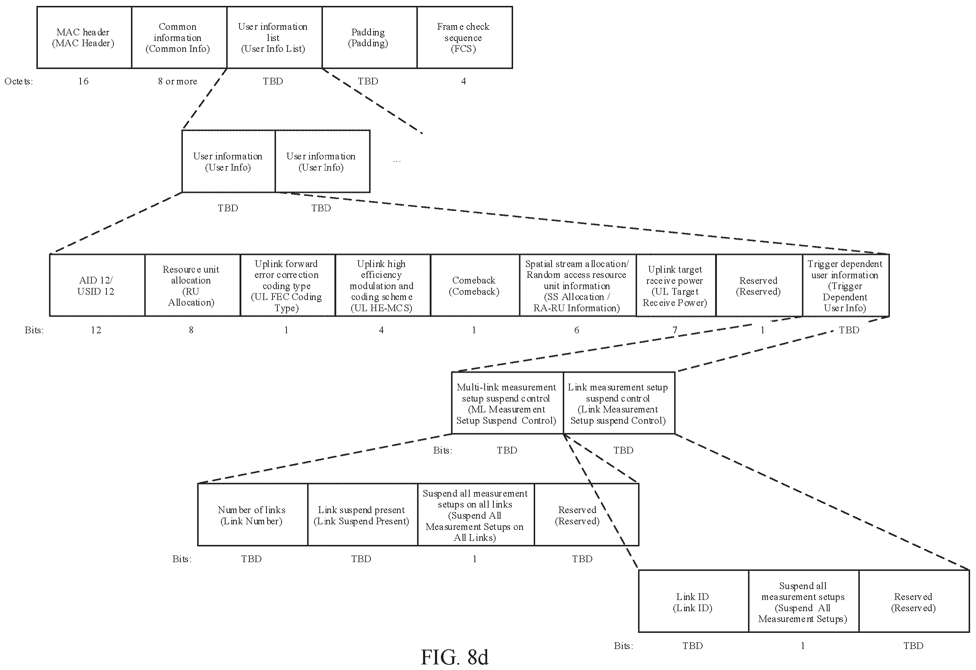

FIG. 8d is a diagram of a structure of a sensing poll trigger frame according to an embodiment of this application. FIG. 8d shows a frame structure of an HE-variant sensing poll trigger frame in a multi-link scenario. A trigger dependent user information (trigger dependent user info) field added to a user information field in the sensing poll trigger frame is used to carry multi-link related information for a multi-link suspend operation. A frame structure of an EHT-variant sensing poll trigger frame is similar to the frame structure of the HE-variant sensing poll trigger frame, and details are not described herein again. For a detailed description of FIG. 8d, refer to the detailed description of the sensing poll trigger frame shown in FIG. 7c and detailed descriptions of the multi-link measurement setup suspend control field and the link measurement setup suspend control field in FIG. 8a. Details are not described herein again. For example, the sensing suspend indication information may alternatively be carried in a trigger dependent user information field in an SR2SI sounding trigger frame, or a trigger dependent user information field in a sensing report trigger frame. For related descriptions of the trigger dependent user information field in the user information field in the SR2SI sounding trigger frame and related descriptions of the sensing report trigger frame, refer to FIG. 8d. Details are not described herein again.

602: The second communication apparatus suspends execution of the sensing measurement instance based on the sensing suspend indication information.

A manner in which the second communication apparatus suspends execution of the sensing measurement instance may include: for example, when the second communication apparatus is a sensing initiator, the second communication apparatus does not send a frame related to a sensing measurement, for example, does not send a trigger frame in a polling phase, a sensing NDPA frame in an NDPA sounding phase, a sounding frame in a TF sounding phase, or a trigger frame in a reporting phase. For another example, when the second communication apparatus is a sensing responder, the second communication apparatus may not send a CTS frame, or may not send a sensing measurement report frame.

In this embodiment of this application, the second communication apparatus may resume execution of the sensing measurement instance in two manners, as shown below. Certainly, the second communication apparatus may also terminate a sensing measurement setup based on a sensing passive end time in a sensing parameter.

The first manner of resuming execution of the sensing measurement instance is shown as follows:

In a possible implementation, the method shown in FIG. 6 may further include step 603 and step 604.

603: The first communication apparatus sends sensing resume indication information, and correspondingly, the second communication apparatus receives the sensing resume indication information.

For example, before the first communication apparatus sends the sensing resume indication information, the first communication apparatus may generate the sensing resume indication information (or a frame used to carry the sensing resume indication information). In an example, the sensing resume indication information may be carried in a new action frame, and the new action frame may be referred to as a sensing measurement setup resume frame (sensing measurement setup recover frame). In another example, the sensing resume indication information may be carried in a related frame in a sensing measurement setup phase shown in FIG. 4a, or in a related frame in a sensing measurement instance phase shown in FIG. 4a. For example, the sensing resume indication information may be carried in any one of the following: a sensing poll trigger frame, a sensing null data packet announcement frame, and a sensing responder to sensing initiator sounding trigger frame. In other words, the sensing resume indication information may be carried in a frame in a start phase of the sensing measurement instance shown in Table 1. For the first manner of resuming execution of the sensing measurement instance, for related descriptions of the sensing suspend indication information, refer to related descriptions of FIG. 7a to FIG. 7g and FIG. 8a to FIG. 8d. Details are not described herein again.

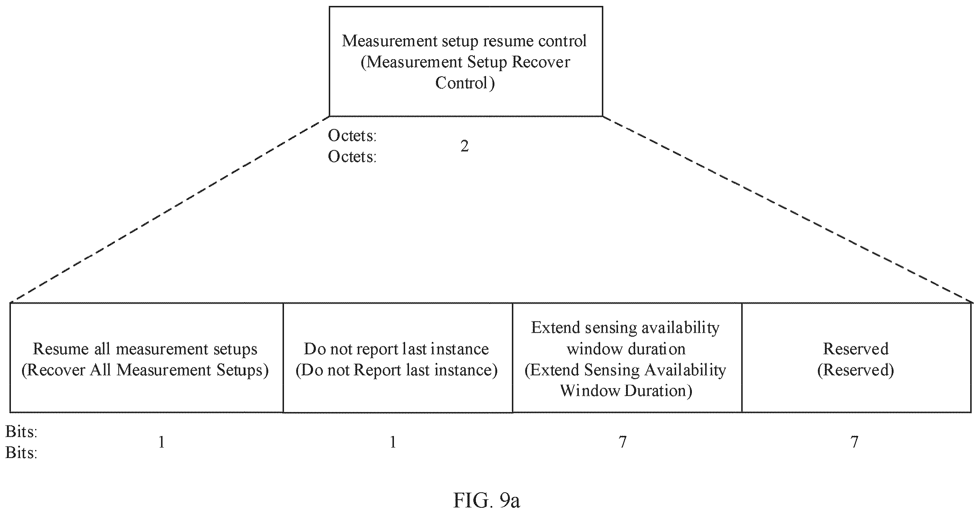

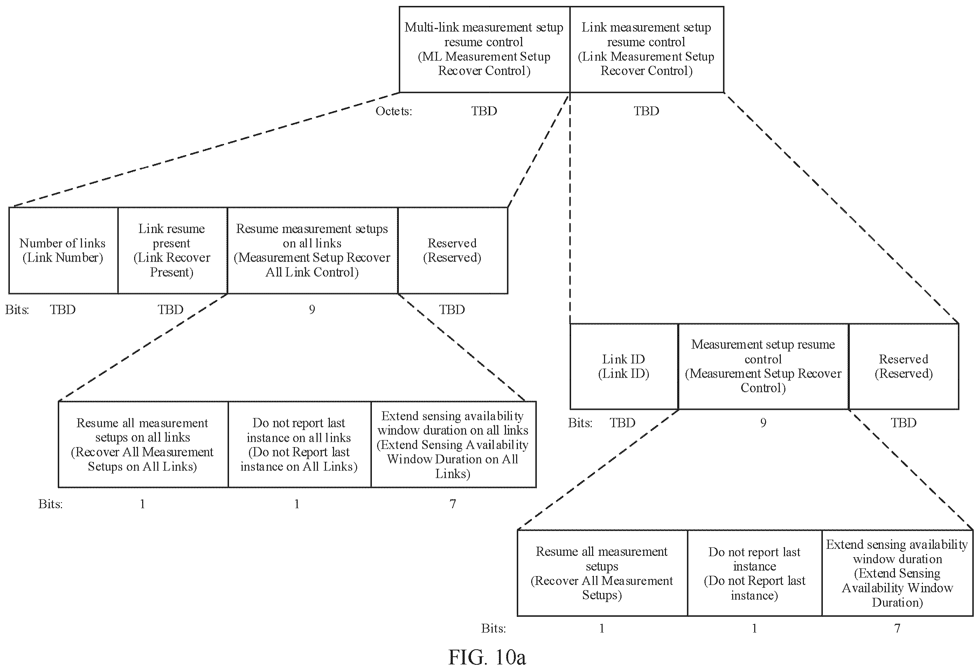

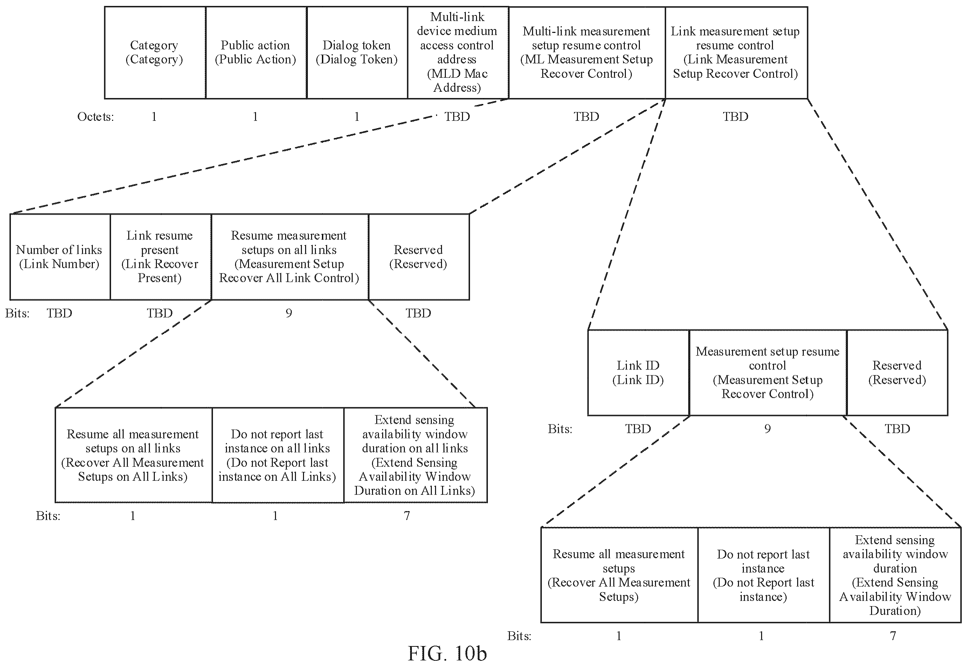

For example, the sensing resume indication information may include information indicating to resume execution of the sensing measurement instance. Alternatively, the sensing resume indication information may further include at least one of the following: extension time information, where the extension time information indicates an extension time for the second communication apparatus to execute the sensing measurement instance; and report indication information, where the report indication information indicates whether to report sensing measurement results of X sensing measurement instances before the suspension, where X is a positive integer. X may be defined in a standard, for example, X = 1, X = 2, or X = 3. Examples are not exhaustively listed. Alternatively, a value of X may be carried in the sensing resume indication information. For ease of description, X = 1 is used as an example in the following description, but this should not be construed as a limitation on embodiments of this application. FIG. 9a to FIG. 9d, FIG. 10a, and FIG. 10b below do not show a field used to carry a value of X in a frame. Alternatively, in FIG. 9a to FIG. 9d, FIG. 10a, and FIG. 10b below, a field used to carry a value of X may be included, and a length of the field may be 8 bits (only an example), or the like. Alternatively, in FIG. 9a to FIG. 9d, FIG. 10a, and FIG. 10b, a field used to carry a value of X may be included, and the field may indicate that the value of X is 1.

In this embodiment of this application, the sensing resume indication information includes the extension time information, so that the second communication apparatus can effectively learn the extension duration for the second communication apparatus to execute the sensing measurement instance, and that the second communication apparatus can compensate for the sensing measurement instance not executed due to the suspension, thereby improving integrity of the sensing measurement.

In this embodiment of this application, the sensing resume indication information includes the report indication information, so that the second communication apparatus can clearly learn whether the second communication apparatus reports the sensing measurement results of the X sensing measurement instances before the suspension. For example, the sensing resume indication information indicates that the second communication apparatus does not need to report the sensing measurement results of the X sensing measurement instances before the suspension, possibly because the sensing measurement results of the X instances before the suspension are inaccurate, and the second communication apparatus does not report the sensing measurement results of the X instances before the suspension to avoid signaling waste.

Similar to the sensing suspend indication information shown above, when at least one of the first communication apparatus and the second communication apparatus is not a multi-link device, the sensing resume indication information may be described as follows:
When at least one of the first communication apparatus and the second communication apparatus is not a multi-link device, the sensing resume indication information may indicate the second communication apparatus to resume execution of all sensing measurement instances on one link between the first communication apparatus and the second communication apparatus. When at least one of the first communication apparatus and the second communication apparatus is not a multi-link device, a reason why the first communication apparatus sends the sensing resume indication information may include: interference already does not exist on one link between the first communication apparatus and the second communication apparatus, or interference strength is less than the strength threshold. That the first communication apparatus sends the sensing resume indication information may include: the first communication apparatus sends the sensing resume indication information on a link established between the first communication apparatus and the second communication apparatus. Similar to the sensing suspend indication information shown above, this embodiment of this application is also applicable to a case in which there is only one sensing link between the first communication apparatus and the second communication apparatus. For example, both the first communication apparatus and the second communication apparatus are multi-link devices, but there is only one link used for sensing between the two multi-link devices.

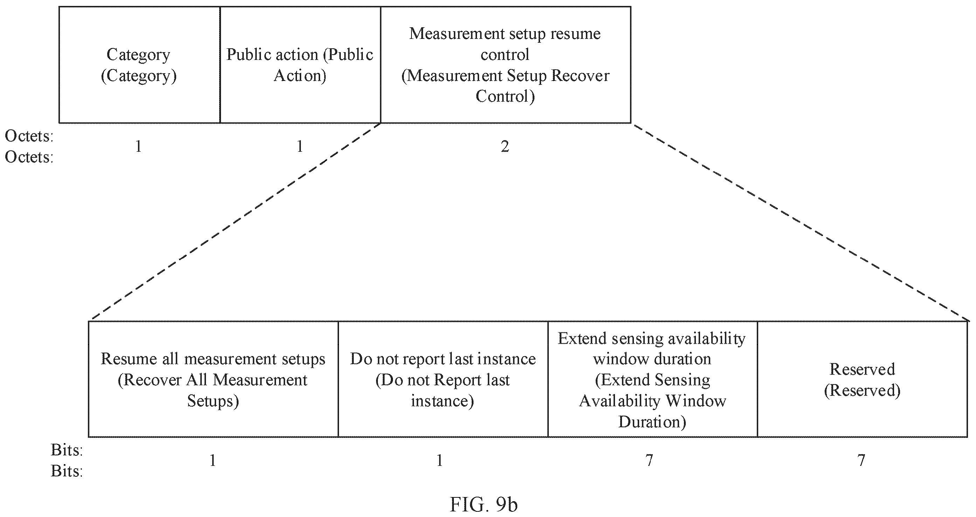

FIG. 9a is a diagram of a structure of a frame used to carry sensing resume indication information according to an embodiment of this application. As shown in FIG. 9a, a measurement setup resume control (measurement setups recover control) field carries the sensing resume indication information, and the measurement setup resume control field may include at least one of the following: resume all measurement setups (recover all measurement setups), do not report last instance (do not report last instance) (that is, X = 1), and extend sensing availability window duration (extend sensing availability window duration). For example, when a sensing reporting procedure is deferred reporting, when a value of the do not report last instance field is 1 (or 0), it may indicate that the second communication apparatus no longer reports a previous interfered sensing measurement result, thereby saving transmission resources; or when a value of the do not report last instance field is 0 (or 1), it indicates "reserved". For example, the extend sensing availability window duration field may indicate an extension time for the second communication apparatus to execute the sensing measurement instance, that is, indicate an extension time of a sensing availability window for the second communication apparatus. The extension time may be determined based on suspension duration, or may be determined based on suspension duration and the sensing availability window. In an example, when duration for which the second communication apparatus suspends execution of the sensing measurement instance is less than or equal to a duration threshold, the extend sensing availability window duration field may indicate an extension time of the sensing measurement instance for the second communication apparatus. For example, a duration unit indicated by the extend sensing availability window duration field is 100 µs, and a duration range is 0 ms to 12.7 ms. Generally, a field used to carry the sensing availability window occupies 7 bits, in units of 100 µs (range: 0 ms to 12.7 ms). Therefore, the extend sensing availability window duration field may match duration of the sensing availability window by occupying 7 bits. Certainly, a length of the extend sensing availability window duration field may be greater than 7 bits or less than 7 bits. The length of the field is not limited in embodiments of this application. In another example, when duration for which the second communication apparatus suspends execution of the sensing measurement instance is greater than a duration threshold, the extend sensing availability window field may be set to "reserved", or the extend sensing availability window field may indicate an extension time for the second communication apparatus to execute the sensing measurement instance. The description of the measurement setup resume control field is also applicable to the following descriptions of FIG. 9b to FIG. 9f.

FIG. 9b is a diagram of a structure of a sensing measurement setup resume frame according to an embodiment of this application. As shown in FIG. 9b, the sensing measurement setup resume frame (sensing measurement setup recover frame) may include at least one of the following fields: category (category), public action (public action), and measurement setup resume control (measurement setups recover control). For a detailed description of FIG. 9b, refer to FIG. 9a. Details are not described herein again.

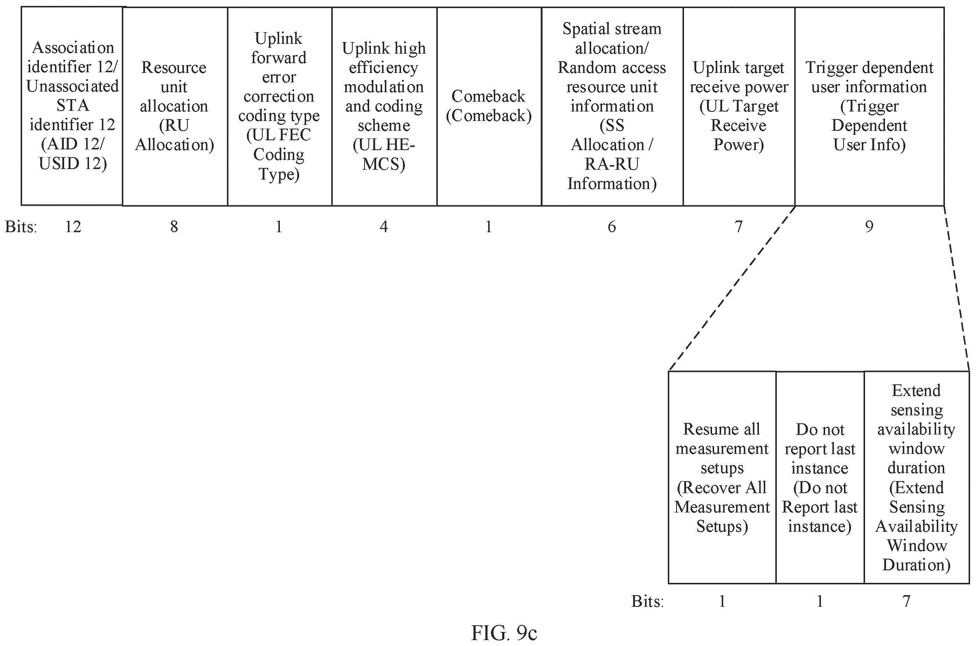

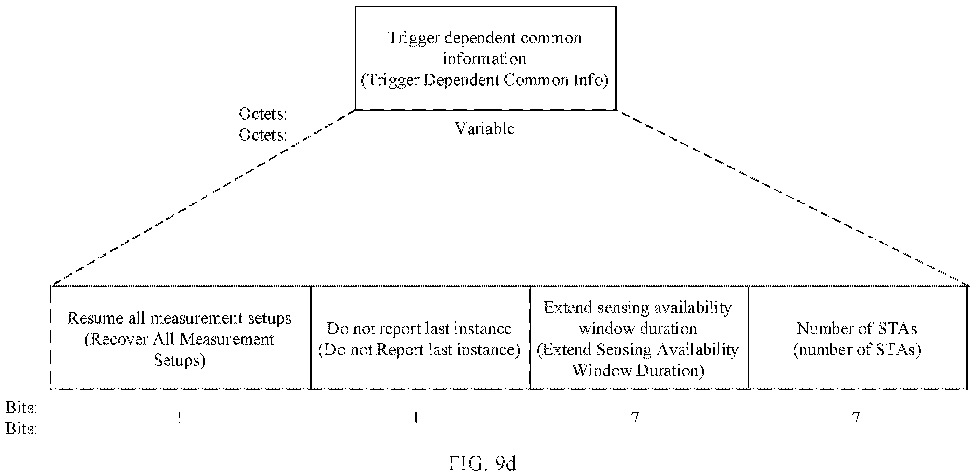

In an example, as shown in FIG. 9c, a trigger dependent user information (trigger dependent user info) field may be added to a sensing poll trigger frame, and sensing resume indication information may be located in the trigger dependent user information field in a user information field in the sensing poll trigger frame. Therefore, the first communication apparatus can indicate the second communication apparatus that matches AID 12/USID 12 to resume execution of the sensing measurement instance. In another example, when the first communication apparatus needs to indicate a plurality of second communication apparatuses to resume execution of sensing measurement instances, a trigger dependent common information field in the sensing poll trigger frame may carry sensing resume indication information. As shown in FIG. 9d, the trigger dependent common information field may include at least one of the following: resume all measurement setups, do not report last instance, extend sensing availability window duration, and number of STAs. The number of STAs field may indicate how many user information fields located after the trigger dependent common information field use same parameters for resumption, or the number of STAs field may indicate how many STAs after the trigger dependent common information field need to resume execution of sensing measurement instances based on parameters in the trigger dependent common information field. In other words, the sensing poll trigger frame may include STA information fields, and the number of STA information fields is greater than or equal to the number of STAs indicated by the number of STAs field.

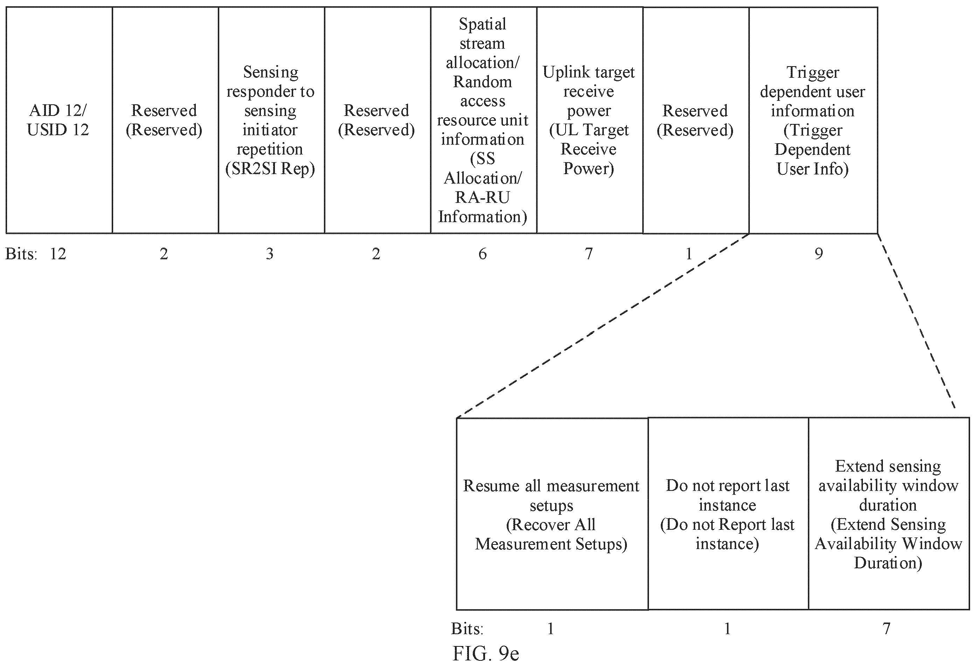

In an example, when the first communication apparatus needs to indicate a second communication apparatus to resume execution of a sensing measurement instance, sensing resume indication information may be carried in a trigger dependent user information field in a sensing responder to sensing initiator sounding trigger frame. FIG. 9e is a diagram of a structure of an SR2SI sounding trigger frame according to an embodiment of this application. As shown in FIG. 9e, a trigger dependent user information field may be added to a sensing responder to sensing initiator sounding response frame, and content indicated by the trigger dependent user information field is applicable to a STA matching AID 12/USID 12. In another example, when the first communication apparatus needs to indicate a plurality of second communication apparatuses to resume execution of sensing measurement instances, a trigger dependent common information field in the sensing responder to sensing initiator sounding trigger frame may carry sensing resume indication information. For a description of the trigger dependent common information field, refer to FIG. 9d. Details are not described herein again.

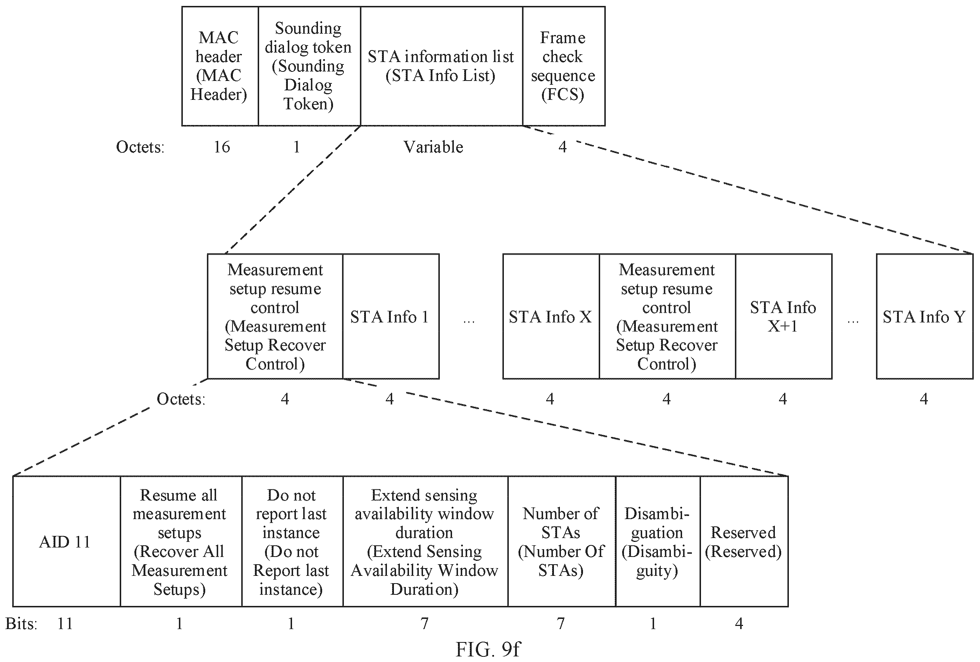

FIG. 9f is a diagram of a structure of a sensing NDPA frame according to an embodiment of this application. As shown in FIG. 9f, sensing resume indication information may be carried in a STA information list field. For example, a value of an AID 11 field may be greater than 2008, for example, may be 2039 or 2040, indicating that the sensing NDPA frame is used to resume execution of a sensing measurement instance. For example, the sensing NDPA frame may include a number of STAs field. The number of STAs field in FIG. 9f may indicate that all subsequent STAs matching a number indicated by the number of STAs field need to perform resumption based on parameters in a corresponding measurement setup resume control field. For related descriptions of the number of STAs field and the STA information field, refer to FIG. 7g. As shown in FIG. 9f, the sensing NDPA frame may include a plurality of measurement setup resume control fields. Each measurement setup resume control field may indicate a subsequent STA to perform resumption based on parameters indicated by a measurement setup resume control field corresponding to the STA. Each measurement setup resume control field may indicate different parameters, for example, a different extension time indicated by an extend sensing availability window duration field, and different content indicated by a do not report last instance field.

When both the first communication apparatus and the second communication apparatus are multi-link devices, the sensing resume indication information may be described as follows:
When both the first communication apparatus and the second communication apparatus are multi-link devices, the sensing resume indication information indicates the second communication apparatus to resume execution of sensing measurement instances on L3 links between the first communication apparatus and the second communication apparatus, where L3 is less than or equal to L2. L3 is less than or equal to L4, and L3 is a positive integer. When the first communication apparatus and the second communication apparatus are multi-link devices, a reason why the first communication apparatus sends the sensing resume indication information may include: no interference exists on at least one of the L2 links between the first communication apparatus and the second communication apparatus, or interference strength is less than the strength threshold. That the first communication apparatus sends the sensing suspend resume formation may include: the first communication apparatus sends the sensing resume indication information on any one of the L2 links (or L4 links); or the first communication apparatus sends the sensing resume indication information on a link not used for sensing among the L1 links.

FIG. 10a is a diagram of a structure of a frame used to carry sensing resume indication information according to an embodiment of this application. As shown in FIG. 10a, the frame may include a multi-link measurement setup resume control field and a link measurement setup resume control field. The multi-link measurement setup resume control field may include at least one of the following: number of links (link number), link resume present (link suspend present), and resume all measurement setups on all links (suspend all measurement setups on all link). The link measurement setup resume control field may include at least one of the following: link ID, and suspend all measurement setups. In an example, when the first communication apparatus needs to resume sensing measurement instances on all links between the first communication apparatus and the second communication apparatus, the multi-link measurement setup resume control field may be used for implementation. For example, the number of links (link number) field may be equal to the total number of sensing links established between the first communication apparatus and the second communication apparatus. For another example, the number of links may be set to "reserved". The link resume present (link suspend present) field may indicate whether the link measurement setup resume control field is present after the multi-link measurement setup resume control field. For example, when the number of links that is indicated by the link number field is equal to the total number of sensing links established by the two communication parties, when a value of the link resume present field is 1 (or 0), it may indicate that the link measurement setup resume control field is absent in the sensing measurement setup resume frame; and when a value of the resume all measurement setups on all links field is a first value, it may indicate to resume execution of sensing measurement instances on all the sensing links established by the two communication parties.

In another example, when the first communication apparatus needs to resume sensing measurement instances on some links between the first communication apparatus and the second communication apparatus, the link number field in the multi-link measurement setup resume control field may indicate the number of links to be resumed, and the link ID field in the link measurement setup resume field may identify a link that needs to be resumed. As shown in FIG. 10a, when the value of the link resume present field is 0 (or 1), it may indicate presence of the link measurement setup resume control field in the sensing measurement setup resume frame, the link ID field in the link measurement setup resume control field may indicate an identifier of a link on which a sensing measurement instance needs to be resumed, and the resume all measurement setups field may indicate that all sensing measurement instances on the link corresponding to the link ID need to be resumed.

Based on FIG. 10a, the following uses an example to describe a frame used to carry sensing suspend indication information. FIG. 10b is a diagram of a structure of a sensing measurement setup resume frame according to an embodiment of this application. For a detailed description of FIG. 10b, refer to FIG. 10a, FIG. 8b, or the like. Details are not described herein again. Specific structures of other frames used to carry sensing suspend indication information are not exhaustively listed in this embodiment of this application.

604: The second communication apparatus resumes execution of the sensing measurement instance based on the sensing resume indication information.

A manner in which the second communication apparatus resumes execution of the sensing measurement instance may include: for example, when the second communication apparatus is a sensing initiator, the second communication apparatus may send a frame related to a sensing measurement, for example, send a trigger frame in a polling phase, a sensing NDPA frame in an NDPA sounding phase, a sounding frame in a TF sounding phase, or a trigger frame in a reporting phase. For another example, when the second communication apparatus is a sensing responder, the second communication apparatus may send a CTS frame, or send a sensing measurement report frame.

The first communication apparatus indicates, by using the sensing resume indication information, the second communication apparatus to resume execution of the sensing measurement instance, thereby improving flexibility of resuming execution of the sensing measurement instance.

The second manner of resuming execution of the sensing measurement instance is shown as follows:
The second communication apparatus may resume execution of the sensing measurement instance based on the suspension duration indicated in the sensing suspend indication information.

In an example, each time the first communication apparatus sends the sensing suspend indication information, the second communication apparatus may suspend execution of the sensing measurement instance for a specific time. The specific time may be defined in a standard, or may be broadcast by an AP (or an AP in an AP MLD), or the like. In this case, for descriptions of the sensing suspend indication information, refer to FIG. 7a to FIG. 7g, or refer to FIG. 8a to FIG. 8d.

In another example, in addition to the information indicating to suspend execution of the sensing measurement instance, the sensing suspend indication information may further include at least one of the following: suspension time information, where the suspension time information indicates a suspension time of the sensing measurement instance; report indication information, where the report indication information indicates whether to report sensing measurement results of Y sensing measurement instances before the suspension, where Y is a positive integer; and extension time information, where the extension time information indicates an extension time for the second communication apparatus to execute the sensing measurement instance. For example, the suspension time indicated by the suspension time information may be equal to 2*^{Suspend Timer Exponent}*, or equal to 2*^{2+Suspend Timer Exponent}*, or equal to 2^{4+*Suspend Timer Exponent*}, or equal to 2^{6+*Suspend Timer Exponent*}. Alternatively, the suspension time indicated by the suspension time information may be equal to *α* × 2*^{β×Suspend Timer Exponent},* where the suspend timer exponent is a value of the suspension time information, and α and *β* may be positive numbers. For a description of Y, refer to the foregoing description of X, where Y may be equal to X or may not be equal to X.

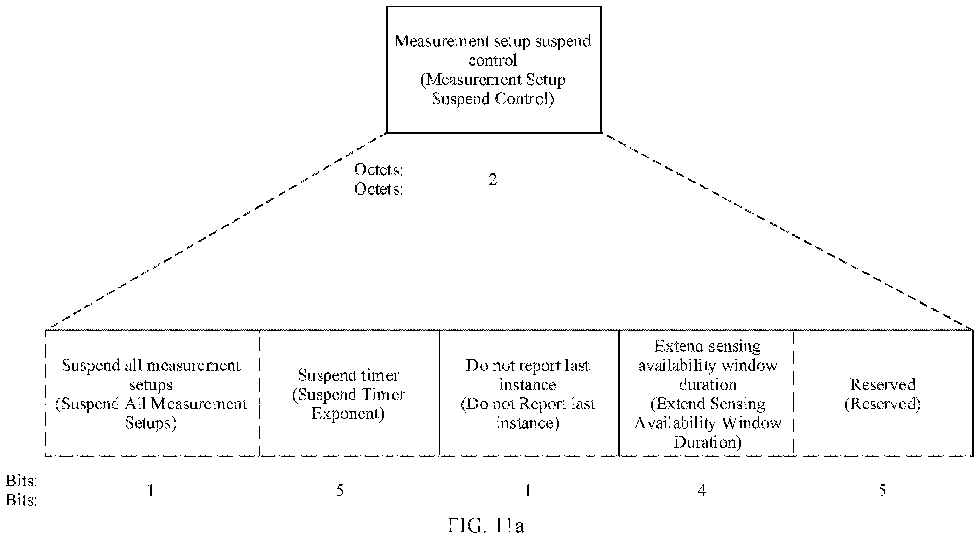

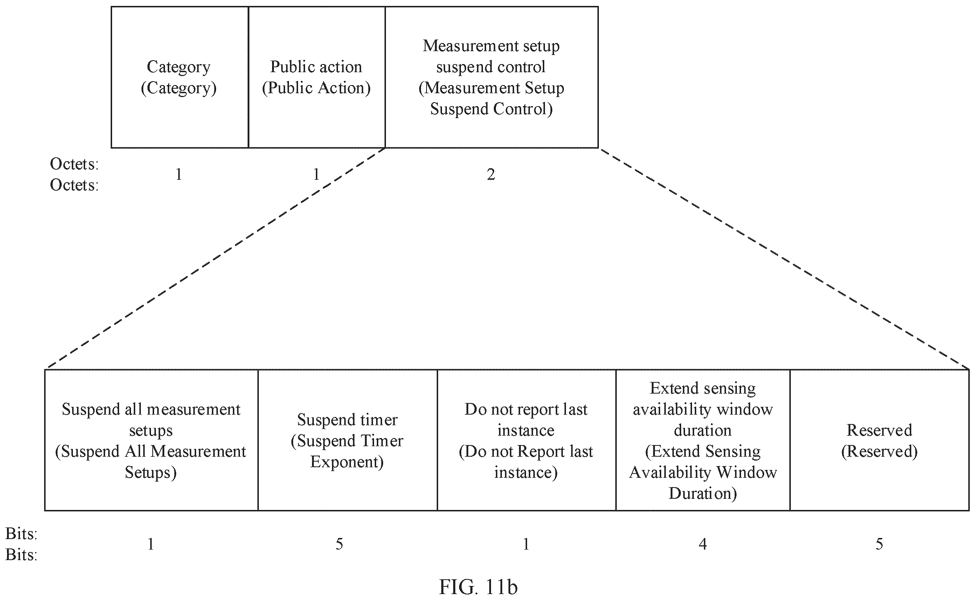

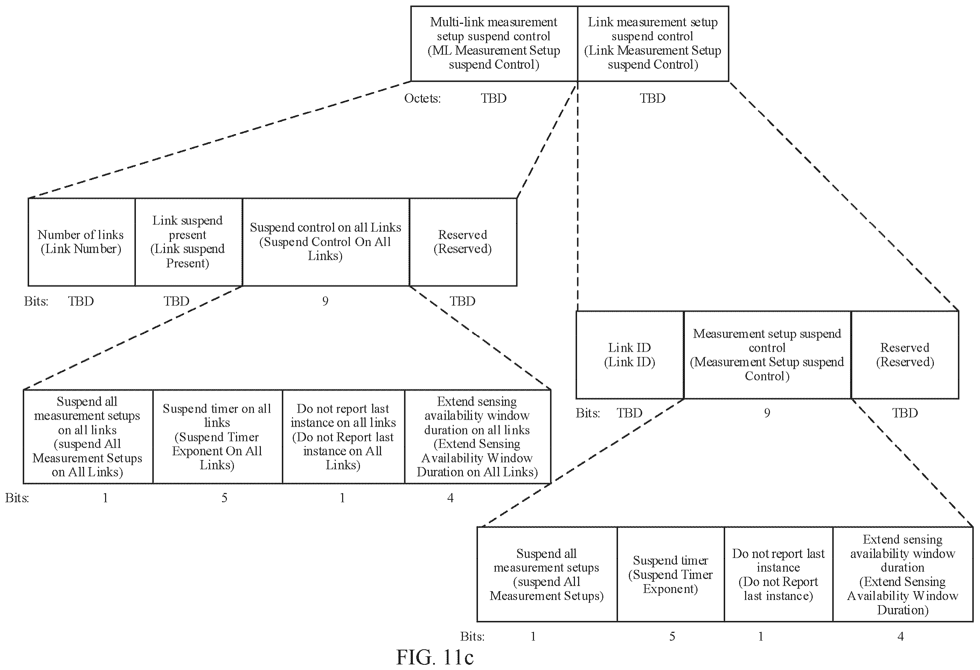

When at least one of the first communication apparatus and the second communication apparatus is not a multi-link device, for a related frame structure of the sensing suspend indication information, refer to FIG. 11a and FIG. 11b. When both the first communication apparatus and the second communication apparatus are multi-link devices, for a related frame structure of the sensing suspend indication information, refer to FIG. 11c. For detailed descriptions of FIG. 11a to FIG. 11c, refer to FIG. 10a, FIG. 10b, and the like. Details are not described herein again. For example, when the link suspend present field indicates that the link measurement setup suspend control field is absent in the frame used to carry the sensing suspend indication information, the suspension time, whether to report the last instance, and the extension time indicated in the multi-link measurement setup suspend control field is applicable to all links between multi-link devices. For example, when the link suspend present field indicates that the link measurement setup suspend control field is present in the frame used to carry the sensing suspend indication information, the value of the suspend measurement setups on all links field is "reserved", and the link measurement setup suspend control field may indicate the suspension time, the extension time, and whether to report information about the last instance on the link that matches the link identifier carried by the link ID field. The first communication apparatus indicates, by using the sensing suspend indication information, the duration for which the second communication apparatus suspends execution of the sensing measurement instance. Therefore, after the specific duration, the second communication apparatus can automatically resume execution of the sensing measurement instance based on the sensing suspend indication information, thereby reducing a frame exchange procedure between the two communication parties.

According to the sensing communication method provided in this embodiment of this application, inaccuracy of the sensing measurement result caused by interference can be effectively avoided. The second communication apparatus executes the sensing measurement instance after no interference exists or the interference strength is less than the strength threshold, so that accuracy of the sensing measurement result can be improved.

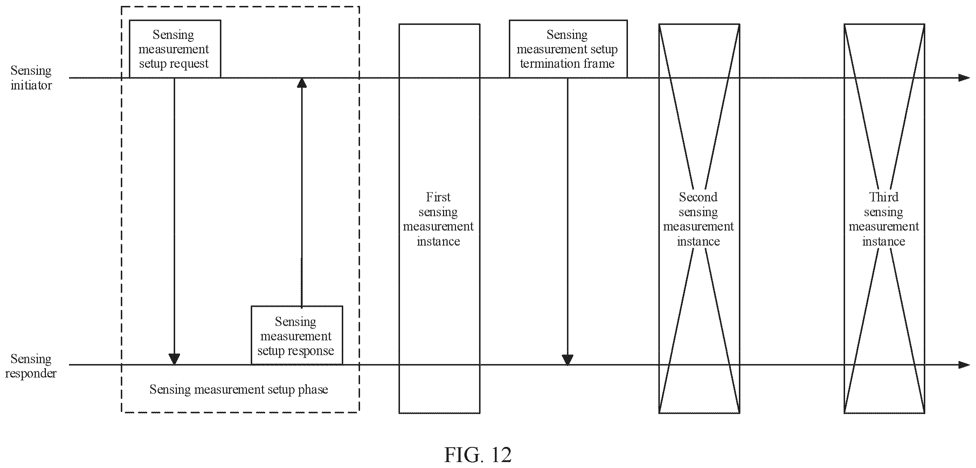

Currently, there is a method for terminating a sensing measurement instance by using a sensing measurement setup termination frame. As shown in FIG. 12, a sensing initiator (for example, an AP) and a sensing responder (for example, a STA) execute a trigger-based sensing measurement instance. After a sensing measurement setup is performed, three sensing measurement instances need to be measured in a subsequent sensing availability window. If the AP and the STA need to end the measurement after the first sensing measurement instance (for example, the AP detects interference), the AP and the STA may send a sensing measurement setup termination frame to end the sensing measurement setup, so that the subsequent second sensing measurement instance and third sensing measurement instance are not executed. However, sensing parameters reestablished between the AP and the STA after the interference ends may be the same as sensing parameters before the interference, causing unnecessary signaling overheads. In addition, in the sensing measurement setup, reestablishing sensing operation parameters the same as those in the sensing measurement terminated due to the interference causes repeated signaling interaction that carries the same parameters, leading to unnecessary signaling overheads.

According to the method provided in this embodiment of this application, signaling overheads caused by the foregoing method are avoided, and it is also effectively ensured that the AP and the STA can continue to execute the sensing measurement instance after the interference ends, to obtain an accurate sensing measurement result.

For the two manners of resuming execution of the sensing measurement instance that are provided in this embodiment of this application, this embodiment of this application further provides the following scenarios.

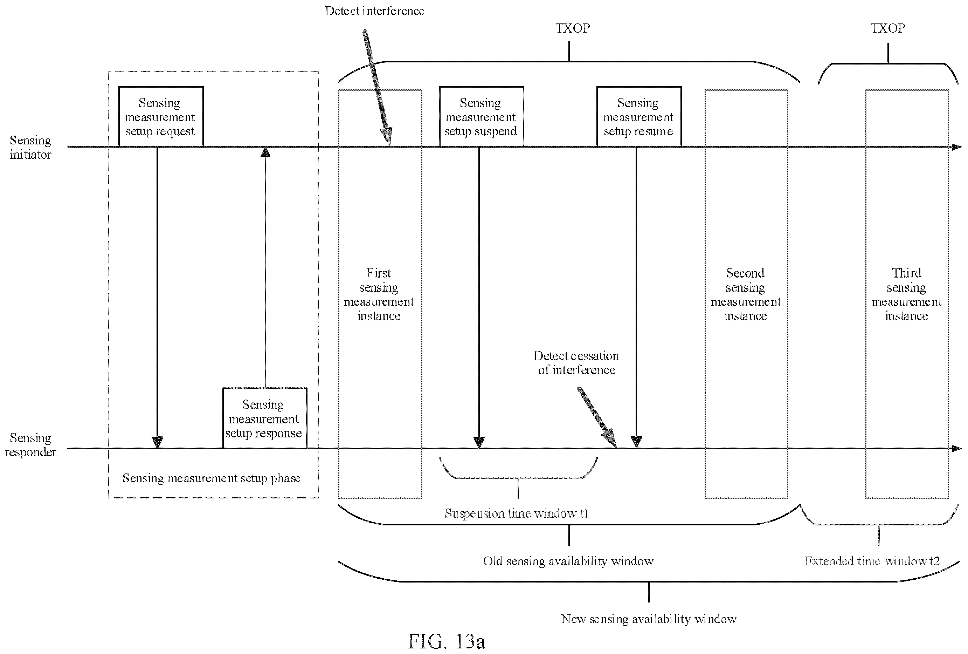

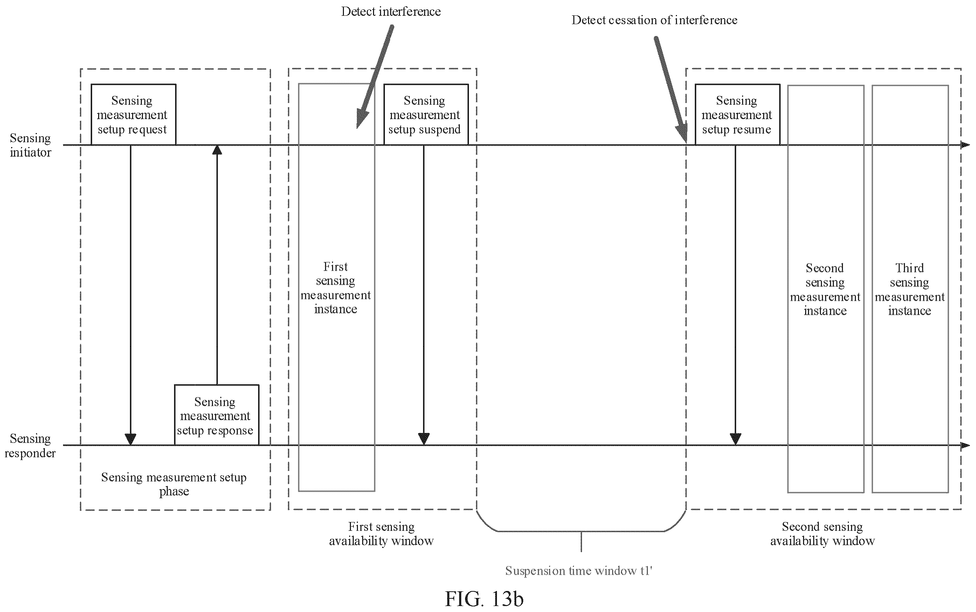

FIG. 13a and FIG. 13b are diagrams of scenarios provided for the foregoing first manner of resuming execution of the sensing measurement instance. As shown in FIG. 13a and FIG. 13b, a sensing initiator (for example, an AP) and a sensing responder (for example, a STA) perform sensing. After a sensing measurement setup phase, the AP and the STA need to execute three sensing measurement instances. If the AP detects interference in a process of executing the first sensing measurement instance, the subsequent two sensing measurement instances need to be suspended until the interference ends. FIG. 13a shows a case in which a suspension time is less than or equal to a specific time (for example, the suspension time does not exceed a current sensing availability window). As shown in FIG. 13a, after detecting the interference, the AP may send sensing suspend indication information to indicate the STA to suspend execution of the sensing measurement instance. If the AP detects, within duration corresponding to the sensing availability window, that no interference exists or that interference strength is less than a strength threshold, the AP may indicate, by sending sensing resume indication information, the STA to resume execution of the sensing measurement instance. For example, the sensing resume indication information may include information indicating to resume execution of the sensing measurement instance, and extension time information (as shown by *t*₂ below). If *t*₁ *+ Old sensing availability window < Max sensing availability window ,* the duration corresponding to the sensing availability window may be extended to compensate for the suspension time, where *t*₁ represents the suspension time of the sensing measurement instance, *old sensing availability window* represents an old sensing availability window configured in the sensing measurement setup phase, and *max sensing availability window* represents a maximum sensing availability window (for example, it may be 12.7 ms) that may be configured in the sensing measurement setup phase. The extended sensing availability window (that is, the new sensing availability window) satisfies the following formula: *New sensing availability window = Old sensing availability window + t*₁, and if *Old sensing availability window + t*₁ *> Max sensing availability window , New sensing availability window = Max sensing availability window.* As shown in FIG. 13a, the extended time window *t*₂ = *t*₁*,* where Duration of the new sensing availability window = Duration of the old sensing availability window *+* t₂, and the duration of the new sensing availability window is less than or equal to the duration of the maximum sensing availability window.

The case in which the STA suspends execution of the sensing measurement instance may continue until the AP detects no interference, or the interference strength is less than the strength threshold; or may continue until a sensing measurement corresponding to a measurement setup ID is no longer performed after the sensing measurement setup is terminated. For example, if the first communication apparatus detects no interference within maximum duration of the sensing availability window, the first communication apparatus may send sensing measurement resume indication information, so that the second communication apparatus can resume execution of the sensing measurement instance in the sensing availability window based on the sensing measurement resume indication information.

FIG. 13b shows a case in which a suspension time is longer than a certain time. As shown in FIG. 13b, after detecting interference, the AP may send sensing suspend indication information to indicate the STA to suspend execution of the sensing measurement instance. If the suspension time exceeds a current sensing availability window, the AP detects whether interference exists when a next sensing availability window arrives. If the AP detects that no interference exists or that interference strength is less than the strength threshold, the AP sends sensing resume indication information to the STA, to continue to complete the second and third sensing measurement instances. If the AP detects that interference exists or that the interference strength is still greater than or equal to the strength threshold, the AP continues to perform detection until no interference is detected or the sensing measurement setup is terminated. For example, as shown in FIG. 13b, the first communication apparatus may start timing when a new sensing availability window starts, until no interference is detected or the interference strength is less than the strength threshold, and then determine an extension time of the new sensing availability window based on a time period from a start time of the new sensing availability window to a time when the interference strength is detected to be less than the strength threshold or no interference is detected (for example, refer to FIG. 13a).

Based on FIG. 13a and FIG. 13b, the new sensing availability window may be determined based on suspension duration and a size of the current sensing availability window, or the new sensing availability window may be determined based on suspension duration, a size of the current sensing availability window, and a size of the maximum sensing availability window.

In this embodiment of this application, the AP may send sensing suspend indication information when detecting interference in the sensing process, suspend sensing within the interference duration, and send sensing resume indication information when no interference exists, thereby retaining original sensing parameters that are set in the sensing measurement setup phase. After suspending and resuming operations are performed by the two sensing parties, an effect of avoiding sensing within the interference duration can be achieved, and the sensing measurement instance is executed when no interference exists, to improve accuracy of a sensing measurement result. Optionally, an objective of reducing signaling overheads can also be achieved.

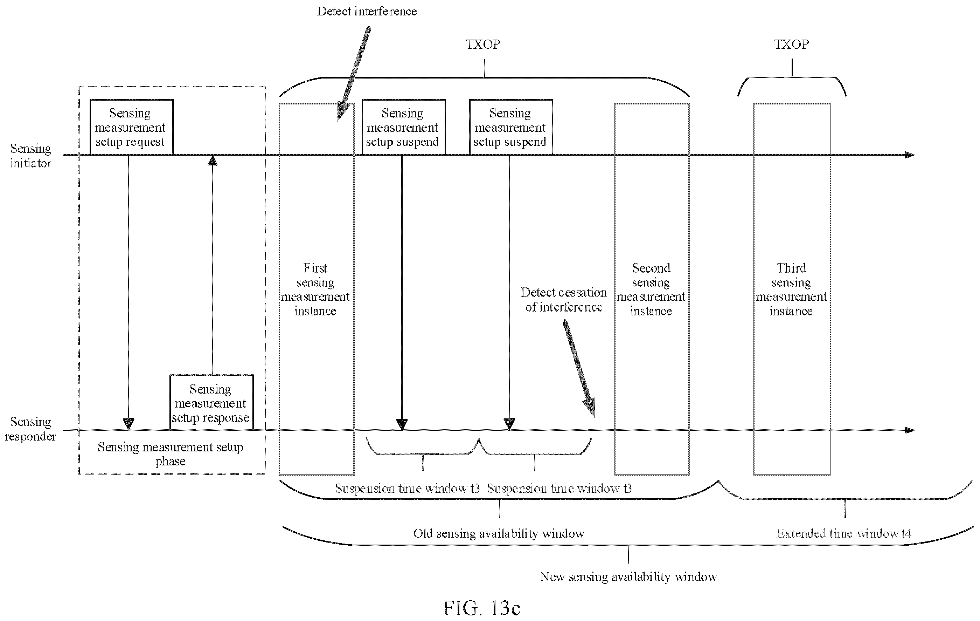

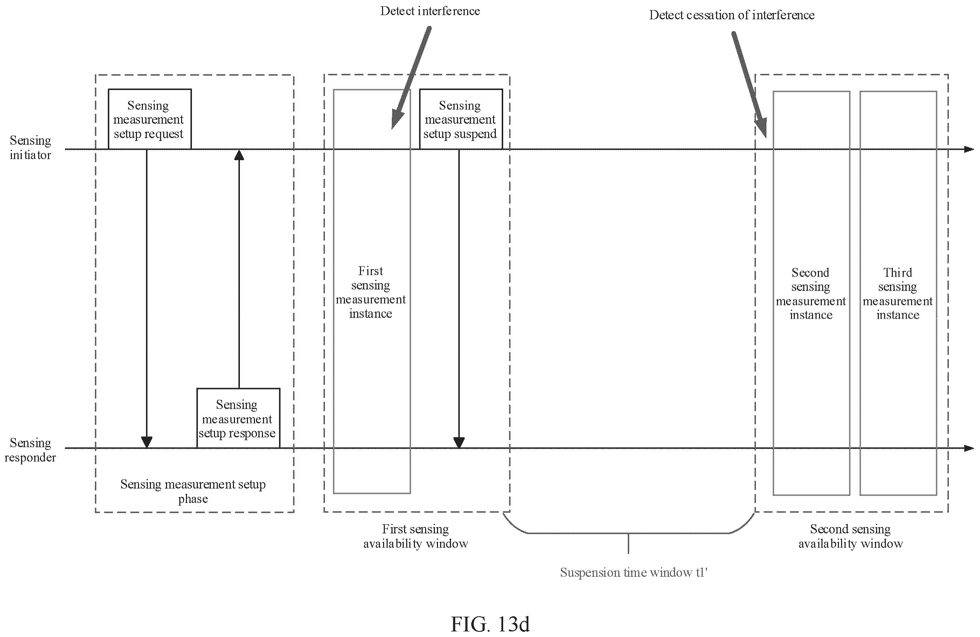

FIG. 13c and FIG. 13d are diagrams of scenarios provided for the foregoing second manner of resuming execution of the sensing measurement instance. As shown in FIG. 13c and FIG. 13d, when detecting interference in the first sensing measurement instance, a sensing initiator (for example, an AP) sends sensing suspend indication information, where content of the sensing suspend indication information may be different from that of the sensing suspend indication information shown in FIG. 13a, and the sensing suspend indication information may include suspension time information (or referred to as timing time information or the like). A suspension time (for example, t3) indicated by the suspension time information in the sensing suspend indication information shown in FIG. 13c is still within a sensing availability window. After t3 ends, the AP needs to detect whether interference exists. If interference exists, the AP continues to send the sensing suspend indication information (including the suspension time information) until no interference is detected, and then sensing is resumed. In FIG. 13c, the sensing suspend indication information is sent twice and then sensing is resumed. Similar to FIG. 13a, if the time when the AP detects no interference is still within the sensing availability window, the sensing time may be extended by increasing duration of the sensing availability window. Alternatively, if interference is still detected when a maximum sensing availability window is reached, a sensing measurement in the current sensing availability window is ended. An extended time window t4 in FIG. 13c may be determined based on a suspension time window t3. For a specific manner, refer to FIG. 13a. Details are not described herein again.

A suspension time (for example, t1') indicated by suspension time information in sensing suspend indication information shown in FIG. 13d exceeds a sensing availability window. As shown in FIG. 13d, the suspension time indicated by the suspension time information in the sensing suspend indication information may be set to a multiple of a periodic interval of the sensing availability window (after one sensing availability window ends, there may be 100 ms communication duration, followed by a next sensing availability window). For example, if the periodic interval of the sensing availability window is 100 time units (time unit, TU), the suspension time may be set to a multiple of 100 TUs. When the suspension time ends, if the AP detects no interference, the AP continues to complete the second and third sensing measurement instances; or if the AP detects interference, the AP continues to perform detection until no interference is detected or the sensing measurement setup is terminated.

In this embodiment of this application, by sending the sensing suspend indication information, the AP may not only indicate the STA to suspend execution of the sensing measurement instance, but also indicate duration for which the STA suspends execution of the sensing measurement instance, thereby avoiding sensing within the interference duration, and improving accuracy of the sensing measurement result. Optionally, an objective of reducing signaling overheads can also be achieved.

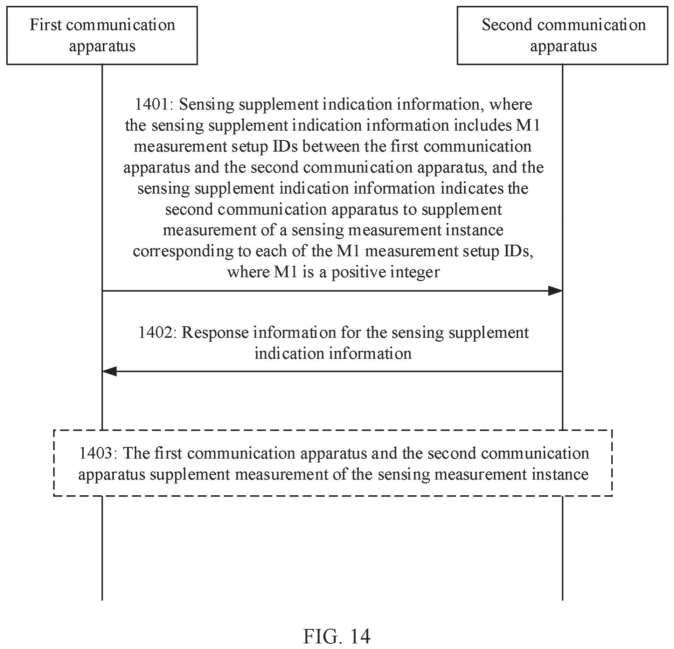

FIG. 14 is a schematic flowchart of another sensing communication method according to an embodiment of this application. For descriptions of a first communication apparatus and a second communication apparatus in the method, refer to the foregoing descriptions. As shown in FIG. 14, the sensing communication method includes the following steps.

1401: The first communication apparatus sends sensing supplement indication information, and correspondingly, the second communication apparatus receives the sensing supplement indication information. The sensing supplement indication information includes M1 measurement setup IDs between the first communication apparatus and the second communication apparatus, and the sensing supplement indication information indicates the second communication apparatus to supplement measurement of a sensing measurement instance corresponding to each of the M1 measurement setup IDs, where M1 is a positive integer.

For example, before sending the sensing supplement indication information, the first communication apparatus may further generate a frame used to carry the sensing supplement indication information. For example, the sensing supplement indication information may further include information (a supplement measurement of sensing measurement instance field shown below) indicating the second communication apparatus to supplement measurement of the sensing measurement instance. For example, the information may occupy one bit. A value 1 of the information may indicate the second communication apparatus to supplement measurement of the sensing measurement instance, and a value 0 of the information may indicate that the second communication apparatus does not need to supplement measurement of the sensing measurement instance.

In an example, the number of sensing measurement instances that need to be supplemented and that correspond to each measurement setup ID may be defined in a standard, or broadcast by an AP (or an AP in an AP MLD), or the like. In another example, the sensing supplement indication information further includes the number M2 of sensing measurement instances corresponding to each of the M1 measurement setup IDs, where M2 is a positive integer. In other words, the sensing supplement indication information may not only carry the M1 measurement setup IDs, but also carry the number of sensing measurement instances that need to be supplemented and that correspond to each measurement setup ID.

For example, M1 = 1, M1 = 2, or M1 = 3. Examples are not exhaustively listed. For example, M2 = 1, M2 = 2, M3 = 3, or M3 = 4. Examples are not exhaustively listed.

In an example, the sensing supplement indication information may be carried in a new action frame, and the new action frame may be referred to as a sensing measurement setup supplement request frame (sensing measurement setup supplement request frame). In another example, the sensing supplement indication information may be carried in a related frame in a sensing measurement setup phase shown in FIG. 4a, or in a related frame in a sensing measurement instance phase shown in FIG. 4a. For example, the sensing supplement indication information may be carried in any one of the following frames: a sensing measurement setup request frame, a sensing poll trigger frame, a sensing null data packet announcement frame, a sensing responder to sensing initiator sounding trigger frame, and a sensing report trigger frame.

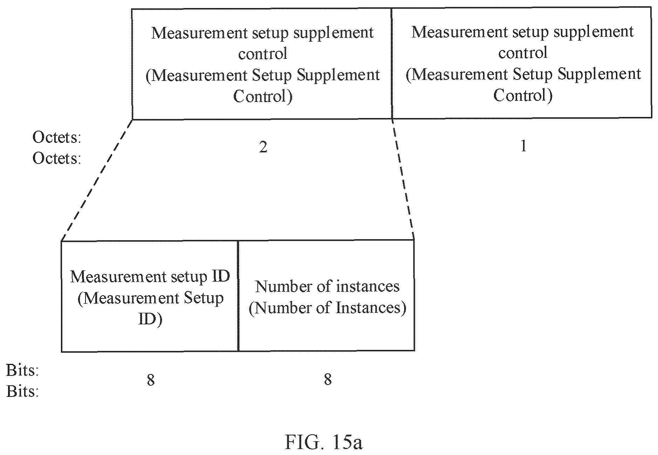

When at least one of the first communication apparatus and the second communication apparatus is not a multi-link device, for a frame structure corresponding to the sensing supplement indication information, refer to FIG. 15a. As shown in FIG. 15a, a measurement setup supplement control (measurement setup supplement control) field may indicate an object that needs supplementary measurement. A number of instances field may indicate the number of sensing measurement instances that need supplementary measurement for a corresponding measurement setup ID, for example, a range of 1 to 255, where 0 indicates "reserved". For example, the frame used to carry the sensing supplement indication information may include one or more measurement setup supplement control fields, and each measurement setup supplement control field may indicate one measurement setup ID. Optionally, the measurement setup supplement control field shown in FIG. 15a may further include a supplement measurement of sensing measurement instance field (not shown in FIG. 15a), and the supplement measurement of sensing measurement instance field may indicate whether the second communication apparatus supplements the measurement sensing measurement instance.

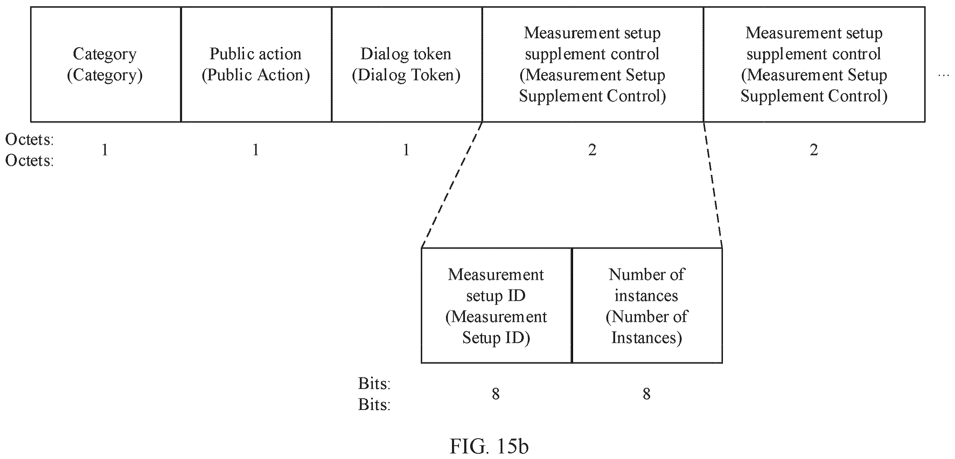

For example, FIG. 15b is a diagram of a structure when the frame used to carry the sensing supplement indication information is a sensing measurement setup supplement request frame. As shown in FIG. 15b, the sensing measurement setup supplement request frame includes one or more measurement setup supplement control fields. For a detailed description of FIG. 15b, refer to FIG. 15a and the foregoing description of the sensing measurement setup suspend frame or the sensing measurement setup resume frame. In FIG. 15b, an ellipsis indicates that a measurement setup supplement control field is omitted.

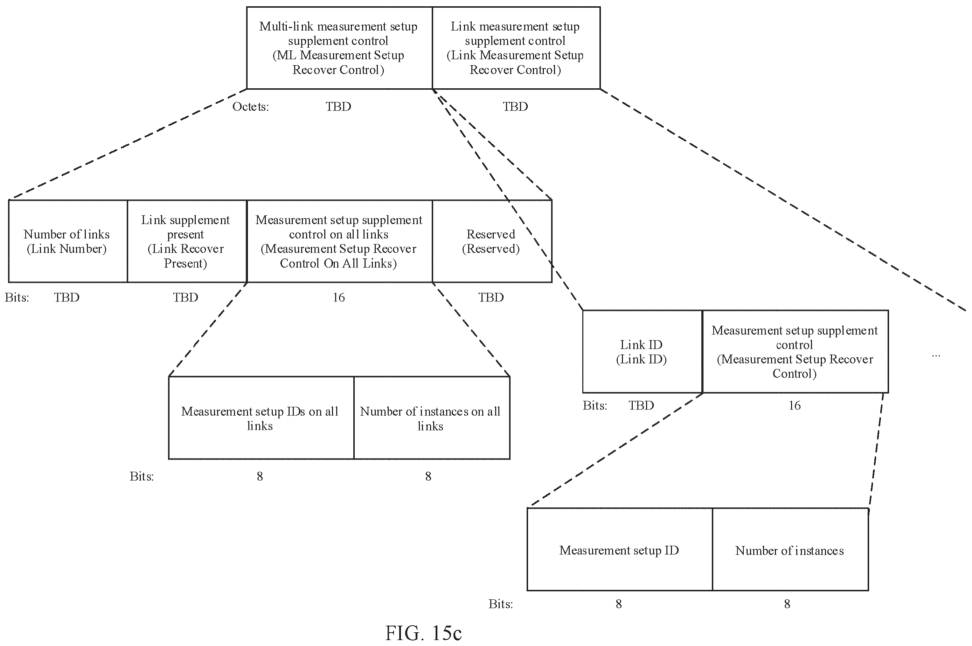

When both the first communication apparatus and the second communication apparatus are multi-link devices, for a frame structure corresponding to the sensing supplement indication information, refer to FIG. 15c. In FIG. 15c, an ellipsis indicates that a measurement setup supplement control field is omitted. Certainly, the frame structure shown in FIG. 15c is merely an example. For a detailed description of FIG. 15c, refer to the foregoing descriptions of the sensing suspend indication information and the sensing resume indication information. Details are not described herein again.

1402: The second communication apparatus sends response information for the sensing supplement indication information, and correspondingly, the first communication apparatus receives the response information.

In an example, the response information may indicate that the second communication apparatus has received the sensing supplement indication information. In another example, the response information may indicate that the second communication apparatus has not received the sensing supplement indication information.

In still another example, the response information not only may be used to indicate that the second communication apparatus has received the sensing supplement indication information, but also may indicate a feedback of the second communication apparatus on the sensing supplement indication information. For example, the response information includes any one of the following: confirmation information, where the confirmation information is used to confirm the sensing supplement indication information; rejection information, where the rejection information is used to reject the sensing supplement indication information; and modification indication information, where the modification indication information indicates that at least one of the number of measurement setup IDs or the number of sensing measurement instances corresponding to a measurement setup ID in the sensing supplement indication information is to be modified. The modification indication information may indicate that the second communication apparatus needs to modify a parameter requested by the sensing supplement indication information, where the parameter includes the number of measurement setup IDs and/or the number of sensing measurement instances.

For example, the response information may include N1 measurement setup IDs of the M1 measurement setup IDs, where N1 is a positive integer less than or equal to M1. For example, when the response information includes only the measurement setup IDs, it may indicate that the second communication apparatus confirms to perform supplementation based on the number of sensing measurement instances corresponding to the N1 measurement setup IDs in the sensing supplement indication information. Alternatively, the response information may further include the number N2 of sensing measurement instances corresponding to each of the N1 measurement setup IDs.

For example, the sensing supplement indication information includes: a measurement setup ID 1, where the measurement setup ID 1 corresponds to four sensing measurement instances; a measurement setup ID 2, where the measurement setup ID 2 corresponds to the number 3 of sensing measurement instances; and a measurement setup ID 3, where the measurement setup ID 3 corresponds to the number 5 of sensing measurement instances. In an example, the response information may include: a measurement setup ID 1, where the measurement setup ID 1 corresponds to the number 4 of sensing measurement instances; and a measurement setup ID 3, where the measurement setup ID 3 corresponds to the number 3 of sensing measurement instances. Optionally, the response information may further include modification indication information. To be specific, the second communication apparatus may explicitly indicate to the first communication apparatus that the second communication apparatus needs to modify a parameter requested by the sensing supplement indication information. For another example, the response information may include: a measurement setup ID 1, where the measurement setup ID 1 corresponds to the number 4 of sensing measurement instances; a measurement setup ID 2, where the measurement setup ID 2 corresponds to the number 3 of sensing measurement instances; and a measurement setup ID 3, where the measurement setup ID 3 corresponds to the number 5 of sensing measurement instances. In other words, the second communication apparatus indicates, by carrying the measurement setup IDs and the number of corresponding sensing measurement instances, the first communication apparatus to confirm the parameter requested in the sensing supplement indication information. Certainly, the response information may also indicate, in a manner of including confirmation information, that the second communication apparatus confirms the parameter requested in the sensing supplement indication information.

The response information may be carried in a new action frame. For example, the new action frame may be referred to as a sensing measurement setup supplement response frame. Alternatively, the response information may be carried in a sensing measurement report frame. When the sensing supplement indication information sent by the first communication apparatus is carried in any one of the following: a sensing poll trigger frame, a sensing null data packet announcement frame, a sensing responder to sensing initiator sounding trigger frame, and a sensing report trigger frame, as shown in FIG. 4b, the frame sent by the second communication apparatus may be a sensing measurement report frame.

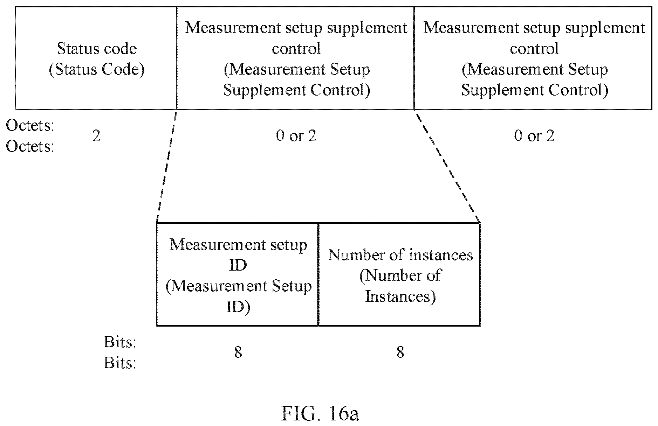

FIG. 16a is a diagram of a structure of a frame used to carry response information according to an embodiment of this application. For example, the response information includes at least one of the following: a status code (status code) field and one or more measurement setup supplement control fields. As shown in FIG. 16a, when the status code field is set to "success (success)", it indicates that the sensing measurement instance indicated by the sensing supplement indication information is agreed to be supplemented; when the status code field is set to "reques_declined (request_declined)", it indicates that the sensing measurement instance indicated by the sensing supplement indication information is refused to be supplemented; or when the status code field is set to "rejected_with_suggested_changes (rejected_with_suggested_changes)", it indicates that the parameter requested by the sensing supplement indication information needs to be modified. For descriptions of the measurement setup supplement control field, refer to FIG. 15a and the like. Details are not described herein again.

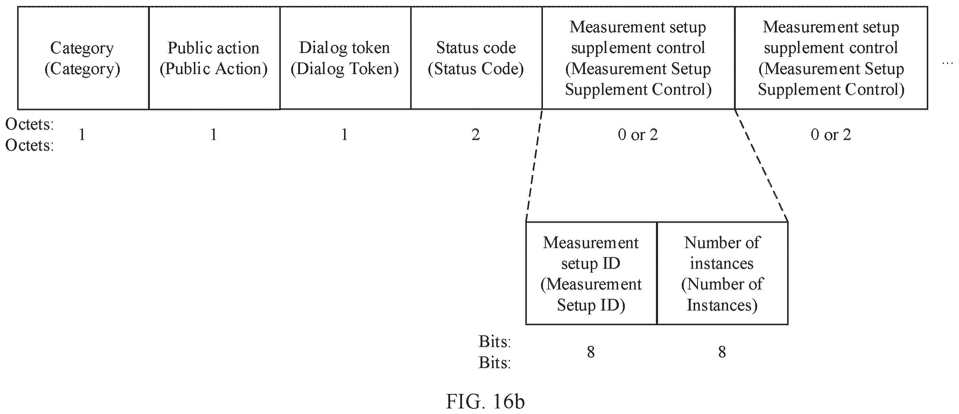

FIG. 16b is a diagram of a structure of a sensing measurement setup supplement response frame according to an embodiment of this application. Optionally, the sensing measurement setup supplement response frame includes one or more measurement setup supplement control fields, and the measurement setup supplement control field may include: measurement setup ID and number of instances. Optionally, the sensing measurement setup supplement response frame may include a status code. When a value of the status code field is a second value, it indicates agreement to the request for supplementing the sensing measurement instance; when a value of the status code field is a third value, it indicates that the request for supplementing the sensing measurement instance is rejected; or when a value of the status code field is a fourth value, it indicates that the parameter requested by the sensing supplement indication information needs to be modified.

In a possible implementation, the method shown in FIG. 14 may further include:
1403: The first communication apparatus and the second communication apparatus supplement measurement of the sensing measurement instance.

For a specific manner in which the first communication apparatus and the second communication apparatus supplement measurement of the sensing measurement instance, refer to Table 1, FIG. 4b, FIG. 4d, or the like. Details are not described herein again.

For the sensing supplement indication information and the response information provided in this embodiment of this application, this embodiment of this application further provides the following scenario.

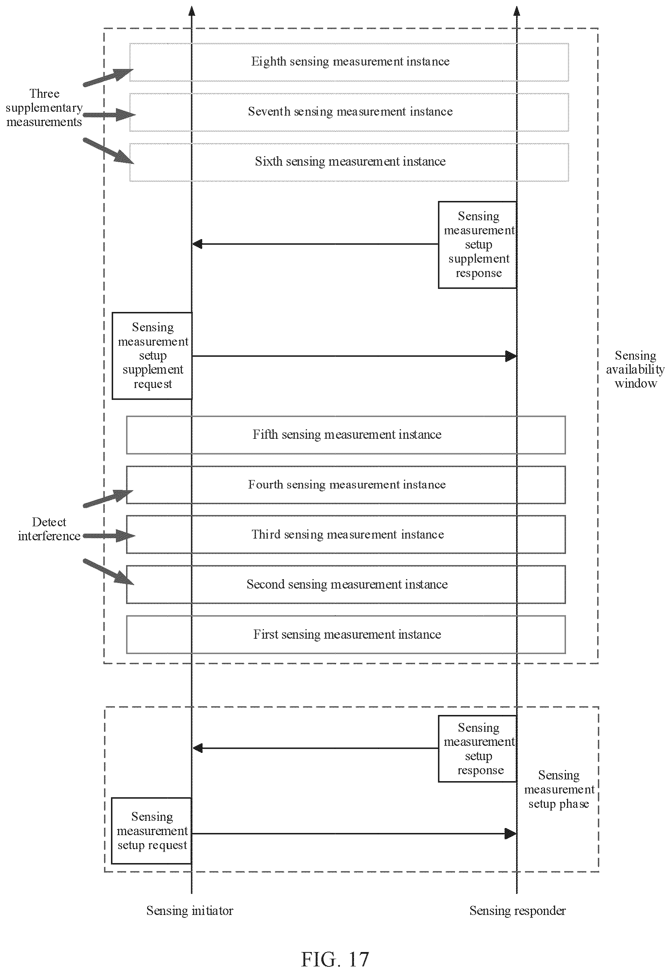

As shown in FIG. 17, a sensing initiator (such as an AP) and a sensing responder (such as a STA) perform sensing. For example, the AP and the STA need to execute five sensing measurement instances. After completing the five sensing measurement instances, the AP detects that detection results of the second, third, and fourth sensing measurement instances are affected by interference. To supplement sensing measurement information, the AP needs to perform three measurements again. In this case, the AP may send a sensing measurement setup supplement request frame (that is, a frame used to carry sensing supplement indication information) to request the STA to execute three sensing measurement instances again. The STA replies with a sensing measurement setup supplement response frame (that is, a frame used to carry response information), and then executes three sensing measurement instances in a current sensing availability window to supplement measurement information. When the current sensing availability window does not meet a requirement on duration of measuring the three sensing measurement instances, a sensing measurement may be performed when a next sensing availability window arrives.

In this embodiment of this application, if the first communication apparatus finds that measurement results of some sensing measurement instances are affected by interference in a sensing measurement process, the first communication apparatus may perform a supplementary sensing measurement by sending sensing supplement indication information. After replying to the sensing supplement indication information, the second communication apparatus may perform a supplementary sensing measurement within a time allowed for the measurement, to compensate for a loss of a sensing measurement result caused by interference to a sensing measurement instance, thereby effectively improving accuracy of the sensing measurement result and improving integrity of the sensing measurement result.

The sensing suspend indication information and the sensing supplement indication information shown above may be separate embodiments, or may be combined with each other. For example, the first communication apparatus detects interference, and sends sensing suspend indication information to the second communication apparatus, and the second communication apparatus suspends execution of the sensing measurement instance. In addition, if the first communication apparatus finds that a sensing measurement result before the sensing measurement instance is suspended is also affected by interference, the first communication apparatus may further send sensing supplement indication information to the second communication apparatus, to indicate the second communication apparatus to perform a supplementary measurement. Certainly, the second communication apparatus may perform a supplementary measurement when no interference exists or interference strength is less than a strength threshold. For another example, if the first communication apparatus detects that the sensing measurement result sent by the second communication apparatus is affected by interference, the first communication apparatus may send sensing supplement indication information to the second communication apparatus. In a process in which the second communication apparatus supplements measurement of the sensing measurement instance, if the first communication apparatus detects interference, the first communication apparatus may further send sensing suspend indication information to the second communication apparatus, to indicate the second communication apparatus to suspend the process of the supplementary measurement. Certainly, the communication apparatus sending the sensing suspend indication information and the communication apparatus sending the sensing supplement indication information may be different communication apparatuses. For example, after the first communication apparatus sends the sensing suspend indication information, the second communication apparatus finds that the sensing measurement result received by the second communication apparatus is affected by interference, and the second communication apparatus may send the sensing supplement indication information. Specific manners of combining the foregoing embodiments are not exhaustively listed.

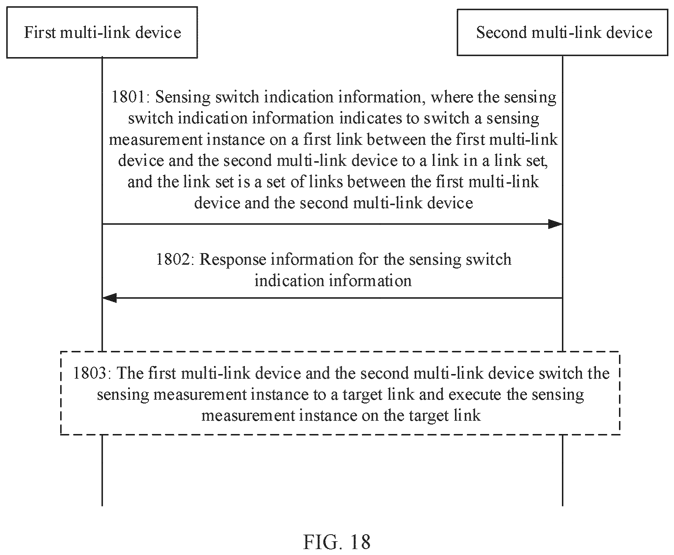

FIG. 18 is a schematic flowchart of still another sensing communication method according to an embodiment of this application. For descriptions of a first multi-link device and a second multi-link device in the method, refer to the foregoing descriptions. As shown in FIG. 18, the sensing communication method includes the following steps.

1801: The first multi-link device sends sensing switch indication information, and the second multi-link device receives the sensing switch indication information. The sensing switch indication information indicates to switch a sensing measurement instance on a first link between the first multi-link device and the second multi-link device to a link in a link set, and the link set is a set of links between the first multi-link device and the second multi-link device.

For example, before sending the sensing switch indication information, the first multi-link device may further generate a frame used to carry the sensing switch indication information. For example, the sensing switch indication information may further include information (such as a switch all measurement setups field shown below) indicating the second communication apparatus to switch the link. For example, the information may occupy one bit. A value 1 of the information may indicate the second communication apparatus to switch the link used to execute the sensing measurement instance, and a value 0 of the information may indicate that the second communication apparatus does not need to switch the link used to execute the sensing measurement instance.

In an example, the sensing switch indication information may include a link identifier of each link in the link set, that is, the first multi-link device may send link identifiers of multiple candidate links to the second multi-link device, so that the second multi-link device selects a target link from the multiple candidate links for switching. The link set may be a set of links on which interference strength is less than a strength threshold (or no interference exists) and that are selected by the first communication apparatus from a plurality of sensing links between the first communication apparatus and the second communication apparatus. In another example, the sensing switch indication information may include a link identifier of a second link (for example, a target link), that is, the first multi-link device sends a link identifier of a link to the second multi-link device, so that the second multi-link device can switch to the link indicated by the sensing switch indication information to execute the sensing measurement instance. The second link may be a link in a link set. The link set may be defined in a standard, or may be broadcast by an AP in an AP MLD, or the like. This is not limited in embodiments of this application.

For example, the sensing switch indication information includes report indication information, and the report indication information indicates whether to report a sensing measurement result of the sensing measurement instance on the first link. For example, the report indication information may indicate whether to report sensing measurement results of Z sensing measurement instances on the first link before the switching. A value of Z may be included in response information, or may be defined in a standard, or may be broadcast by an AP in an AP MLD. A specific value of Z is not limited in embodiments of this application. For example, Z = 1, Z = 2, or Z = 3. Examples are not exhaustively listed. For a description of the report indication information, refer to the foregoing description. Details are not described herein again.

In an example, the sensing switch indication information may be carried in a new action frame, and the new action frame may be referred to as a sensing measurement setup switch request frame (sensing measurement setup switch request frame). In another example, the sensing switch indication information may be carried in a related frame in a sensing measurement setup phase shown in FIG. 4a, or in a related frame in a sensing measurement instance phase shown in FIG. 4a. For example, the sensing switch indication information may be carried in any one of the following frames: a sensing measurement setup request frame, a sensing poll trigger frame, a sensing responder to sensing initiator sounding trigger frame, and a sensing report trigger frame.

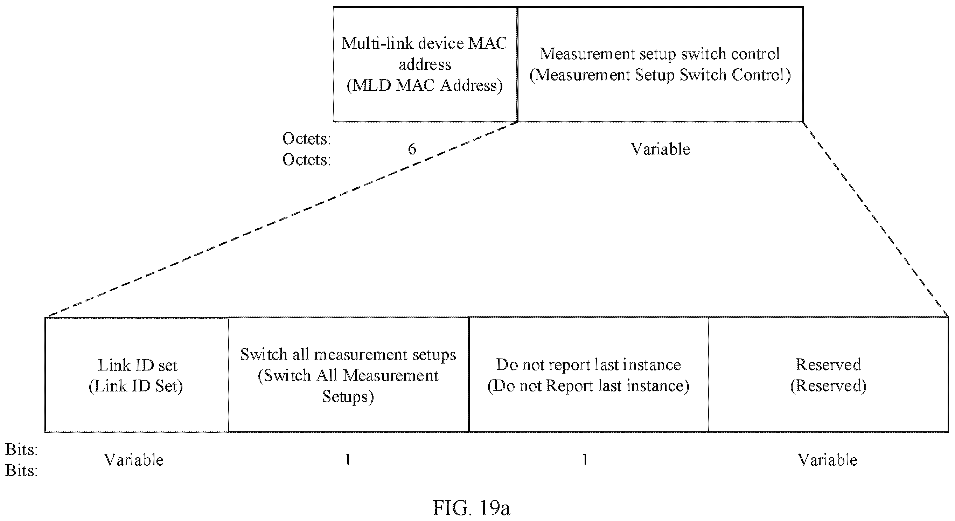

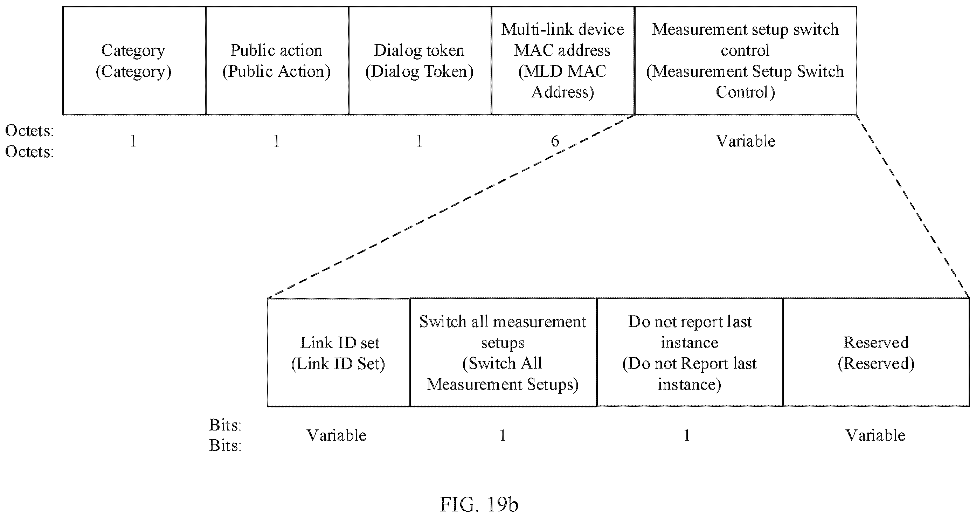

FIG. 19a is a diagram of a structure of a frame used to carry sensing switch indication information according to an embodiment of this application. As shown in FIG. 19a, the frame includes at least one of the following: MLD MAC address, and measurement setup switch control. The MLD MAC address field identifies an MLD MAC address of a multi-link device, and the measurement setup switch control field may include at least one of the following: link ID set, switch all measurement setups, and do not report last instance. The link ID set field is used to carry an identifier of each link in a link set, and the switch all measurement setups field indicates whether to switch a link. For example, a value 1 (or 0) of the switch all measurement setups field may indicate that link switching is required. For example, the first multi-link device and the second multi-link device need to switch all sensing measurement instances on the first link to the second link. A value 0 (or 1) of the switch all measurement setups field may indicate that link switching is not required. FIG. 19b is a diagram of a structure of a sensing measurement switch request frame according to an embodiment of this application. For a detailed description of FIG. 19b, refer to FIG. 19a, or refer to the foregoing description of the sensing measurement suspend request frame or the sensing measurement supplement request frame. Details are not described herein again. Other frames used to carry the sensing switch indication information are not exhaustively listed in this embodiment of this application.

1802: The second multi-link device sends response information for the sensing switch indication information, and correspondingly, the first multi-link device receives the response information.

For example, the response information may include any one of the following: confirmation information, where the confirmation information is used to confirm the sensing switch indication information; rejection information, where the rejection information is used to reject the sensing switch indication information; and link indication information, where the link indication information indicates that the sensing measurement instance is to be switched to a third link, and the third link is a link in the link set. The link indication information may indicate that the target link selected by the second multi-link device from the link set is the third link, or the link indication information may indicate that the second link device needs to modify the target link indicated by the sensing switch indication information, for example, modify the target link to the third link. For a description of the response information, refer to the detailed description of the response information shown in FIG. 14. Details are not described herein again. For example, the response information may include a link identifier of the third link. Optionally, the sensing switch indication information may not include the report indication information. For example, the response information may carry the report indication information.

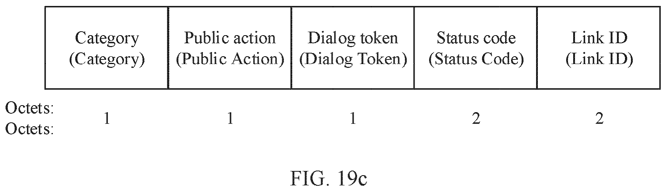

The response information may be carried in a new action frame. For example, the new action frame may be referred to as a sensing measurement setup switch response frame (sensing measurement setup switch response frame). Alternatively, the response information may be carried in a sensing measurement report frame. FIG. 19c is a diagram of a structure of a sensing measurement setup switch response frame according to an embodiment of this application. As shown in FIG. 19c, the frame may include a link ID field, and the link ID field indicates the target link. The sensing measurement setup switch response frame may include a status code field. When the status code field is set to "success (success)", it indicates agreement to the request for switching the sensing link; when the status code field is set to "request_declined (request_declined)", it indicates that the request for switching the sensing link is declined; or when the status code field is set to "rejected_with_suggested_changes (rejected_with_suggested_changes)", it indicates that a parameter of the link requested to be switched by the sensing switch indication information needs to be modified, and the link ID field indicates a link that the second multi-link device needs to switch to. For a frame structure of another frame carrying response information, refer to the foregoing description. Details are not described herein again.

In a possible implementation, the method shown in FIG. 18 may further include:
1803: The first multi-link device and the second multi-link device switch the sensing measurement instance to a target link, and execute the sensing measurement instance on the target link.

For example, in FIG. 2, a high-MAC layer in a multi-link device is shared. Therefore, parameters of sensing measurement instances in the multi-link device are all shared. Therefore, for the first multi-link device and the second multi-link device, after switching to the target link, the two multi-link devices may continue to use parameters of sensing measurement instances on the original link to execute the sensing measurement instances.

For the sensing switch indication information and the response information provided in this embodiment of this application, this embodiment of this application further provides the following scenario.

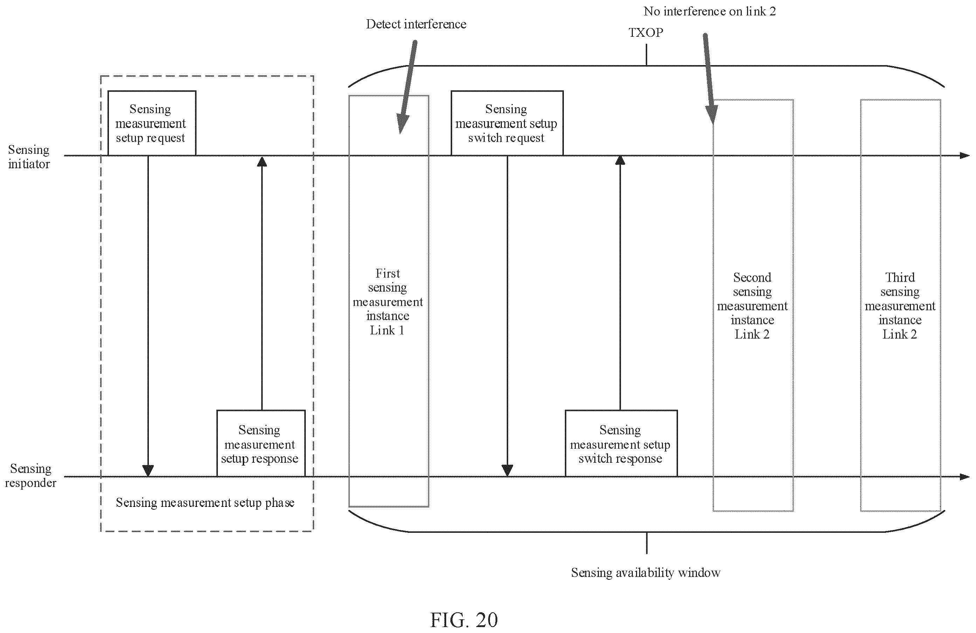

As shown in FIG. 20, a sensing initiator (such as an AP MLD) and a sensing responder (such as a non-AP MLD) perform sensing measurements on multiple links. After a sensing measurement setup phase, if the AP MLD detects that interference exists in the first sensing measurement instance executed on a link 1, the AP MLD may send a frame carrying sensing switch indication information to indicate the non-AP MLD to perform a link switching operation. A target link may be in a set of links that are selected by the AP MLD through detection and on which no interference exists or interference strength is less than the strength threshold, and the set may be carried in the foregoing frame. After receiving the frame carrying the sensing switch indication information, the non-AP MLD may select a link from the set to perform switching. As shown in FIG. 20, the target link is a link 2, and after switching to the link 2, the second and third sensing measurement instances may continue to be completed between the AP MLD and the non-AP MLD, and an interference avoidance effect can be achieved in a multi-link scenario. It may be understood that before the switching, whether there is a sensing measurement instance on the link 2 is not limited.

In this embodiment of this application, the first multi-link device sends the sensing switch indication information, so that the second multi-link device can switch, based on the sensing switch indication information, the sensing measurement instance to a link without interference, or to a link on which interference strength is less than the strength threshold, thereby properly using link resources between the multi-link devices and improving sensing efficiency.

Although fields and subfields are not specifically distinguished in the foregoing embodiments, a person skilled in the art may learn that content included in the fields may also be referred to as subfields. Therefore, the foregoing manner in which the fields and subfields are not specifically distinguished should not be construed as a limitation on embodiments of this application. TBD in the diagrams in embodiments of this application may be understood as to-be-determined, that is, a length of a corresponding field or element may be set based on a requirement. In the frame structures shown in embodiments of this application, a specific sequence of fields (or elements) is not limited, and a specific length of each field (or element) is not limited either. A field sequence (or an element sequence) and a field length (or an element length) in the foregoing diagrams are merely examples, and should not be construed as a limitation on embodiments of this application.

The foregoing embodiments respectively show the sensing suspend indication information, sensing resume indication information, sensing supplement indication information, and sensing switch indication information. In actual application, the first communication apparatus may further carry the sensing suspend indication information and the sensing supplement indication information in a frame at the same time, or carry the sensing resume indication information and the sensing supplement indication information at the same time, or carry the sensing switch indication information and the sensing resume indication information at the same time, or carry the sensing supplement indication information and the sensing switch indication information at the same time, or carry the sensing resume indication information, the sensing supplement indication information, the sensing switch indication information, and the like at the same time. Examples are not exhaustively listed herein. For a frame structure of a frame carrying the foregoing information at the same time, adaptively refer to the frame structures shown above. Examples are not exhaustively listed herein in embodiments of this application.

When the sensing suspend indication information (or sensing resume indication information) and the sensing supplement indication information are separate embodiments, the first communication apparatus in embodiments related to the sensing suspend indication information and the first communication apparatus in those related to the sensing supplement indication information may both be APs, or both be STAs, or the like. Alternatively, the first communication apparatus in embodiments related to the sensing suspend indication information is an AP, and the first communication apparatus in those related to the sensing supplement indication information is a STA. Examples are not exhaustively listed in embodiments of this application.

A communication apparatus provided in an embodiment of this application is described below.

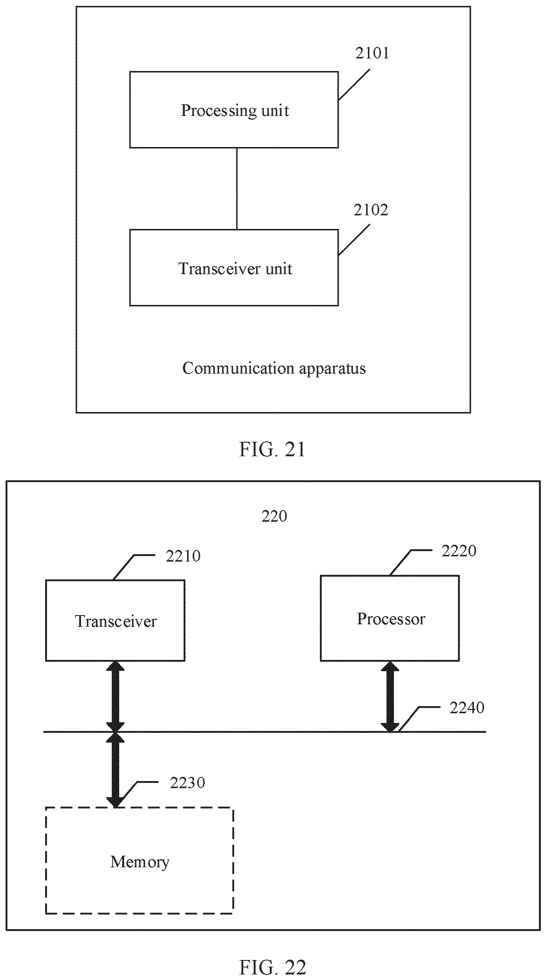

In this application, the communication apparatus is divided into functional modules based on the foregoing method embodiments. For example, the functional modules may be obtained through division in a one-to-one correspondence with the functions, or two or more functions may be integrated into one processing module. The integrated module may be implemented in a form of hardware, or may be implemented in a form of a software functional module. It should be noted that division of the modules in this application is an example. The division is merely logical function division and may be other division in actual implementation. The following describes in detail communication apparatuses in embodiments of this application with reference to FIG. 21 to FIG. 23.

FIG. 21 is a diagram of a structure of a communication apparatus according to an embodiment of this application. As shown in FIG. 21, the communication apparatus includes a processing unit 2101 and a transceiver unit 2102. The transceiver unit 2102 may implement a corresponding communication function, and the processing unit 2101 is configured to perform data processing. For example, the transceiver unit 2102 may also be referred to as a communication interface or a communication unit.

In some embodiments of this application, the communication apparatus may be configured to perform an action performed by the first communication apparatus (or the first multi-link device) in the foregoing method embodiment, the transceiver unit 2102 is configured to perform receiving and sending related operations of the first communication apparatus in the foregoing method embodiment, and the processing unit 2101 is configured to perform a processing related operation of the first communication apparatus in the foregoing method embodiment.

In an example, the processing unit 2101 is configured to generate sensing suspend indication information; and the transceiver unit 2102 is configured to output or send the sensing suspend indication information.

It may be understood that the transceiver unit 2102 may send the sensing suspend indication information to the second communication apparatus, or the transceiver unit 2102 outputs the sensing suspend indication information from the processing unit 2101 to another component in the first communication apparatus. Related descriptions of outputting other information by the transceiver unit are similar. Details are not described below again.

For example, the processing unit 2101 is configured to generate sensing resume indication information; and the transceiver unit 2102 is configured to output or send the sensing resume indication information.

For example, the processing unit 2101 is configured to negotiate parameters of a sensing measurement instance with the second communication apparatus by using the transceiver unit 2102, to complete a sensing measurement setup.

In another example, the processing unit 2101 is configured to generate sensing supplement indication information; and the transceiver unit 2102 is configured to output or send the sensing supplement indication information, and input or receive response information for the sensing supplement indication information. For example, the processing unit 2101 is further configured to parse the response information, to learn a feedback of the second communication apparatus on the sensing supplement indication information.

In still another example, the processing unit 2101 is configured to generate sensing switch indication information; and the transceiver unit 2102 is configured to output or send the sensing switch indication information, and input or receive response information for the sensing supplement switch information. For example, the processing unit 2101 is further configured to parse the response information, to learn a feedback of the second communication apparatus on the sensing switch indication information.

In some other embodiments of this application, the communication apparatus may be configured to perform an action performed by the second communication apparatus (or the second multi-link device) in the foregoing method embodiment, the transceiver unit 2102 is configured to perform receiving and sending related operations of the second communication apparatus in the foregoing method embodiment, and the processing unit 2101 is configured to perform a processing related operation of the second communication apparatus in the foregoing method embodiment.

In an example, the transceiver unit 2102 is configured to input or receive sensing suspend indication information; and the processing unit 2101 is configured to suspend execution of a sensing measurement instance based on the sensing suspend indication information.

For example, the transceiver unit 2102 is further configured to input or receive sensing resume indication information; and the processing unit 2101 is configured to resume execution of a sensing measurement instance based on the sensing resume indication information.

For example, the processing unit 2101 is configured to negotiate parameters of a sensing measurement instance with the first communication apparatus by using the transceiver unit 2102, to complete a sensing measurement setup.

In another example, the transceiver unit 2102 is configured to input or receive sensing supplement indication information, and output or send response information for the sensing supplement indication information. For example, the processing unit 2101 is further configured to parse the sensing supplement indication information, to obtain content indicated by the first communication apparatus. For example, the processing unit 2101 is further configured to generate the response information for the sensing supplement indication information.

In still another example, the transceiver unit 2102 is configured to input or receive sensing switch indication information, and output or send response information for the sensing switch indication information. For example, the processing unit 2101 is further configured to parse the sensing switch indication information, to obtain content indicated by the first communication apparatus. For example, the processing unit 2101 is further configured to generate the response information for the sensing switch indication information.

Optionally, the communication apparatus may further include a storage unit. The storage unit may be configured to store instructions and/or data. The processing unit 2101 may read the instructions and/or the data in the storage unit, so that the communication apparatus implements the foregoing method embodiment.

It may be understood that the detailed descriptions of the transceiver unit and the processing unit shown in this embodiment of this application are merely examples. For specific functions, steps, or the like performed by the transceiver unit and the processing unit, refer to the foregoing method embodiments. Details are not described herein again.

In the foregoing embodiments, for descriptions of the sensing suspend indication information, the sensing resume indication information, the sensing supplement indication information, the response information for the sensing supplement indication information, the sensing switch indication information, and the response information for the sensing switch indication information, refer to the descriptions in the foregoing method embodiments. Details are not described herein again.

The foregoing describes the communication apparatus in this embodiment of this application. The following describes possible product forms of the communication apparatus. It should be understood that a product in any form that has a function of the communication apparatus in FIG. 21 falls within the protection scope of embodiments of this application. It should be further understood that the following descriptions are merely examples, and the product form of the communication apparatus in this embodiment of this application is not limited thereto.

In a possible implementation, in the communication apparatus shown in FIG. 21, the processing unit 2101 may be one or more processors, and the transceiver unit 2102 may be a transceiver. Alternatively, the transceiver unit 2102 may be a sending unit and a receiving unit, where the sending unit may be a transmitter, the receiving unit may be a receiver, and the sending unit and the receiving unit are integrated into one component, for example, a transceiver. In this embodiment of this application, the processor and the transceiver may be coupled, or the like. A manner of connection between the processor and the transceiver is not limited in this embodiment of this application. In a process of performing the foregoing method, a process of sending information in the foregoing method may be understood as a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information to the processor. Further, after the transceiver receives the information, other processing may need to be performed on the information, and then processed information is input into the processor.

As shown in FIG. 22, a communication apparatus 220 includes one or more processors 2220 and a transceiver 2210.

In some embodiments of this application, the communication apparatus may be configured to perform the steps, the functions, or the like performed by the first communication apparatus or the first multi-link device in the foregoing method embodiments.

In an example, the processor 2220 is configured to generate sensing suspend indication information; and the transceiver 2210 is configured to send the sensing suspend indication information.

For example, the processor 2220 is configured to generate sensing resume indication information; and the transceiver 2210 is configured to send the sensing resume indication information.

For example, the processor 2220 is configured to negotiate parameters of a sensing measurement instance with the second communication apparatus by using the transceiver 2210, to complete a sensing measurement setup.

In another example, the processor 2220 is configured to generate sensing supplement indication information; and the transceiver 2210 is configured to send the sensing supplement indication information, and receive response information for the sensing supplement indication information. For example, the processor 2220 is further configured to parse the response information, to learn a feedback of the second communication apparatus on the sensing supplement indication information.

In still another example, the processor 2220 is configured to generate sensing switch indication information; and the transceiver 2210 is configured to send the sensing switch indication information, and receive response information for the sensing switch indication information. For example, the processor 2220 is further configured to parse the response information, to learn a feedback of the second communication apparatus on the sensing switch indication information.

In some other embodiments of this application, the communication apparatus may be configured to perform the steps, the functions, or the like performed by the second communication apparatus or the second multi-link device in the foregoing method embodiments.

In an example, the transceiver 2210 is configured to receive sensing suspend indication information; and the processor 2220 is configured to suspend execution of a sensing measurement instance based on the sensing suspend indication information.

For example, the transceiver 2210 is further configured to receive sensing resume indication information; and the processor 2220 is configured to resume execution of a sensing measurement instance based on the sensing resume indication information.

For example, the processor 2220 is configured to negotiate parameters of a sensing measurement instance with the first communication apparatus by using the transceiver 2210, to complete a sensing measurement setup.

In another example, the transceiver 2210 is configured to receive sensing supplement indication information, and send response information for the sensing supplement indication information. For example, the processor 2220 is further configured to parse the sensing supplement indication information, to obtain content indicated by the first communication apparatus. For example, the processor 2220 is further configured to generate the response information for the sensing supplement indication information.

In still another example, the transceiver 2210 is configured to receive sensing switch indication information, and send response information for the sensing switch indication information. For example, the processor 2220 is further configured to parse the sensing switch indication information, to obtain content indicated by the first communication apparatus. For example, the processor 2220 is further configured to generate the response information for the sensing switch indication information.

In the foregoing embodiments, for descriptions of the sensing suspend indication information, the sensing resume indication information, the sensing supplement indication information, the response information for the sensing supplement indication information, the sensing switch indication information, and the response information for the sensing switch indication information, refer to the descriptions in the foregoing method embodiments. Details are not described herein again.

In each implementation of the communication apparatus shown in FIG. 22, the transceiver may include a receiver and a transmitter. The receiver is configured to perform a receiving function (or operation), and the transmitter is configured to perform a transmitting function (or operation). The transceiver is configured to communicate with another device/apparatus through a transmission medium.

Optionally, the communication apparatus 220 may further include one or more memories 2230, configured to store program instructions, data, and/or the like. The memory 2230 is coupled to the processor 2220. The coupling in this embodiment of this application may be an indirect coupling or a communication connection between apparatuses, units, or modules in an electrical form, a mechanical form, or another form, and is used for information exchange between the apparatuses, the units, or the modules. The processor 2220 may cooperate with the memory 2230. The processor 2220 may execute the program instructions stored in the memory 2230. Optionally, at least one of the one or more memories may be included in the processor.

In embodiments of this application, a specific connection medium among the transceiver 2210, the processor 2220, and the memory 2230 is not limited. In this embodiment of this application, the memory 2230, the processor 2220, and the transceiver 2210 are connected through a bus 2240 in FIG. 22. The bus is represented by a bold line in FIG. 22. A manner of connection between other components is merely an example for description and is not limited thereto. The bus may be classified into an address bus, a data bus, a control bus, and the like. For ease of representation, only one bold line is used for representing the bus in FIG. 22, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or a transistor logic device, a discrete hardware component, or the like, and may implement or perform the methods, steps, and logical block diagrams disclosed in embodiments of this application. The general-purpose processor may be a microprocessor or any conventional processor or the like. The steps of the methods disclosed with reference to embodiments of this application may be directly performed and completed by using a hardware processor, or may be performed and completed by using a combination of hardware in the processor and a software module, or the like.

In this embodiment of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a compact read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this is not limited. The memory in this embodiment of this application may alternatively be a circuit or any other apparatus that can implement a storage function, and is configured to store program instructions and/or data.

For example, the processor 2220 is mainly configured to process a communication protocol and communication data, control the entire communication apparatus, execute a software program, and process data of the software program. The memory 2230 is mainly configured to store the software program and the data. The transceiver 2210 may include a control circuit and an antenna. The control circuit is mainly configured to perform conversion between a baseband signal and a radio frequency signal and process the radio frequency signal. The antenna is mainly configured to receive and send a radio frequency signal in a form of an electromagnetic wave. An input/output apparatus, such as a touchscreen, a display, or a keyboard, is mainly configured to receive data input by a user and output data to the user.

After the communication apparatus is powered on, the processor 2220 may read the software program in the memory 2230, interpret and execute instructions of the software program, and process the data of the software program. When data needs to be sent wirelessly, the processor 2220 performs baseband processing on the to-be-sent data, and then outputs a baseband signal to a radio frequency circuit. The radio frequency circuit performs radio frequency processing on the baseband signal, and then sends a radio frequency signal in a form of electromagnetic wave through the antenna. When data is sent to the communication apparatus, the radio frequency circuit receives a radio frequency signal through the antenna, converts the radio frequency signal into a baseband signal, and outputs the baseband signal to the processor 2220. The processor 2220 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It may be understood that the communication apparatus shown in this embodiment of this application may further have more components than those in FIG. 22, and the like. This is not limited in this embodiment of this application. The methods performed by the processor and the transceiver are merely examples. For specific steps performed by the processor and the transceiver, refer to the methods described above.

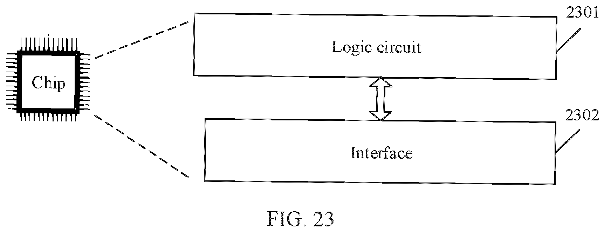

In another possible implementation, in the communication apparatus shown in FIG. 21, the processing unit 2101 may be one or more logic circuits. The transceiver unit 2102 may be an input/output interface that is also referred to as a communication interface, an interface circuit, an interface, or the like. Alternatively, the transceiver unit 2102 may be a sending unit and a receiving unit. The sending unit may be an output interface, and the receiving unit may be an input interface. The sending unit and the receiving unit are integrated into one unit, for example, an input/output interface. As shown in FIG. 23, the communication apparatus shown in FIG. 23 includes a logic circuit 2301 and an interface 2302. In other words, the processing unit 2101 may be implemented by using the logic circuit 2301, and the transceiver unit 2102 may be implemented by using the interface 2302. The logic circuit 2301 may be a chip, a processing circuit, an integrated circuit, a system on chip (system on chip, SoC) chip, or the like. The interface 2302 may be a communication interface, an input/output interface, a pin, or the like. For example, FIG. 23 shows an example in which the communication apparatus is a chip. The chip includes the logic circuit 2301 and the interface 2302.

In this embodiment of this application, the logic circuit and the interface may be coupled to each other. A specific manner of connection between the logic circuit and the interface is not limited in this embodiment of this application.

In some embodiments of this application, the communication apparatus may be configured to perform the steps, the functions, or the like performed by the first communication apparatus in the foregoing method embodiments.

For example, the logic circuit 2301 is configured to generate sensing resume indication information; and the interface 2302 is configured to output the sensing resume indication information.

For example, the logic circuit 2301 is configured to negotiate parameters of a sensing measurement instance with the second communication apparatus by using the interface 2302, to complete a sensing measurement setup.

In another example, the logic circuit 2301 is configured to generate sensing supplement indication information; and the interface 2302 is configured to output the sensing supplement indication information, and input response information for the sensing supplement indication information. For example, the logic circuit 2301 is further configured to parse the response information, to learn a feedback of the second communication apparatus on the sensing supplement indication information.

In still another example, the logic circuit 2301 is configured to generate sensing switch indication information; and the interface 2302 is configured to output the sensing switch indication information, and input response information for the sensing switch indication information. For example, the logic circuit 2301 is further configured to parse the response information, to learn a feedback of the second communication apparatus on the sensing switch indication information.

In some other embodiments of this application, the communication apparatus may be configured to perform the steps, the functions, or the like performed by the second communication apparatus in the foregoing method embodiments.

In an example, the interface 2302 is configured to input sensing suspend indication information; and the logic circuit 2301 is configured to suspend execution of a sensing measurement instance based on the sensing suspend indication information.

For example, the interface 2302 is further configured to input sensing resume indication information; and the logic circuit 2301 is configured to resume execution of a sensing measurement instance based on the sensing resume indication information.

For example, the logic circuit 2301 is configured to negotiate parameters of a sensing measurement instance with the first communication apparatus by using the interface 2302, to complete a sensing measurement setup.

In another example, the interface 2302 is configured to input sensing supplement indication information, and output response information for the sensing supplement indication information. For example, the logic circuit 2301 is further configured to parse the sensing supplement indication information, to obtain content indicated by the first communication apparatus. For example, the logic circuit 2301 is further configured to generate the response information for the sensing supplement indication information.

In still another example, the interface 2302 is configured to input sensing switch indication information, and output response information for the sensing switch indication information. For example, the logic circuit 2301 is further configured to parse the sensing switch indication information, to obtain content indicated by the first communication apparatus. For example, the logic circuit 2301 is further configured to generate the response information for the sensing switch indication information.

It may be understood that detailed descriptions of the logic circuit and the interface shown in this embodiment of this application are merely examples. For specific functions, steps, or the like performed by the logic circuit and the interface, refer to the foregoing method embodiments. Details are not described herein again.

In the foregoing embodiments, for descriptions of the sensing suspend indication information, the sensing resume indication information, the sensing supplement indication information, the response information for the sensing supplement indication information, the sensing switch indication information, and the response information for the sensing switch indication information, refer to the descriptions in the foregoing method embodiments. Details are not described herein again.

It may be understood that the communication apparatus shown in this embodiment of this application may implement the methods provided in embodiments of this application in a form of hardware, or may implement the methods provided in embodiments of this application in a form of software. This is not limited in this embodiment of this application.

An embodiment of this application further provides a wireless communication system. The wireless communication system includes a first communication apparatus (or a first multi-link device) and a second communication apparatus (or a second multi-link device). The first communication apparatus and the second communication apparatus may be configured to perform the method in any one of the foregoing embodiments.

In addition, this application further provides a computer program. The computer program is used to implement operations and/or processing performed by the first communication apparatus (or the first multi-link device) in the methods provided in this application.

In addition, this application further provides a computer program. The computer program is used to implement operations and/or processing performed by the second communication apparatus (or the second multi-link device) in the methods provided in this application.

This application further provides a computer-readable storage medium. The computer-readable storage medium stores computer code. When the computer code is run on a computer, the computer is enabled to perform operations and/or processing performed by the first communication apparatus (or the first multi-link device) in the methods provided in this application.

This application further provides a computer-readable storage medium. The computer-readable storage medium stores computer code. When the computer code is run on a computer, the computer is enabled to perform operations and/or processing performed by the second communication apparatus (or the second multi-link device) in the methods provided in this application.

This application further provides a computer program product. The computer program product includes computer code or a computer program. When the computer code or the computer program is run on a computer, operations and/or processing performed by the first communication apparatus (or the first multi-link device) in the methods provided in this application are/is performed.

This application further provides a computer program product. The computer program product includes computer code or a computer program. When the computer code or the computer program is run on a computer, operations and/or processing performed by the second communication apparatus (or the second multi-link device) in the methods provided in this application are/is performed.

In the several embodiments provided in this application, it should be understood that the disclosed system, apparatus, and method may be implemented in other manners. For example, the foregoing apparatus embodiments are merely examples. For example, division of the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on an actual requirement, to achieve technical effects of the solutions provided in embodiments of this application.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A sensing communication method, wherein the method comprises:
generating, by a first communication apparatus, sensing suspend indication information, wherein the sensing suspend indication information indicates a second communication apparatus to suspend execution of a sensing measurement instance between the first communication apparatus and the second communication apparatus; and
sending, by the first communication apparatus, the sensing suspend indication information.

2. The method according to claim 1, wherein when the first communication apparatus and the second communication apparatus are multi-link devices, the sensing suspend indication information indicates the second communication apparatus to suspend execution of a sensing measurement instance on at least one link between the first communication apparatus and the second communication apparatus.

3. The method according to claim 2, wherein the sensing suspend indication information comprises a link identifier of each of the at least one link.

4. The method according to any one of claims 1 to 3, wherein sending, by the first communication apparatus, the sensing suspend indication information comprises:
sending, by the first communication apparatus, the sensing suspend indication information on one of the at least one link.

5. The method according to any one of claims 1 to 4, wherein the method further comprises:
sending, by the first communication apparatus, sensing resume indication information, wherein the sensing resume indication information indicates the second communication apparatus to resume execution of the sensing measurement instance between the first communication apparatus and the second communication apparatus.

6. The method according to claim 5, wherein when the first communication apparatus and the second communication apparatus are multi-link devices, the sensing resume indication information indicates the second communication apparatus to resume execution of the sensing measurement instance on the at least one link between the first communication apparatus and the second communication apparatus.

7. The method according to claim 6, wherein the sensing resume indication information comprises the link identifier of each of the at least one link.

8. The method according to any one of claims 5 to 7, wherein the sensing resume indication information comprises at least one piece of the following information:
extension time information, wherein the extension time information indicates an extension time for the second communication apparatus to execute the sensing measurement instance; and
report indication information, wherein the report indication information indicates whether to report sensing measurement results of X sensing measurement instances before the suspension, wherein X is a positive integer.

9. The method according to claim 8, wherein the sensing resume indication information further comprises a value of X.

10. The method according to claim 8, wherein when the first communication apparatus and the second communication apparatus are multi-link devices, the extension time information comprises the link identifier of each of the at least one link and an extension time corresponding to each link, or the report indication information comprises the link identifier of each of the at least one link and a value of X corresponding to each link.

11. The method according to any one of claims 1 to 4, wherein the sensing suspend indication information comprises at least one piece of the following information:
suspension time information, wherein the suspension time information indicates a suspension time of the sensing measurement instance;
report indication information, wherein the report indication information indicates whether to report sensing measurement results of Y sensing measurement instances before the suspension, wherein Y is a positive integer; and
extension time information, wherein the extension time information indicates an extension time for the second communication apparatus to execute the sensing measurement instance.

12. The method according to claim 11, wherein when the first communication apparatus and the second communication apparatus are multi-link devices, the suspension time information comprises the link identifier of each of the at least one link and a suspension time corresponding to each link, or the report indication information comprises the link identifier of each of the at least one link and a value of Y corresponding to each link.

13. The method according to any one of claims 1 to 12, wherein before generating the sensing suspend indication information, the method further comprises:
negotiating, by the first communication apparatus, parameters of the sensing measurement instance with the second communication apparatus, to complete a sensing measurement setup.

14. The method according to any one of claims 1 to 13, wherein the sensing suspend indication information is carried in any one of the following: a sensing measurement setup request frame, a sensing poll trigger frame, a sensing null data packet announcement frame, a sensing responder to sensing initiator sounding trigger frame, and a sensing report trigger frame.

15. A sensing communication method, wherein the method comprises:
receiving, by a second communication apparatus, sensing suspend indication information, wherein the sensing suspend indication information indicates the second communication apparatus to suspend execution of a sensing measurement instance between a first communication apparatus and the second communication apparatus; and
suspending, by the second communication apparatus, execution of the sensing measurement instance based on the sensing suspend indication information.

16. The method according to claim 15, wherein the method further comprises:
receiving, by the second communication apparatus, sensing resume indication information, wherein the sensing resume indication information indicates the second communication apparatus to resume execution of the sensing measurement instance between the first communication apparatus and the second communication apparatus; and
resuming, by the second communication apparatus, execution of the sensing measurement instance based on the sensing resume indication information.

17. The method according to claim 15 or 16, wherein the method further comprises:
negotiating, by the second communication apparatus, parameters of the sensing measurement instance with the first communication apparatus, to complete a sensing measurement setup.

18. A sensing communication method, wherein the method comprises:
sending, by a first communication apparatus, sensing supplement indication information, wherein the sensing supplement indication information comprises M1 measurement setup identifiers IDs between the first communication apparatus and a second communication apparatus, and the sensing supplement indication information indicates the second communication apparatus to supplement measurement of a sensing measurement instance corresponding to each of the M1 measurement setup IDs, wherein M1 is a positive integer; and
receiving response information for the sensing supplement indication information.

19. A sensing communication method, wherein the method comprises:
receiving, by a second communication apparatus, sensing supplement indication information, wherein the sensing supplement indication information comprises M1 measurement setup identifiers IDs between a first communication apparatus and the second communication apparatus, and the sensing supplement indication information indicates the second communication apparatus to supplement measurement of a sensing measurement instance corresponding to each of the M1 measurement setup IDs, wherein M1 is a positive integer; and
sending response information for the sensing supplement indication information.

20. The method according to claim 18 or 19, wherein the sensing supplement indication information further comprises the number M2 of sensing measurement instances corresponding to each of the M1 measurement setup IDs, wherein M2 is a positive integer.

21. The method according to any one of claims 18 to 20, wherein the response information comprises N1 measurement setup IDs of the M1 measurement setup IDs, wherein N1 is a positive integer less than or equal to M1.

22. The method according to claim 21, wherein the response information further comprises the number N2 of sensing measurement instances corresponding to each of the N1 measurement setup IDs, wherein N2 is a positive integer less than or equal to N1.

23. The method according to any one of claims 18 to 22, wherein the response information comprises any one of the following:
confirmation information, wherein the confirmation information is used to confirm the sensing supplement indication information;
rejection information, wherein the rejection information is used to reject the sensing supplement indication information; and
modification indication information, wherein the modification indication information indicates that at least one of the number of measurement setup IDs or the number of sensing measurement instances corresponding to a measurement setup ID in the sensing supplement indication information is to be modified.

24. The method according to any one of claims 18 to 23, wherein the sensing supplement indication information is carried in any one of the following: a sensing measurement setup request frame, a sensing poll trigger frame, a sensing null data packet announcement frame, a sensing responder to sensing initiator sounding trigger frame, and a sensing report trigger frame.

25. A sensing communication method, wherein the method comprises:
sending, by a first multi-link device, sensing switch indication information, wherein the sensing switch indication information indicates to switch a sensing measurement instance on a first link between the first multi-link device and a second multi-link device to a link in a link set, and the link set is a set of links between the first multi-link device and the second multi-link device; and
receiving, by the first multi-link device, response information for the sensing switch indication information.

26. A sensing communication method, wherein the method comprises:
receiving, by a second multi-link device, sensing switch indication information, wherein the sensing switch indication information indicates to switch a sensing measurement instance on a first link between a first multi-link device and the second multi-link device to a link in a link set, and the link set is a set of links between the first multi-link device and the second multi-link device; and
sending response information for the sensing switch indication information.

27. The method according to claim 25 or 26, wherein the link set comprises a second link, the sensing switch indication information comprises a link identifier of the second link, and the switch indication information indicates to switch the sensing measurement instance on the first link to the second link.

28. The method according to any one of claims 25 to 27, wherein the response information comprises report indication information, and the report indication information indicates whether to report a sensing measurement result of the sensing measurement instance on the first link.

29. The method according to any one of claims 25 to 28, wherein the response information comprises any one of the following:
confirmation information, wherein the confirmation information is used to confirm the sensing switch indication information;
rejection information, wherein the rejection information is used to reject the sensing switch indication information; and
link indication information, wherein the link indication information indicates that the sensing measurement instance is to be switched to a third link, and the third link is a link in the link set.

30. The method according to claim 29, wherein the response information comprises a link identifier of the third link.

31. The method according to any one of claims 25 to 30, wherein the sensing switch indication information is carried in any one of the following: a sensing measurement setup request frame, a sensing poll trigger frame, a sensing null data packet announcement frame, a sensing responder to sensing initiator sounding trigger frame, and a sensing report trigger frame.

32. A communication apparatus, comprising a unit configured to perform the method according to any one of claims 1 to 31.

33. A communication apparatus, comprising a processor and a memory, wherein
the memory is configured to store instructions; and
the processor is configured to execute the instructions, so that the method according to any one of claims 1 to 31 is performed.

34. A communication apparatus, comprising a logic circuit and an interface, wherein the logic circuit is coupled to the interface; and
the interface is configured to input and/or output code instructions, and the logic circuit is configured to execute the code instructions, so that the method according to any one of claims 1 to 31 is performed.

35. A computer-readable storage medium, wherein the computer-readable storage medium is configured to store a computer program, and when the computer program is executed, the method according to any one of claims 1 to 31 is performed.

36. A computer program, wherein when the computer program is executed, the method according to any one of claims 1 to 31 is performed.

37. A communication system, wherein the communication system comprises a first communication apparatus and a second communication apparatus, wherein the first communication apparatus is configured to perform the method according to any one of claims 1 to 14, and the second communication apparatus is configured to perform the method according to any one of claims 15 to 17; or the first communication apparatus is configured to perform the method according to any one of claims 18 and 20 to 24, and the second communication apparatus is configured to perform the method according to any one of claims 19 to 24; or the first communication apparatus is configured to perform the method according to any one of claims 25 and 27 to 31, and the second communication apparatus is configured to perform the method according to any one of claims 26 to 31.
